(19)

**Europäisches Patentamt**
**European Patent Office**
**Office européen des brevets**

(11) **EP 1 314 242 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(21) Anmeldenummer: **01982209.7**

(22) Anmeldetag: **14.08.2001**

(51) Int Cl.:
*H02P 6/00* (2006.01)    *F24F 11/02* (2006.01)

(86) Internationale Anmeldenummer:
**PCT/EP2001/009376**

(87) Internationale Veröffentlichungsnummer:
**WO 2002/019512 (07.03.2002 Gazette 2002/10)**

(54) **VERFAHREN ZUM STEUERN ODER REGELN DES STROMES IN EINER GLEICHSTROMMASCHINE, UND GLEICHSTROMMASCHINE ZUR DURCHFÜHRUNG EINES SOLCHEN VERFAHRENS**

METHOD FOR CONTROLLING OR REGULATING THE CURRENT IN A DIRECT CURRENT MACHINE AND DC MACHINE FOR SUCH A METHOD

PROCEDE DE COMMANDE ET DE REGLAGE DU COURANT DANS UNE MACHINE A COURANT CONTINU ET MACHINE A COURANT CONTINU POUR CE PROCEDE

(84) Benannte Vertragsstaaten:
**AT BE CH CY DE DK ES FI FR GB GR IE IT LI LU MC NL PT SE TR**

(30) Priorität: **30.08.2000 DE 10042504**

(43) Veröffentlichungstag der Anmeldung:
**28.05.2003 Patentblatt 2003/22**

(73) Patentinhaber: **ebm-papst St. Georgen GmbH & Co. KG**
**78112 St. Georgen (DE)**

(72) Erfinder:
• **HAHN, Alexander**
**88605 Sauldorf (DE)**

• **RAPPENECKER, Hermann**
**78147 Vöhrenbach (DE)**

(74) Vertreter: **Raible, Hans et al**
**Schoderstrasse 10**
**70192 Stuttgart (DE)**

(56) Entgegenhaltungen:
**DE-A- 19 949 804        GB-A- 2 195 037**

• **PATENT ABSTRACTS OF JAPAN vol. 001, no. 108 (E-046), 22. September 1977 (1977-09-22) & JP 52 040188 A (TOSHIBA CORP), 28. März 1977 (1977-03-28)**

**EP 1 314 242 B1**

## Beschreibung

Die Erfindung betrifft ein Verfahren zum Steuern oder Regeln des Stromes in einer Gleichstrommaschine. Sie betrifft ferner eine Gleichstrommaschine zur Durchführung eines solchen Verfahrens.

Gleichstrommaschinen werden heute für viele Zwecke verwendet, insbesondere in ihrer modernen Form als elektronisch kommutierte Motoren (ECM), weil sie kompakte Bauweise mit hoher Laufdauer und exzellenten Stelleigenschaften verbinden. Dies gilt besonders für derartige Maschinen im Leistungsbereich 5 bis 500 W.

Sehr vorteilhaft ist dabei die Steuerung solcher Gleichstrommaschinen durch digitale Steuerelemente nach Art von Mikrocontrollern oder Mikroprozessoren plus zugeordnetes Programm. Das Programm wird bevorzugt so ausgelegt, dass es alle Funktionen der Gleichstrommaschine bedienen kann, z.B. die Kommutierung des Stroms von einem Wicklungsstrang zum anderen, die Drehzahlregelung, die Drehzahlüberwachung (ist die Gleichstrommaschine defekt oder blockiert?), die Kommunikation nach außen über einen Datenbus, oder die Dokumentation charakteristischer Betriebsdaten der Gleichstrommaschine, z.B. Betriebsstunden, höchste erreichte Wicklungstemperatur, Fertigungsdatum, Fabriknummer.

Man strebt dabei an, eine solche Gleichstrommaschine vielseitig anwendbar zu machen, d.h. Programm + Hardware sollen es ermöglichen, eine solche Gleichstrommaschine, bzw. ein mit ihr ausgerüstetes Gerät, vielseitig anwenden zu können. Dies gilt nicht zuletzt für eines der Hauptanwendungsgebiete solcher Maschinen, nämlich den Antrieb von Lüftern.

Die DE 199 49 804 A zeigt eine Anordnung zum Steuern oder Regeln der Drehzahl eines Gleichstrommotors, welche Anordnung aufweist: Eine erste Vorrichtung, welche dazu ausgebildet ist, an ihrem Ausgang ein erstes Steuersignal zum Steuern der Spannung an dem Gleichstrommotor zu liefern; eine zweite Vorrichtung, die dazu ausgebildet ist, an ihrem Ausgang ein zweites Steuersignal zu liefern, das dazu dient, die Höhe des Stromes zu beeinflussen, welcher in dem Gleichstrommotor fließt; eine Anordnung zur Transformation des ersten Steuersignals in ein Signal, welches ein Tastverhältnis für die Beeinflussung der Energiebilanz des Gleichstrommotors steuert; und eine vom zweiten Steuersignal gesteuerte Begrenzungsanordnung für den Strom in dem Gleichstrommotor, welche Begrenzungsanordnung dazu ausgebildet ist, bei Überschreiten des vom zweiten Steuersignal vorgegebenen Wertes dieses Stromes anzusprechen und das erste Steuersignal entsprechend zu modifizieren. Das erste Signal wird dabei von einem Drehzahlregler vorgegeben, und bei einer Überschreitung des vom zweiten Steuersignal vorgegebenden Werts findet ein Strombegrenzungsvorgang statt, bei dem das erste Signal modifiziert wird. Nach dem Ende des Strombegrenzungsvorgangs findet keine Modifizierung des ersten Signals des Drehzahlreglers mehr statt. Hierdurch wird sichergestellt, dass vorgegebene Motorgrenzwerte nicht oder nicht wesentlich überschritten werden.

Es ist deshalb eine Aufgabe der Erfindung, ein neues Verfahren zum Regeln des Stromes durch eine Gleichstrommaschine, sowie eine entsprechende Anordnung, bereitzustellen.

Nach einem Aspekt der Erfindung wird diese Aufgabe gelöst durch ein Verfahren gemäß Patentanspruch 1. Dadurch, dass von oder zu der Gleichstrommaschine ein Gleichstrom "mit Lücken" fließt, weil der Strom in der Maschine ständig begrenzt wird, besteht die Möglichkeit, diese Lücken je nach den Erfordernissen größer oder kleiner zu machen. Dies geschieht durch Vergleich des impulsförmigen stromabhängigen Signals mit einem Strom-Sollwert. Ist z.B. der antreibende Strom zu hoch, so wird mittels des Steuersignals das Tastverhältnis des PWM-Generators so weit erniedrigt, bis der Strom in der Maschine dem Strom-Sollwert entspricht. Dabei werden die erwähnten "Lücken" größer. Ist umgekehrt der antreibende Strom zu niedrig, so wird mittels des Steuersignals das Tastverhältnis des PWM-Generators so weit erhöht, bis der Strom in der Maschine dem augenblicklichen Sollwert entspricht. Dabei werden die "Lücken" kleiner, bleiben aber trotzdem präsent.

Äußerst vorteilhaft ist, dass hierbei der Strom in der Wicklung selbst nicht durch ein Messglied gemessen werden muss, z.B. einen Transduktor, was gerade für preiswerte Anwendungen zu teuer wäre, sondern es wird nur ein Sollwert für diesen Strom vorgegeben, und weil der Strom in der Gleichstrommaschine bei einem solchen Verfahren dem vorgegebenen Sollwert entspricht, kennt man - indirekt - den Strom in der Gleichstrommaschine und kann mit dem Strom-Sollwert so arbeiten, als ob dies der gemessene Strom wäre. Dies eröffnet vielfältige und preiswerte Möglichkeiten, denn ein mit Stromsteuerung ausgeführter Regler hat bessere Eigenschaften (eine höhere Regelgüte). Dies ist u.a. wichtig, wenn sich eine Last schnell ändert, weil ein Regler, der mit diesem Verfahren arbeitet, schneller auf solche Änderungen reagieren kann.

Außerdem wird es möglich, in der Gleichstrommaschine einen gewünschten Konstantstrom (innerhalb des Regelbereiches) einzustellen. Vorteile sind unter anderem:

- Das Netzteil der Maschine wird weniger stark belastet, da hohe Startströme entfallen.
- Die EMV-Eigenschaften werden verbessert, und man benötigt in einem Netzteil weniger große Kondensatoren und sonstigen Aufwand.
- Die "elektrischen Geräusche" eines solchen Motors werden reduziert.
- Die akustischen Geräusche eines solchen Motors werden reduziert.

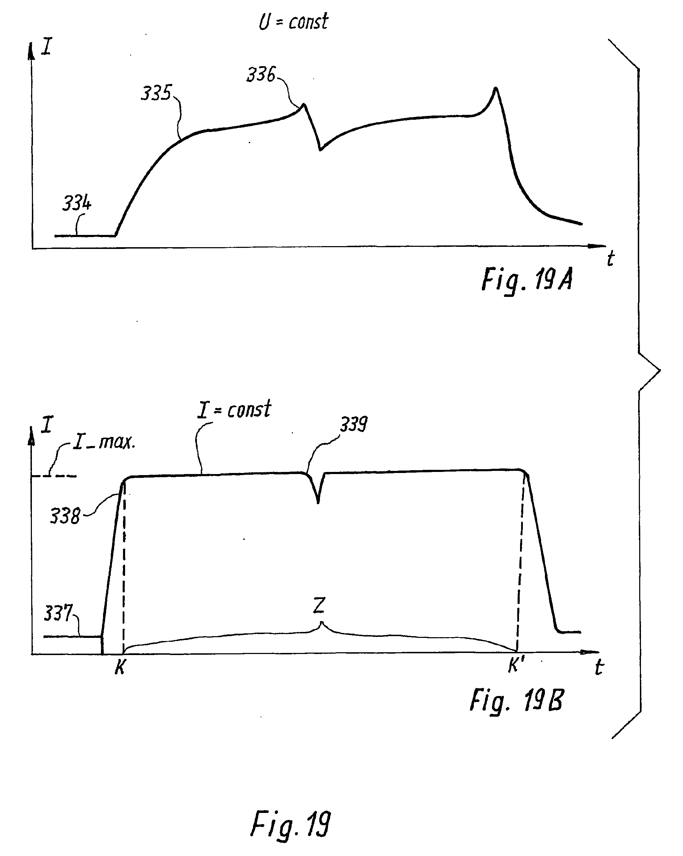

- Durch den Betrieb mit geregeltem Konstantstrom ermöglicht die Gleichstrommaschine einen Betrieb mit im wesentlichen konstanten Drehmoment.
- Durch Vorgabe eines entsprechenden Strom-Sollwerts als Ausgangssignal eines Drehzahlreglers ist eine Drehzahlregelung mit verbesserten Eigenschaften möglich. Man kann sich das so erklären, dass ein solcher Drehzahlregler je nach der Größe seines Ausgangssignals unterschiedliche Ströme in die Gleichstrommaschine "einprägt". Die nachfolgenden Fig. 19A und 19B zeigen dies an einem Beispiel. Fig. 19B zeigt einen Betrieb mit eingeprägtem Strom, Fig. 19A den Betrieb bei einem konventionellen Drehzahlregler.
- Ein Betrieb mit konstantem Strom ermöglicht auch eine höhere Leistung einer Gleichstrommaschine, wie der Fachmann an einem Vergleich von Fig.19A und 19B sofort erkennt, weil bei Betrieb mit konstantem Strom der gesamte für die Erzeugung eines elektromagnetischen Drehmoments nutzbare Drehwinkelbereich der Rotordrehung besser ausgenutzt werden kann.

Die Erfindung betrifft auch eine Anordnung gemäß Anspruch 14. Eine solche Anordnung hat sehr vorteilhafte Eigenschaften und kann preiswert realisiert werden, so dass man sie auch bei Motoren für kleine Leistungen verwenden kann.

¶Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1 ein Übersichtsschaltbild einer bevorzugten Ausführungsform einer erfindungsgemäßen Anordnung mit einer Gleichstrommaschine,

Fig. 2 die Darstellung einer Vollbrückenschaltung 78, wie sie bevorzugt bei der Anordnung nach Fig. 1 Verwendung finden kann,

Fig. 3 eine Tabelle, welche die Ausgangssignale der Rotorstellungssensoren 111, 112, 113 und in Abhängigkeit davon die Steuerung der Vollbrückenschaltung 78 der Fig. 2 zeigt,

Fig. 4 ein Ersatzschaltbild, welches einen Ausschnitt aus der Vollbrückenschaltung 78 der Fig. 2 zeigt,

Fig. 5 schematische Diagramme der in Fig. 4 auftretenden Spannungen, Ströme und Leistungen bei der sogenannten wechselseitigen Taktung,

Fig. 6 eine Strombegrenzungsanordnung zum Begrenzen des Antriebsstromes $i\_2$ in der Anordnung der Fig. 1 auf einen von außen vorgegebenen, variablen Wert,

Fig. 7 Schaubilder zur Erläuterung der Wirkungsweise von Fig. 6,

Fig. 8 eine Strombegrenzungsanordnung zur Begrenzung des Bremsstromes $i\_2'$ bei der Anordnung der Fig. 1 auf einen von außen vorgegebenen, variablen Wert,

Fig. 9 Schaubilder zur Erläuterung der Wirkungsweise von Fig. 8,

Fig. 10 eine Darstellung, welche stark schematisiert eine kombinierte Strombegrenzungsanordnung für die Begrenzung des Antriebsstromes und des Bremsstromes bei einer Anordnung gemäß Fig. 1 zeigt,

Fig. 11 ein Übersichtsschaltbild zur Erläuterung einer bevorzugten Ausführungsform einer erfindungsgemäßen Anordnung,

Fig. 12 eine Darstellung zur beispielhaften Erläuterung eines PWM-Generators gemäß dem Stand der Technik, wie er mit Vorteil bei der Gleichstrommaschine gemäß Fig. 1 bis 11 verwendet werden kann,

Fig. 13 Schaubilder zur Erläuterung von Fig. 12,

Fig. 14 eine Einzeldarstellung zur Erläuterung der Ansteuerung eines Brückenzweigs bei der Anordnung gemäß den Fig. 1 bis 11,

Fig. 15 eine Darstellung, welche die Ausgangssignale der Rotorstellungssensoren 111, 112, 113 gemäß Fig. 1 und ein kombiniertes Rotorstellungssignal zeigt, welches aus diesen Rotorstellungssignalen zusammengesetzt ist,

Fig. 16 ein Flussdiagramm, welches in einer Übersicht verschiedene Möglichkeiten zeigt, wie die Anordnung nach den vorhergehenden Figuren als Motor oder als Bremse betrieben werden kann,

Fig. 17 Schaubilder zur Erläuterung der Wirkungsweise von Fig. 16,

Fig. 18 ein physikalisches Modell zur Erläuterung der Vorgänge in der Gleichstrommaschine 32,

Fig. 19 Formen des Statorstroms, wie sie bei einer Drehzahlregelung mittels Stromstellung (Fig. 19B) bzw. bei einer Drehzahlregelung mittels Spannungsstellung (Fig. 19A) auftreten,

Fig. 20 einen Funktionsmanager, wie er bevorzugt bei einer erfindungsgemäßen Gleichstrommaschine Verwendung findet,

Fig. 21 eine Hall-Interrupt-Routine,

Fig. 22 eine Routine für den Ablauf der Kommutierung,

Fig. 23 eine TimerØ-Interrupt-Routine,

Fig. 24 eine Pumproutine für das Aufladen eines Kondensators, der für den Kommutierungsvorgang benötigt wird,

Fig. 25 eine Routine für die Überwachung der Spannung an der Gleichstrommaschine 32,

Fig. 26 ein Schaubild, welches einen Verlauf der Spannung am Motor zeigt, der bestimmte Vorgänge in der Routine der Fig. 25 auslöst,

Fig. 27 eine RGL_U-Routine für eine Regelung der Drehzahl über die Spannung am Motor,

Fig. 28 eine RGL_I-Routine für die Regelung der Drehzahl über den dem Motor zugeführten Strom,

Fig. 29 eine RGL_T+ Routine für die Regelung des antreibenden Drehmoments,

Fig. 30 eine RGL_T- Routine für die Regelung des bremsenden Drehmoments,

Fig. 31 eine Routine, welche zeigt, wie aufgrund des MODE-Signals aus einer Mehrzahl von Regelroutinen die richtige selektiert wird,

Fig. 32 eine Routine, welche zeigt, wie abhängig vom Signal MODE verschiedene Routinen angesteuert werden,

Fig. 33 eine raumbildliche Darstellung eines typischen Radiallüfters; ein solcher hat bei Betrieb mit konstantem Antriebsmoment besonders vorteilhafte Eigenschaften,

Fig. 34 eine Kurvenschar, welche für verschiedene Lüfterarten die Druckdifferenz $\Delta p$ über dem Volumenstrom zeigt,

Fig. 35 eine Kurvenschar, welche für verschiedene Lüfterarten die Drehzahl n über dem Volumenstrom V/t zeigt,

Fig. 36 eine Kurvenschar, welche für verschiedene Lüfterarten den Motorstrom I über dem Volumenstrom V/t zeigt,

Fig. 37 eine Kurvenschar, welche für verschiedene Lüfterarten die Leistungsaufnahme P über dem Volumenstrom V/t zeigt,

Fig. 38 den schematischen Aufbau einer Funkstation für den Mobilfunk, welche mit einem Radiallüfter versehen ist,

Fig. 39 zwei Kurven, nämlich eine Kurve 782 für den Betrieb des Lüfters der Fig. 38 mit einer konstanten Drehzahl von 4000 U/min, und eine Kurve 784 für den Betrieb dieses Lüfters mit konstantem Strom, also konstantem Drehmoment,

Fig. 40 eine Einzeldarstellung der Kurve 782 der Fig. 34,

Fig. 41 eine Darstellung eines Entlüftungskanals 676, in den von insgesamt sechs identischen Radiallüftern Luft gefördert wird, und der dabei vorhandenen Luftströme, wenn alle Lüfter auf dieselbe Drehzahl geregelt werden,

Fig. 42 eine Einzeldarstellung der Kurve 784 der Fig. 34,

Fig. 43 eine Darstellung analog Fig. 41, wobei aber die sechs Radiallüfter mit demselben konstanten Drehmoment betrieben werden,

Fig. 44 ein Flussdiagramm einer ersten Testroutine, welche dazu dient, einen Motor, z.B. den Motor eines Lüfters, im Betrieb zu testen,

Fig. 45 ein Flussdiagramm einer zweiten Testroutine, welche dazu dient, einen Motor, z.B. den Motor eines Lüfters, im Betrieb zu testen,

Fig. 46 ein Schaubild zur Erläuterung eines konventionellen Motors, und

Fig. 47 ein Schaubild zur Erläuterung einer bevorzugten Ausführungsform der Erfindung.

## Übersicht

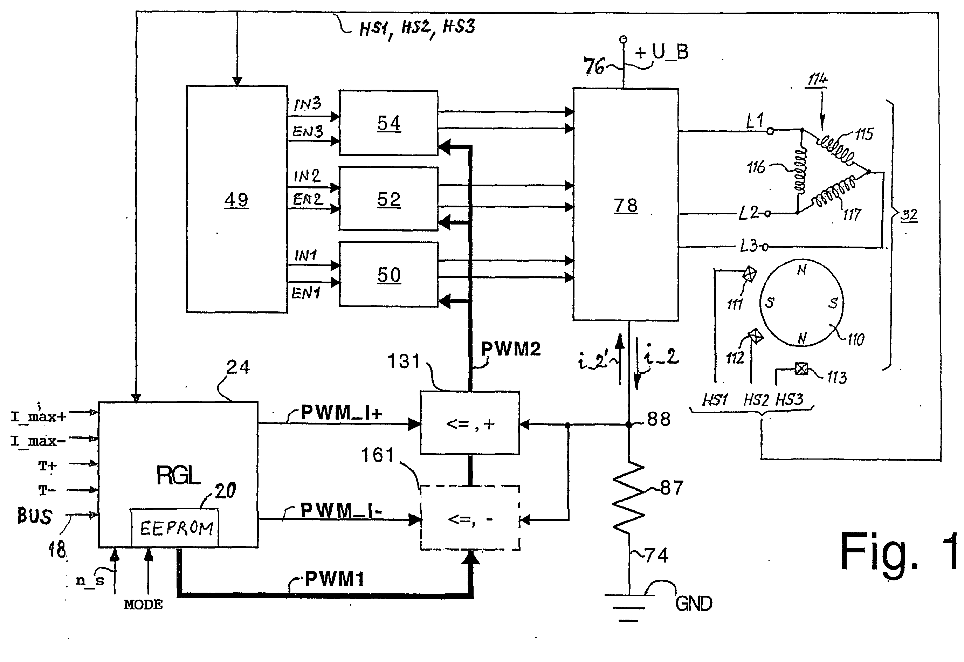

**Fig. 1** zeigt als stark schematisierte Übersicht eine Gesamtdarstellung eines bevorzugten Ausführungsbeispiels einer erfindungsgemäßen Anordnung.

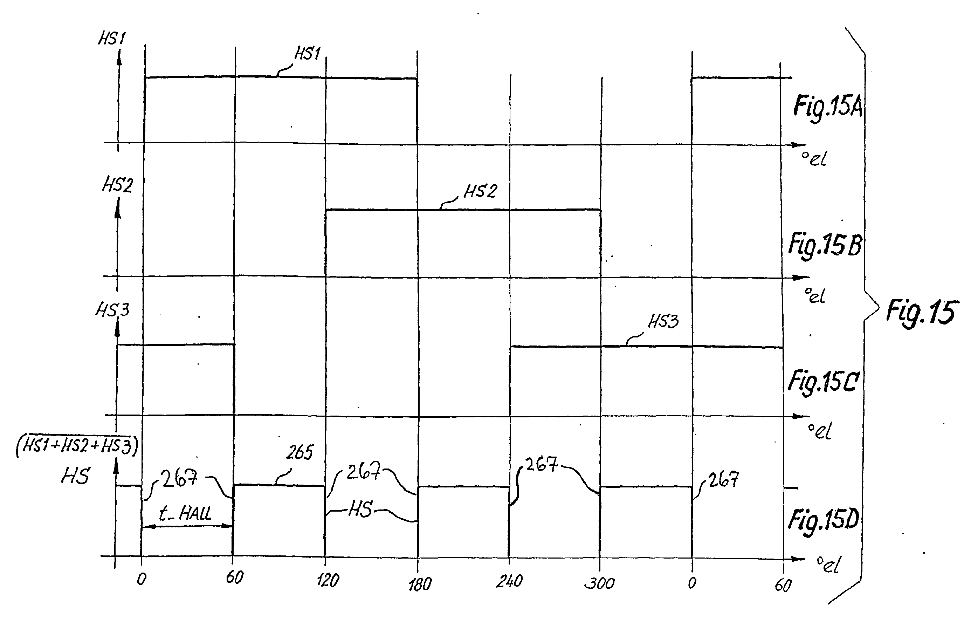

Rechts ist als Beispiel eine dreiphasige elektronisch kommutierte Gleichstrommaschine (ECM) 32 dargestellt. Diese hat einen permanentmagnetische Rotor 110, hier vierpolig dargestellt, welcher drei Hallgeneratoren 111, 112, 113 steuert, die im Betrieb Hallsignale HS1, HS2 und HS3 erzeugen, welche in Fig. 15 dargestellt sind. Aus Fig. 15 ergibt sich die Phasenlage dieser Signale relativ zueinander. Ferner hat die Gleichstrommaschine 32 einen Stator 114 mit drei Wicklungssträngen (Phasen) 115, 116, 117, die hier beispielhaft in Dreieckschaltung dargestellt sind und deren Anschlüsse mit L1, L2 und L3 bezeichnet sind.

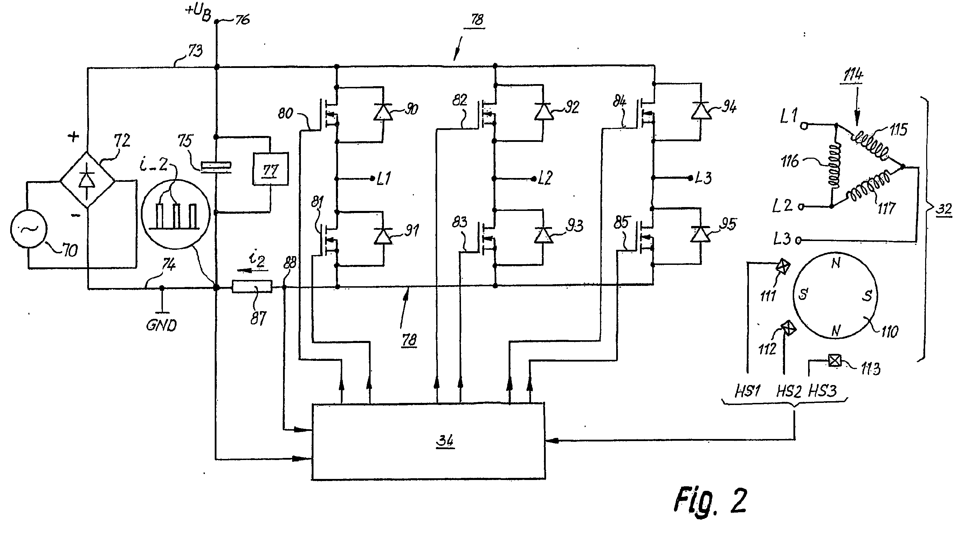

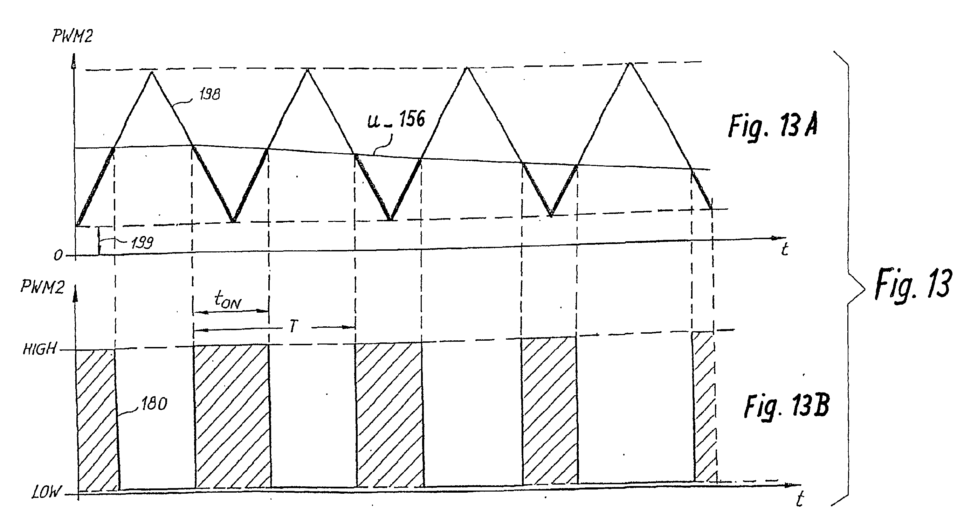

Diese Anschlüsse sind an den Ausgang einer Leistungs-Endstufe 78 angeschlossen, deren Aufbau beispielhaft in Fig. 2 dargestellt ist. Diese ist über einen Anschluss 76 an eine positive Betriebsspannung +U_B und über einen Knotenpunkt 88 und einen Messwiderstand 87 an Masse GND angeschlossen. Der impulsförmige Gesamtstrom in der Zuleitung zum Motor 32 am Knotenpunkt 88 wird mittels des Messwiderstands 87 erfasst, so dass sich das Potenzial am Punkt 88 abhängig vom Strom durch die Statorwicklung 114 ändert. Der Strom bei antreibender Gleichstrommaschine 32 ist mit i_2 bezeichnet, der Strom bei bremsender Gleichstrommaschine 32 mit i_2'. Beides sind impulsförmige Gleichströme, wie z.B. in Fig. 13B dargestellt, und ihr Tastverhältnis $t_{oN}/T$ (Fig. 13B) ist mit PWM2 bezeichnet, vgl. die nachfolgende Gleichung (9).

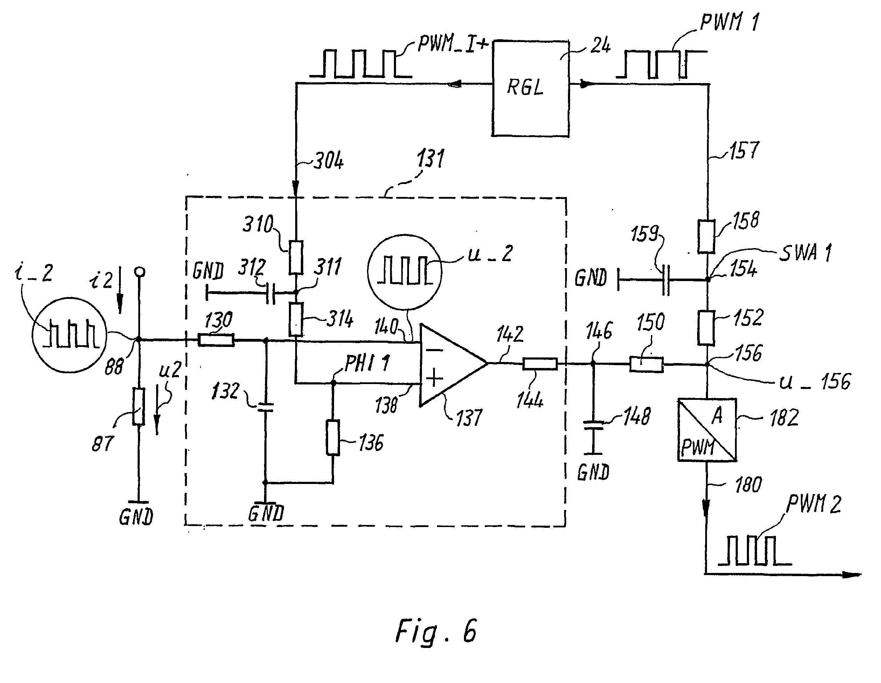

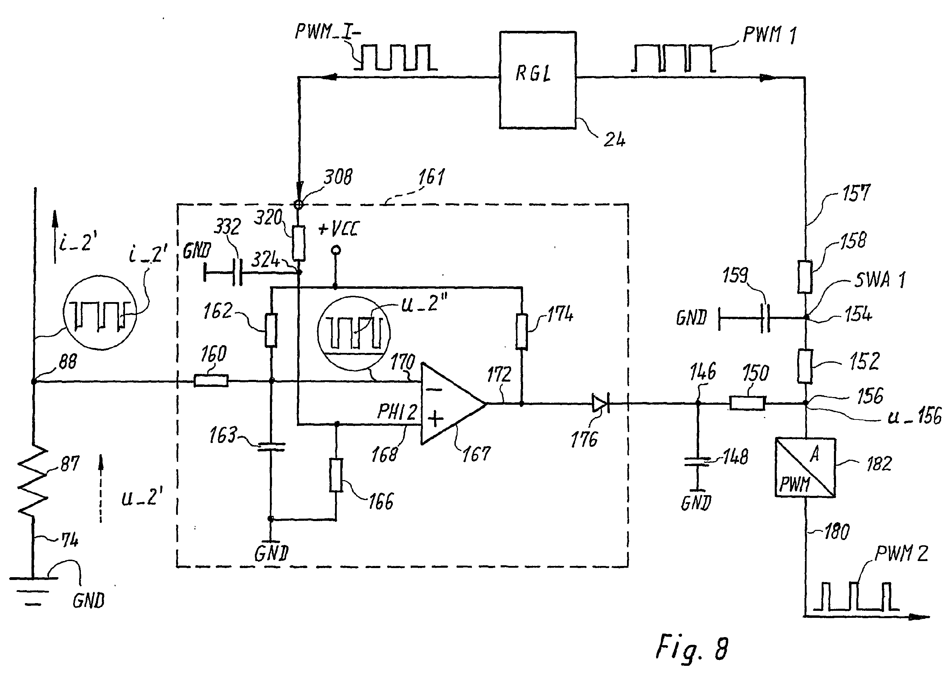

Das Signal (am Knotenpunkt 88) für den antreibenden Strom i_2 wird einer Strombegrenzungsstufe 131 zugeführt, und das Signal für den bremsenden Strom i_2' einer Strombegrenzungsstufe 161. Bevorzugte Ausführungsbeispiele dieser Strombegrenzungsstufen werden nachfolgend bei Fig. 6 und 8 ausführlich erläutert. Für den ECM 32 wird im folgenden häufig der Begriff "Motor" verwendet.

Eine Strombegrenzungsstufe 161 für den Bremsstrom i_2' ist selbstverständlich nur dann erforderlich, wenn gebremst werden soll. Falls das nicht der Fall ist, benötigt man sie nicht. Dasselbe gilt umgekehrt für die Strombegrenzungsstufe 131, sofern die Gleichstrommaschine 32 nur als Bremse verwendet werden soll.

Von einem Regler 24 kann der Strombegrenzungsstufe 131 ein variabler Strom-Begrenzungswert PWM_I+ (für den antreibenden Strom) zugeführt werden, z.B., um die Drehzahl n oder das antreibende Drehmoment T+ des Motors 32 zu regeln. Die Strombegrenzungsstufe 131 ist dabei durch ihre Hardware so ausgelegt, dass ein zulässiger Strom i_2 im Motor 32 auch dann nicht überschritten werden kann, wenn der Wert PWM_I+ seinen maximalen Wert annimmt.

## Beispiel 1

Der Motor 32 habe eine Betriebsdrehzahl von 6.800 U/min und eine Leerlaufdrehzahl von 9.300 U/min. Jede der Wicklungen habe einen Widerstand von 0,5 $\Omega$, und die Betriebsspannung U_B soll 24 V betragen. Beim Start würde dann gelten:

i_2 = 24 V/0,5 $\Omega$ = 48 A

Der Strom i_2 darf jedoch z.B. 5 A nicht überschreiten. In diesem Fall wird der Strombegrenzer 131 so ausgelegt, dass auch bei maximalem PWM_I+ der Strom i_2 nicht größer als 5 A werden kann.

Für die Spannung an der Wicklung 114 gilt angenähert

$$\text{Spannung an Wicklung } 114 = U\_B \times PWM2 \qquad \dots (1)$$

Deshalb wird sich im Stillstand des Motors 32 durch die Wirkung des Strombegrenzers 131 maximal ein PWM2 von etwa 10 % einstellen, da

$$24 \text{ V} \times 10 \% = 2,4 \text{ V},$$

und

$$2,4 \text{ V}/0,5 \ \Omega \approx 5 \text{ A}$$

Der Motor 32 nach diesem Beispiel erhält also im Betrieb ständig einen impulsförmigen Gleichstrom i_2 zugeführt, da ein kontinuierlicher Gleichstrom auf einen zu hohen Wert ansteigen und zu einer Zerstörung dieses Motors führen würde. Man kann es auch so ausdrücken, dass dieser Motor ohne seine Elektronik nicht fungibel wäre und mit ihr eine Motor-Elektronik-Einheit bildet.

Die Erzeugung eines impulsförmigen Gleichstroms i_2 mit dem erforderlichen Tastverhältnis PWM2 geschieht dadurch, dass entweder PWM1 selbst den richtigen Wert von PWM2 generiert, oder dadurch, dass ein den gewünschten Betriebswerten nicht entsprechender Wert von PWM1 duch die Strombegrenzungsstufe 131 oder die Strombegrenzungsstufe 161 modifiziert wird.

Vom Regler 24 kann der Strombegrenzungsstufe 161, falls vorhanden, ein (variabler) Strom-Begrenzungswert PWM_I- für den bremsenden Strom i_2' zugeführt werden. Dieser wird dann durch die Hardware des Strombegrenzers 161 stets im zulässigen Bereich gehalten. Der Wert PWM_I+ bestimmt den oberen Grenzwert für den antreibenden Strom, und der Wert PWM_I- bestimmt den oberen Grenzwert für den bremsenden Strom in der Gleichstrommaschine 32.

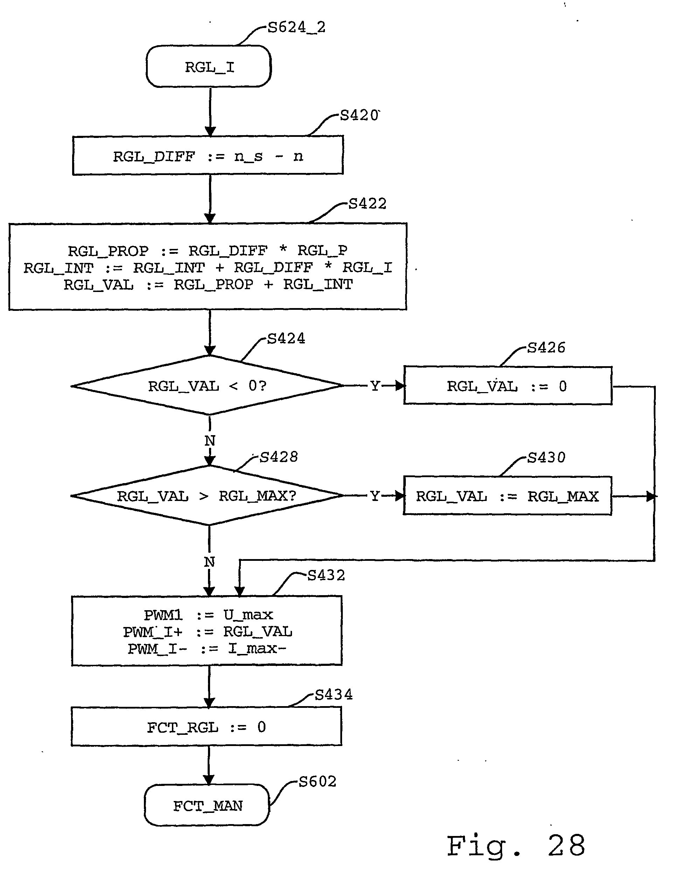

Wenn eine der Strombegrenzungsstufen 131 oder 161 anspricht, z.B., weil der Strom in der Endstufe 78 beim Anlauf oder einem Bremsvorgang zu hoch würde, wird das Signal PWM1 durch die Strombegrenzungsstufe 131 oder 161 zu einem (zulässigen) Signal PWM2 modifiziert. Ebenso gilt dies, wenn die Drehzahl des Motors 32 dadurch geregelt wird, dass der Strom-Sollwert PWM_I+ als Ausgangssignal eines Drehzahlreglers erzeugt wird, vgl. S432 in Fig. 28 und die dortige Beschreibung.

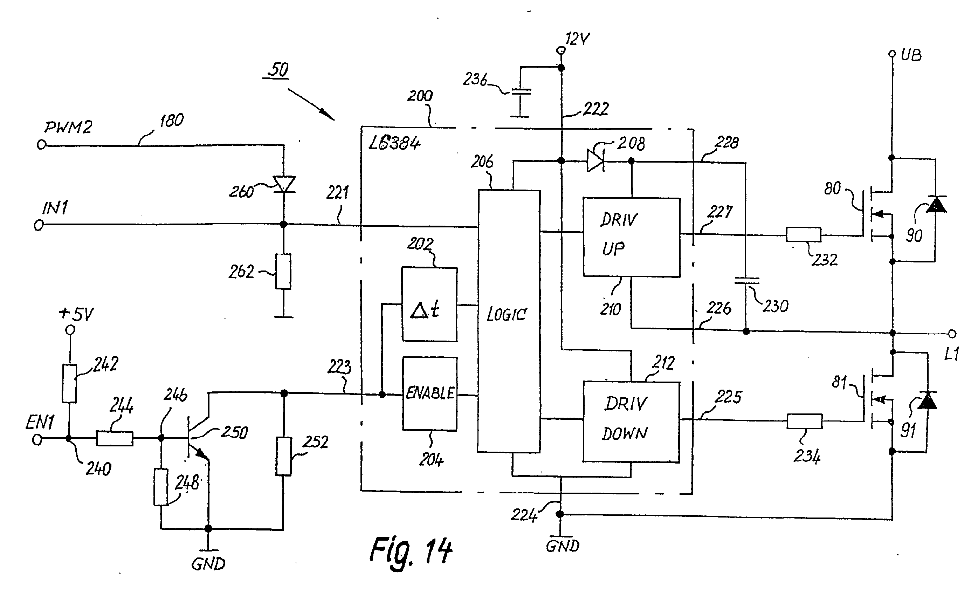

Die Signale HS1, HS2, HS3 werden dem Regler 24 zugeführt und stellen ein Maß für die aktuelle Drehzahl n des Motors 32 dar. Diese Signale werden auch einer Kommutierungssteuerung (Ansteuerlogik) 49 zugeführt, welche über Treiberstufen 50, 52, 54 die Kommutierung der Ströme in den Wicklungen 115, 116, 117 steuert. Die Kommutierungssteuerung 49 erzeugt Signale IN1, EN1, IN2, EN2, IN3, EN3, welche den Treiberstufen 50, 52, 54 zugeführt werden, denen auch das Signal PWM2 zugeführt wird. Fig. 14 zeigt beispielhaft den Aufbau der Treiberstufe 50, welche hinsichtlich ihres Aufbaus mit den Treiberstufen 52 und 54 identisch ist.

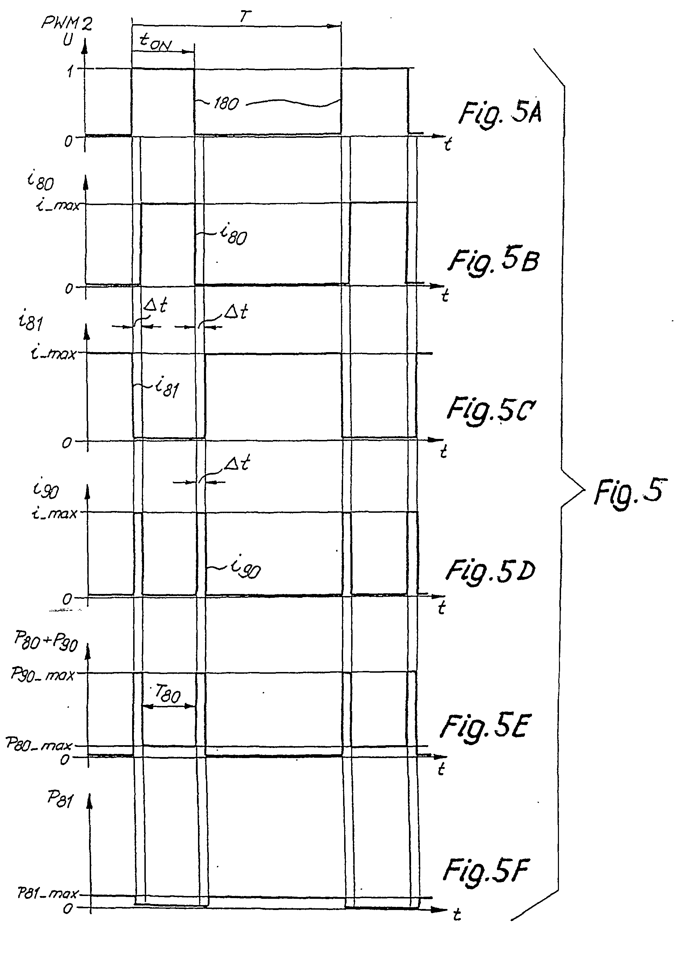

Fig. 5A zeigt beispielhaft das Signal PWM2, das zur PWM-Steuerung der Treiberstufen 50, 52, 54 dient. Dieses Signal hat eine Periodendauer T (entsprechend einer Frequenz von z.B. 20 kHz) und eine Einschaltdauer $to_N$. Das Verhältnis $to_N/T$ wird als Tastverhältnis des Signals PWM2 bezeichnet, vgl. Gleichung (9). Dieses Tastverhältnis hängt ab von

    a) dem Strom durch den Widerstand 87
    b) dem Signal PWM1
    c) dem Signal PWM_I+
    d) dem Signal PWM_I-

Durch das Signal PWM2 wird - durch entsprechende Steuerung der Treiberstufen 50, 52, 54 - die Spannung an der Wicklungsanordnung 114 vorgegeben, welche gemäß Gleichung (1) etwa gleich U_B * PWM2 ist.

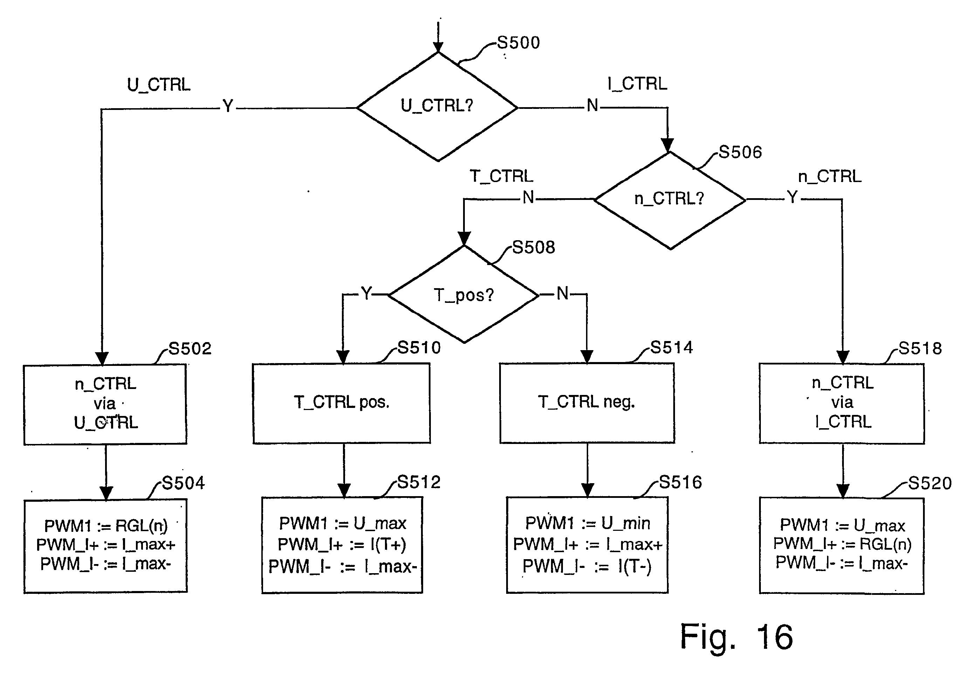

Das Zusammenwirken der genannten Faktoren kann am Regler 24 vorgegeben werden. Diesem kann an einem Eingang MODE eine von mehreren Betriebsarten vorgegeben werden, vgl. Fig. 16.

Am Eingang n_s wird dem Regler 24 eine gewünschte Drehzahl ("Solldrehzahl") vorgegeben.

Am Eingang I_max+ wird dem Regler 24 ein oberer Grenzwert für den antreibenden Motorstrom i_2 vorgegeben.

Am Eingang I_max- wird ihm ein oberer Grenzwert für den Bremsstrom i_2' vorgegeben, welcher auftritt, wenn die Gleichstrommaschine 32 eine Last bremst.

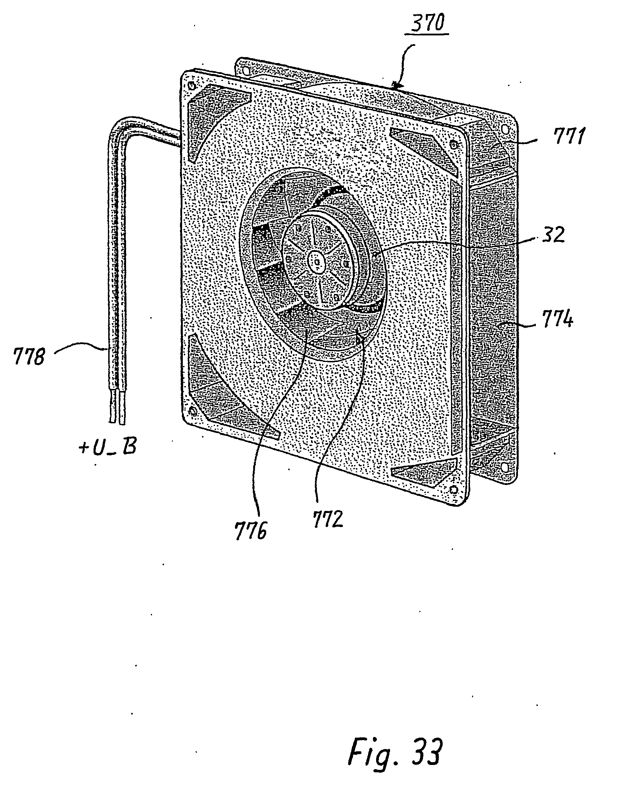

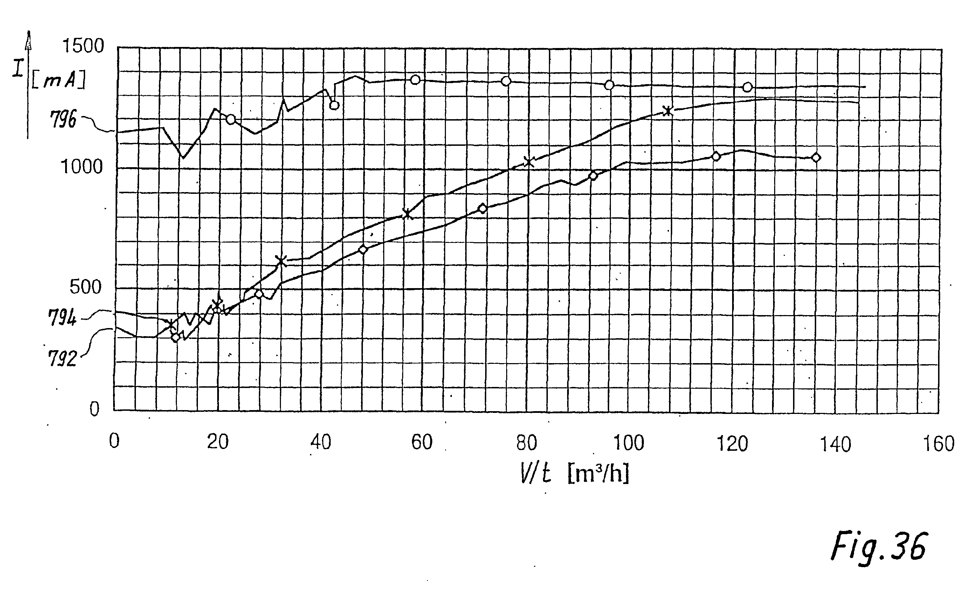

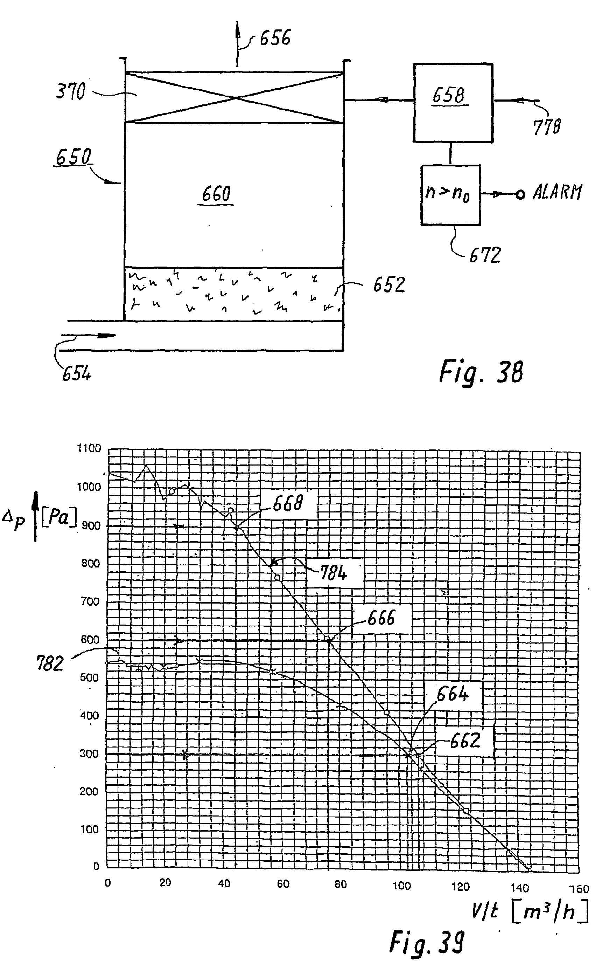

Am Eingang T+ wird dem Regler 24 ein antreibendes Drehmoment vorgegeben, das der Motor bei der entsprechenden Betriebsart in einem größeren Drehzahlbereich erzeugt. Dies ist möglich, weil der Strom einer Gleichstrommaschine im wesentlichen dem erzeugten Drehmoment proportional ist. Die Kennlinie 796 von Fig. 36 zeigt - für einen Radiallüfter 370 gemäß Fig. 33 - den aufgenommenen Strom I über dem Volumenstrom V/t bei Betrieb mit einem im wesentlichen konstanten Drehmoment. Man erkennt, dass dieser Strom I, und damit das erzeugte Drehmoment, in einem ziemlich großen Bereich konstant sind. Die Vorteile eines solchen Lüfters werden anhand der Fig. 38 bis 43 erläutert.

Am Eingang T- wird dem Regler 24 ein bremsendes Drehmoment vorgegeben, das die Gleichstrommaschine - als elektrische Bremse - in einem größeren Drehzahlbereich erzeugt.

Außerdem können über einen Bus 18 digitale Daten in den Regler 24 eingegeben und dort in einem nichtflüchtigen Speicher 20 gespeichert werden. Dies können z.B. die Werte für I_max+, I_max-, T+, T-, n_s und MODE sein, oder sonstige Werte, mit denen die Anordnung programmiert werden soll. Ebenso können über den Bus 18 digitale Daten aus dem Regler 24 nach außen übertragen werden, z.B. Drehzahl n, Alarmsignal etc.

Bevorzugte sind sowohl der Regler 24 wie die Kommutierungssteuerung 49 durch Software im gleichen Mikrocontroller 23 realisiert. In Fig. 1 sind diese Funktionen aus Gründen der Anschaulichkeit separat dargestellt.

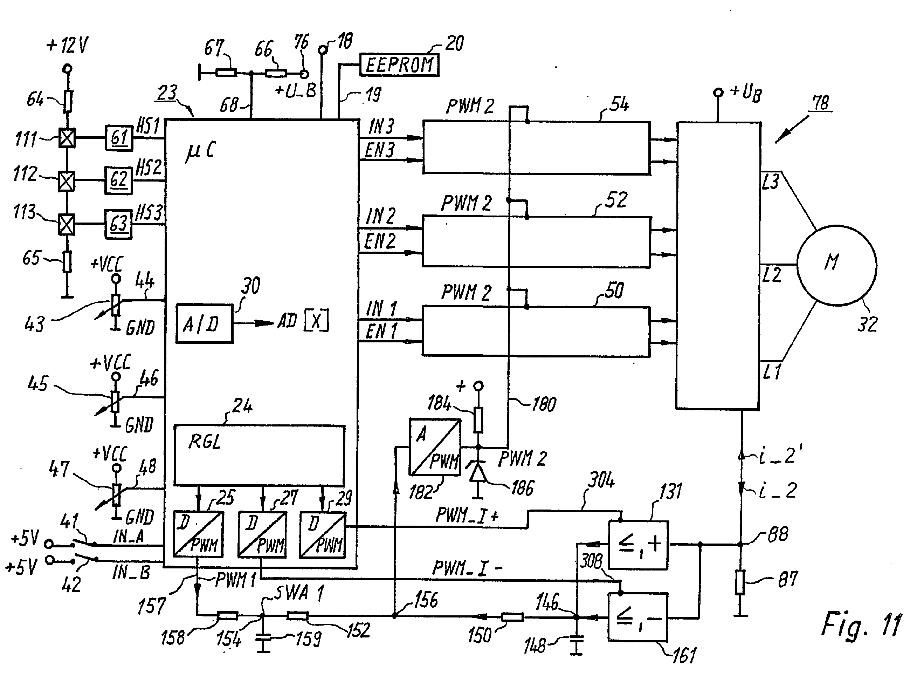

Sofern der Regler 24 digital arbeitet, erhält man an seinem Ausgang die Signale PWM1, PWM_I+ und PWM_I- in digitaler Form, nämlich als PWM-Signale. Diese Signale werden in den Strombegrenzern 131, 161 bevorzugt in analoger Form verarbeitet, weil auf diese Weise ein extrem schneller Ablauf des Regelvorgangs möglich ist, der digital nur mit größerem Aufwand zu erreichen wäre. Anschließend wird das resultierende Signal gemäß Fig. 11 in einem A/D-Wandler 182 wieder in ein digitales Signal PWM2 umgesetzt, das gemäß Gleichung (1) die Spannung an der Statoranordnung 114 und damit den Strom durch diese steuert.

Die Vorteile einer Anordnung gemäß Fig. 1 werden vor allem in folgenden Aspekten gesehen:

## A) Drehzahlregelung über Stromsteuerung

Wenn der Wert PWM1 (z.B. über den Eingang MODE) auf einen hohen Wert eingestellt wird (vgl. Fig. 16, S520), der z.B. einer Drehzahl von 9.300 U/min entsprechen würde, während die gewünschte Drehzahl n_s niedriger ist und z.B. nur 6.800 U/min beträgt, kann man die Drehzahl über den Strombegrenzer 131 regeln, also durch Veränderung des Signals PWM_I+. Dies hat, wie in Fig. 19B dargestellt, die Folge, dass der Strom im Motor 32 im wesentlichen einen konstanten Wert annimmt, wobei die Steilheit von Anstieg und Abfall des Stromes groß ist. Dadurch arbeitet der Motor 32 mit sehr niedrigen Schwankungen (ripple) seines Drehmoments und einem exzellenten Wirkungsgrad.

Bei dieser Betriebsart ist also die Strombegrenzung 131 ständig aktiv und begrenzt den Strom im Motor 32 auf einen (innerhalb vorgegebener Grenzen) variablen Wert, der ihr vom Drehzahlregler 24 als Signal PWM_I+ vorgegeben wird.

Man kann dies vergleichen mit der Kurve der Fig. 19A, bei welcher die Drehzahlregelung durch das Signal PWM1 erfolgt (vgl. Fig. 16, S504), das in diesem Fall wesentlich kleiner sein muss, wodurch sich eine sehr viel ungleichmäßigere Form des Stromes im Motor 32 ergibt, mit entsprechend höheren Schwankungen des erzeugten Drehmoments (torque ripple) und einem schlechteren Wirkungsgrad.

## B) Einstellung eines antreibenden Drehmoments T+

Man kann den Motor 32 mit konstantem antreibendem Drehmoment T+ betreiben. Dies geschieht gemäß Fig. 16, S512, dadurch, dass PWM1 auf einen hohen Wert eingestellt wird, der z.B. 9.300 U/min entsprechen würde, so dass die positive Strombegrenzung 131 ständig aktiv ist, und dass dem Strombegrenzer 131 ein Wert PWM_I+ vorgegeben wird, der dem gewünschten antreibenden Drehmoment T+ entspricht. Dies ist deshalb möglich, weil das Drehmoment T bei einer Gleichstrommaschine dem Wicklungsstrom i_3, welcher über den Antriebsstrom i_2 indirekt gemessen wird, weitgehend proportional ist. Der Wert PWM_I+ wird also in diesem Fall auf einen konstanten Wert eingestellt. Der Motor 32 arbeitet dann mit konstantem antreibendem Drehmoment.

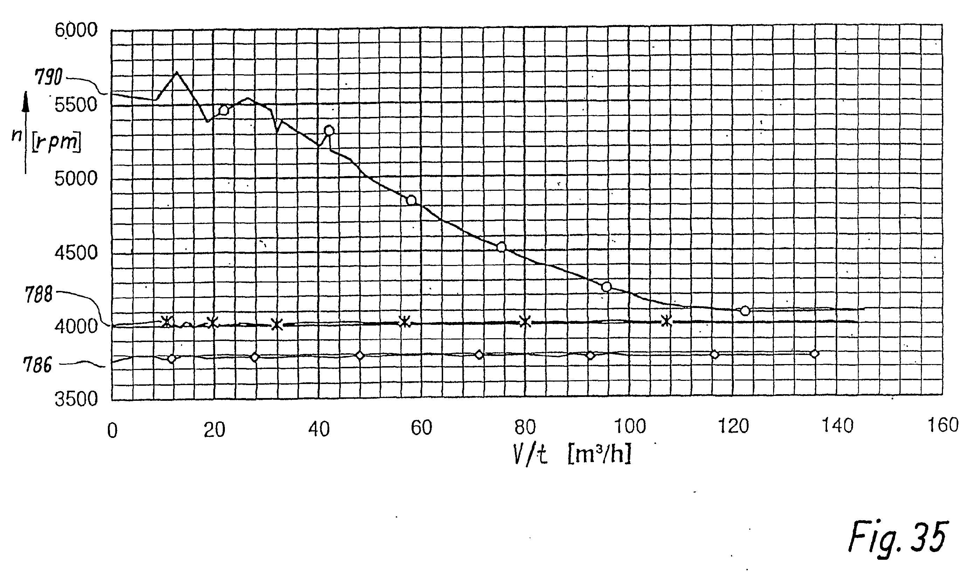

Bei einem Radiallüfter, wie er beispielhaft in Fig. 33 dargestellt ist, ist diese Betriebsart sehr vorteilhaft, weil bei ihr ein Radial- oder Diagonallüfter bei steigendem Gegendruck automatisch seine Drehzahl stark erhöht, wie das die Kurve 790 der Fig. 35 zeigt. Gerade bei Radiallüftern ist dies eine sehr wertvolle Eigenschaft, weil die geförderte Luftmenge bei steigendem Gegendruck weniger stark abfällt als bei anderen Lüfterbauarten, also weniger stark vom Gegendruck beeinflusst wird.

## C) Einstellung eines negativen Drehmoments T-

Die Gleichstrommaschine 32 kann auch mit konstantem Bremsmoment T-betrieben werden, sofern ein Bremsbetrieb vorgesehen ist. Dies zeigt S516 in Fig. 16. Hierbei wird PWM1 so eingestellt, so dass die negative Strombegrenzung 161 ständig aktiv ist, z.B. auf PWM1 = 0 % bei der Drehzahl 0, auf 50 % bei 10.000 U/min, und dazwischen auf linear veränderliche Zwischenwerte. Der Strombegrenzer 161 erhält einen Wert PWM_I-vorgegeben, der dem gewünschten Bremsmoment T- entspricht, so dass ein impulsförmiger Bremsstrom i_2' fließt, der das gewünschte Drehmoment T-bestimmt. Dies ist möglich, weil das Bremsmoment T- dem Bremsstrom in der Gleichstrommaschine 32 weitgehend proportional ist.

### D) Drehzahlregelung über Spannungssteuerung

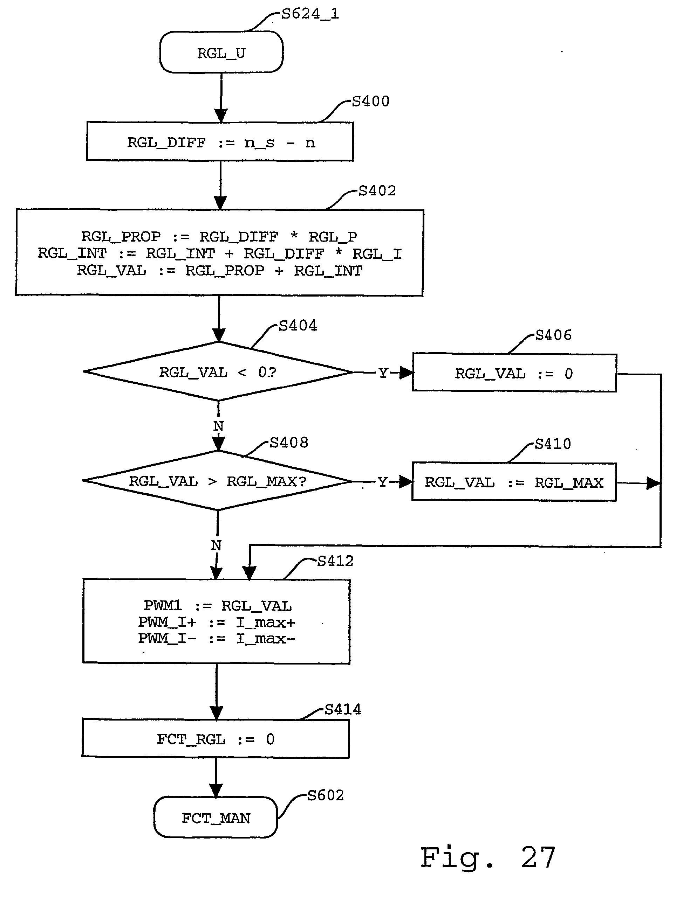

Man kann schließlich in der "normalen" Weise durch Veränderung des Signals PWM1 die Drehzahl regeln, wobei über den Strombegrenzer 131 (und ggf. 161) der Motorstrom auf einen zulässigen Wert begrenzt wird. Dies ist in Fig. 16 bei S504 dargestellt, und im Detail in Fig. 27. Dabei entfällt aber der Vorteil, dass der Motorstrom besonders konstant ist, und man erhält einen Stromverlauf, wie er in Fig. 19A dargestellt ist und bei welchem die Schwankungen des antreibenden Drehmoments und die Motorgeräusche größer sind.

### E) Kombination der Betriebsarten

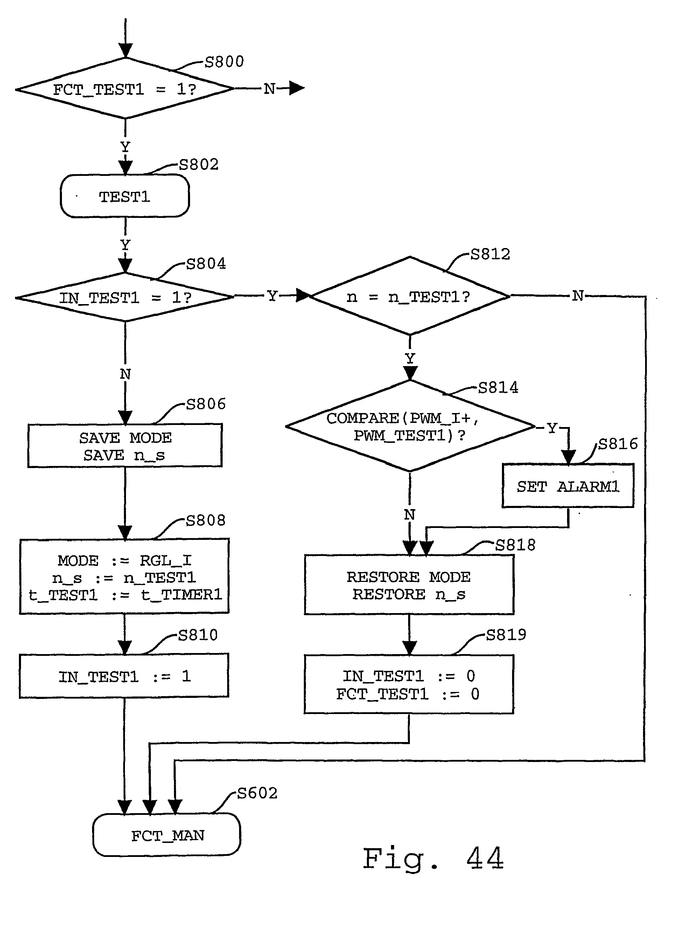

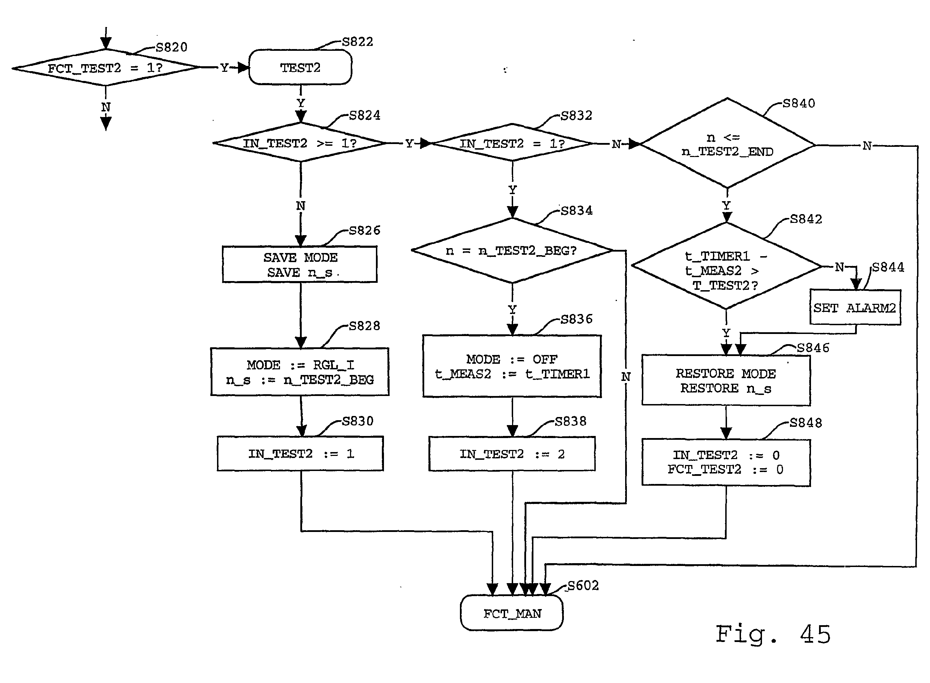

Man kann ferner über das Signal MODE zwischen allen diesen Betriebsarten softwaremäßig hin- und herschalten, wie das Fig. 16 zeigt. Z.B. kann man eine Gleichstrommaschine 32 beim Start eines Geräts als Bremse mit konstantem Drehmoment T- verwenden, und nach dem Hochlauf des Geräts als Antriebsmotor, entweder mit geregelter Drehzahl (Fig. 16, S504 oder S520), oder mit konstantem antreibendem Drehmoment (Fig. 16, S512).
Ein anderes Beispiel ist, dass die Gleichstrommaschine 32 durch eine Drehzahlregelung über Spannungs- oder Stromsteuerung auf eine gewünschte Drehzahl n_s gebracht und so der Geschwindigkeit eines zu bremsenden Transportbandes angepasst wird. Dann wird die Gleichstrommaschine 32 an das Transportband angekoppelt, und die Betriebsart MODE wird auf konstantes Bremsmoment umgestellt, um das Band zu bremsen. Andere Beispiele werden nachfolgend anhand der Fig. 44 und 45 beschrieben.
Die Erfindung eignet sich also für vielfältige Antriebsaufgaben, wobei ein besonders bevorzugtes Anwendungsgebiet der Antrieb eines Radial- oder Diagonallüfters mit einem im wesentlichen konstanten Drehmoment T+ ist, wie nachfolgend anhand der Fig. 33 bis 43 erläutert.
**Fig. 2** zeigt wieder die dreiphasige elektronisch kommutierte Gleichstrommaschine (ECM) 32 mit ihren Wicklungsanschlüssen L1, L2 und L3, ferner eine als Vollbrücke ausgebildeten Endstufe 78 mit drei Brückenzweigen, in denen Halbleiterschalter 80 bis 85 angeordnet sind. Die Erfindung eignet sich in gleicher Weise auch für andere Gleichstrommaschinen, z.B. für ECMs mit nur einer Phase, mit zwei Phasen, oder mit mehr als drei Phasen, oder für Kollektormaschinen.
Eine Wechselspannung aus einer Wechselspannungsquelle 70 wird in einem Gleichrichter 72 gleichgerichtet und einem Gleichstromzwischenkreis (DC link) 73, 74 zugeführt. Ein Kondensator 75 glättet die Gleichspannung U_B am Zwischenkreis 73, 74, welche den einzelnen Brückenzweigen der Vollbrücke 78 zugeführt wird. Die Spannung U_B kann an einem Anschluss 76 gemessen werden.
Als Leistungsschalter werden in diesem Ausführungsbeispiel sowohl für die oberen Leistungsschalter 80, 82 und 84 als auch für die unteren Leistungsschalter 81, 83 und 85 N-Kanal MOSFETs verwendet. Zu den Leistungsschaltern 80 bis 85 sind Freilaufdioden 90, 91, 92, 93, 94 und 95 antiparallel geschaltet. Die Freilaufdioden 90 bis 95 sind üblicherweise in die zugehörigen N-Kanal MOSFETs integriert. Die Gleichspannung U_B am Zwischenkreis 73, 74 wird auch Verbrauchern 77 zugeführt, z.B. elektronischen Komponenten der Gleichstrommaschine 32.
Über die oberen Leistungsschalter 80, 82 und 84 kann der jeweilige Wicklungsanschluss L1, L2 bzw. L3 mit der Plusleitung 73 verbunden werden, und über die unteren Leistungsschalter 81, 83 und 85 und einen Messwiderstand 87 kann der jeweilige Wicklungsanschluss L1, L2 bzw. L3 mit der negativen Leitung 74 verbunden werden.
Die Gleichstrommaschine 32 hat eine zentrale Steuereinheit 34. Diese steuert die oberen und unteren Leistungsschalter 80 bis 85.
Der Messwiderstand 87 dient dazu, den durch die unteren Brückentransistoren 81, 83 und 85 fließenden Strom i_2 anhand der Spannung zwischen dem Punkt 88 und Masse GND zu messen und einer Strombegrenzungsanordnung in der zentralen Steuereinheit 34 zuzuführen. Man spricht auch von einer Fußpunktmessung. Bei der vorliegenden Schaltung kann dieser Strom in beide Richtungen fließen: In der dargestellten Richtung, wenn die Gleichstrommaschine 32 elektrische Leistung aufnimmt, und in der umgekehrten Richtung, wenn die Gleichstrommaschine als Generator arbeitet und Leistung abgibt, die dann in den Kondensator 75 fließt.
Wie in Fig. 2 dargestellt, ist der Strom i_2 in der Zuleitung zum Motor 32, wie er am Messwiderstand 87 gemessen wird, ein impulsförmiger Gleichstrom, meist mit einer Frequenz von etwa 20 kHz. Dagegen hat der Strom durch die Phasen 115, 116, 117 des Motors 32 - wegen der Freilaufdioden 90 bis 95, der Regelung, und wegen der bevorzugten "wechselseitigen Taktung", wie sie nachfolgend beschrieben wird - die Form von relativ niederfrequenten Stromimpulsen variabler Amplitude, wie in Fig. 19A und 19B dargestellt. Bei der bevorzugten Version nach Fig. 19B ist der Strom I im Bereich des Impulsdachs Z praktisch konstant.

Die Elektronik des Motors 32 misst also den impulsförmigen Strom i_2 in der Zuleitung zum Motor 32 und bewirkt damit im Motor 32 Impulse mit einer im wesentlichen konstanten Amplitude, wie beispielhaft in Fig. 19B dargestellt.

Die Rotorstellungssensoren 111, 112 und 113 sind mit einem Winkelabstand von jeweils 120° el. voneinander um den Rotor 110 angeordnet und dienen zur Bestimmung von dessen Lage. So ist der Rotorstellungssensor 111 bei 0° el. (0° mech.), der Rotorstellungssensor 112 bei 120° el. (60° mech.) und der Rotorstellungssensor 113 bei 240° el. (120° mech.) angeordnet, oder in äquivalenten Stellungen.

Der Zusammenhang zwischen elektrischem Winkel phi_el und mechanischem Winkel phi_mech ist gegeben durch

$$\text{phi\_el} = \text{phi\_mech} * PZ/2 \qquad\qquad ... (2),$$

wobei PZ = Polzahl des Rotors 110.

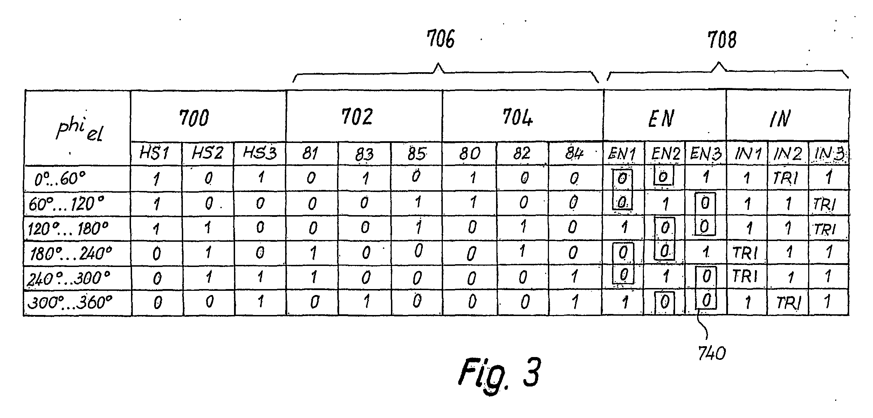

Der Rotorstellungssensor 111 liefert ein Hallsignal HS1, der Rotorstellungssensor 112 ein Hallsignal HS2 und der Rotorstellungssensor 113 ein Hallsignal HS3, vgl. die Fig. 3 und 15. Die Hallsignale HS1, HS2, HS3 werden der zentralen Steuervorrichtung 34 zugeführt, welche daraus die Stellung des Rotors 110 und dessen Drehzahl n bestimmt.

## Ansteuerlogik

**Fig. 3** zeigt eine Tabelle, welche die Bestromung der oberen Leistungsschalter 80, 82 und 84 (Spalte 704) und der unteren Leistungsschalter 81, 83 und 85 (Spalte 702) in Abhängigkeit von den Hallsignalen HS1, HS2 und HS3 (Spalte 700) für eine Laufrichtung der Gleichstrommaschine angibt. Hierzu ist auch der Winkelbereich des elektrischen Winkels phi_el angegeben, z.B. 0° el. bis 60° el.

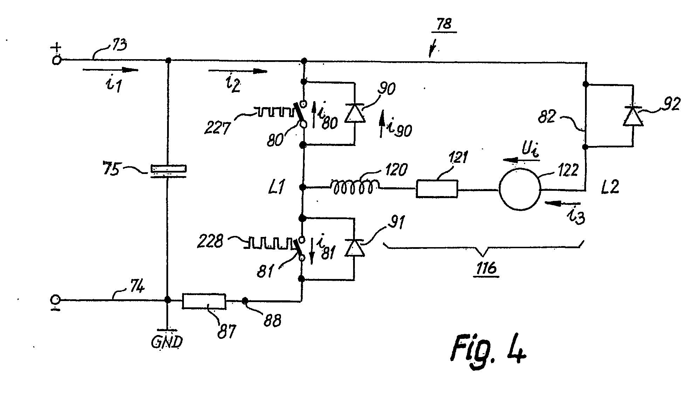

Nachfolgend wird bei Fig. 4 der Fall beschrieben, dass z.B. die MOSFETs 80 und 81 alternierend eingeschaltet werden, was man als "wechselseitige Taktung" bezeichnet. Die Werte im Bereich 706, also den Spalten 80 bis 85, gelten für eine Gleichstrommaschine ohne wechselseitige Taktung. Die Werte im Bereich 708, also in den Spalten EN1, EN2, EN3, IN1, IN2, IN3, gelten für eine Gleichstrommaschine 32 mit wechselseitiger Taktung, wie sie anhand von Fig. 4 beschrieben wird.

Bei einer Position des Rotors 110 im Bereich 0° ... 60° el. haben die Hallsignale die Werte HS1 = 1, HS2 = 0 und HS3 = 1. Daraus ergibt sich die dargestellte Ansteuerung der Leistungsschalter 80 bis 85. Bei einer Ansteuerung ohne Taktung liegt dann der Wicklungsanschluss L1 über den Leistungsschalter 80 an der Plusleitung 73 ("1" bei Schalter 80 in Fig. 3), der Wicklungsanschluss L2 liegt über den Leistungsschalter 83 an der Minusleitung 74 ("1" bei Schalter 83 in Fig. 3), und beim Wicklungsanschluss L3 sind beide Leistungsschalter 84 und 85 (jeweils "0" bei Schalter 84 und 85 in Fig. 3) offen, ebenso die Leistungsschalter 81 und 82.

Bei einer einfachen Taktung (siehe Fig. 3 und 4) bedeutet eine "1" bei einem der unteren Leistungsschalter 81, 83, 85, dass dieser durch ein PWM-Signal getaktet, also mit einem bestimmten Tastverhältnis aus- und eingeschaltet wird.

Bei einer wechselseitigen Taktung (siehe Fig. 4) bedeutet eine "1" bei einem unteren Leistungsschalter, dass dieser durch ein PWM-Signal (Fig. 5C) getaktet wird, und dass der zugehörige obere Leistungsschalter durch das invertierte PWM-Signal (Fig. 5B) ebenfalls getaktet, also aus- und eingeschaltet wird. Näheres zu der einfachen und zu der wechselseitigen Taktung ist bei Fig. 4 ausgeführt.

Die Spalten EN1, EN2, EN3 und IN1, IN2, IN3 bestimmen die Ansteuerung eines Treiberbausteins 200 (Fig. 14), der daraus eine wechselseitige Taktung erzeugt. Hierbei bedeutet z.B. EN1 = 0, dass der Treiberbaustein für den Brückenzweig zu L1 aktiviert ist, und EN1 = 1 bedeutet, dass dieser Treiberbaustein nicht aktiviert ist, d.h. dass die Transistoren 80 und 81 gesperrt sind. IN1 = 1 bedeutet, dass bei aktiviertem Treiberbaustein 200 der obere Leistungsschalter 80 geschlossen wird, IN1 = TRISTATE (TRI) bedeutet, dass bei aktiviertem Treiberbaustein 200 das PWM-Signal PWM2 (vgl. Beschreibung zu Fig. 4) abwechselnd den oberen Treiber 210 oder den unteren Treiber 212 des Treiberbausteins 200 aktiviert, so dass entweder der Transistor 80 leitet und der Transistor 81 sperrt, oder umgekehrt der Transistor 80 sperrt und der Transistor 81 leitet. Diese Umschaltung erfolgt z.B. mit einer Frequenz von 20 kHz. Bei ihr wird ständig Ladung in einen Kondensator 230 (Fig. 14) gepumpt, so dass dieser stets geladen bleibt. Bei ausgeschaltetem Treiberbaustein (z.B. EN1 = 1) hat der Wert von IN1 keine Auswirkung. Er wird jedoch in diesem Fall üblicherweise auf 1 gesetzt, vgl. Fig. 3.

Für das obige Beispiel mit einem Rotor 110 in dem Bereich 0° ... 60° el. bedeutet dies, dass die Treiberbausteine zu den Brückenzweigen der Wicklungsanschlüsse L1 und L2 eingeschaltet sind (EN1 = 0 und EN2 = 0), der Brückenzweig zu Wicklungsanschluss L3 jedoch ausgeschaltet ist (EN3 = 1). Bei dem Brückenzweig zu L1 ist der obere Leistungsschalter 80 geschlossen (IN1 = 1), und bei dem Brückenzweig zu L2 wird durch das PWM-Signal PWM2 zwischen den Leistungsschaltern 83 und 82 hin- und hergeschaltet (IN2 = TRI), wie oben beschrieben.

Bei jeder Stellung des Rotors 110 wird also - bei wechselseitiger Taktung - durch die Ansteuerlogik 49 genau einer der Wicklungsanschlüsse L1, L2 und L3 überhaupt nicht bestromt, ein zweiter liegt an der Betriebsspannung U_B, und ein dritter wird zwischen der positiven und der negativen Betriebsspannung hin- und hergeschaltet. Es ist deshalb möglich, im Ersatzschaltbild den nicht bestromten Wicklungsanschluss wegzulassen und den Stator 114 als Zweipol zu betrachten, wie das Fig. 4 zeigt. Dies ermöglicht es im folgenden, nur eine Wicklung zu betrachten. Die anderen Wicklungen verhalten sich analog.

## Die Art der Stromzufuhr zur Statorwicklung

**Fig. 4** zeigt ein Ersatzschaltbild mit den für die Rotorstellung im Bereich von 0° ... 60° el. aktiven Schaltungsteilen. Gleiche Teile wie in Fig. 1 und 2 erhalten die gleichen Bezugszeichen und werden nicht nochmals beschrieben. Die Leistungsschalter 80, 81, 82 sind symbolisch in Form von Schaltern dargestellt.

Der zwischen L1 und L2 geschaltete Wicklungsstrang 116 (zu dem die seriell geschalteten Stränge 115 und 117, wie in Fig. 1 und 2 zu sehen, parallelgeschaltet sind) wird dargestellt als Induktivität 120, Wicklungswiderstand 121 und Spannungsquelle 122 für die beim Drehen des Rotors 110 in die Wicklung 116 induzierte Spannung U_i, welche gemäß

$$U\_i = n * k\_e \qquad\qquad \cdots \text{(3)}$$

proportional zur Drehzahl n des Motors und einer Motorkonstanten k_e ist.

Der durch die Wicklung 116 fließende Wicklungsstrom wird mit i_3 bezeichnet, der Zwischenkreis-Gleichstrom i_1 ist der geglättete Strom aus dem Zwischenkreis 73, 74, und i_2 ist der impulsförmige Strom der Endstufe.

Der obere Leistungsschalter 82 ist bei einer Rotorstellung im Bereich 0° ... 60° el. geschlossen.

Die Stromzufuhr zur Statorwicklung 114 kann auf verschiedene Arten erfolgen:

## Einfache Taktung

Bei einer einfachen Taktung wird der untere Leistungsschalter 81 durch ein PWM-Signal 228 (pulsweitenmoduliertes Signal) geschlossen und geöffnet; der obere Leistungsschalter 80 bleibt geöffnet. Durch das sogenannte Tastverhältnis tON/T (Fig. 13) eines PWM-Signals 228 (Fig. 4) wird die Motordrehzahl gesteuert.

Bei geschlossenem Schalter 81 fließt der Wicklungsstrom i_3 von der Plusleitung 73 über den Leistungsschalter 82, den Wicklungswiderstand 121 und die Induktivität 120 zum Leistungsschalter 81. Der Wicklungsstrom i_3 wird durch die Spannung am Zwischenkreis 73, 74 erhöht, und der Motor wird angetrieben. Der Strom i_2 ist bei geschlossenem Schalter 81 ist gleich dem Strom i_3. Daher kann bei geschlossenem Schalter 81 durch eine Messung des Stroms i_2 der Wicklungsstrom i_3 bestimmt und auch geregelt werden.

Wird der Leistungsschalter 81 geöffnet, so fällt der Wicklungsstrom i_3 nicht sofort auf 0, sondern die Induktivität 120 ist bestrebt, den Strom i_3 aufrechtzuerhalten. Da die Diode 91 für den Strom i_3 nichtleitend ist, fließt der Wicklungsstrom i_3 über die Freilaufdiode 90 und über den geschlossenen Schalter 82.

Bei einer ausreichend schnellen Taktung durch das PWM-Signal 228 (z.B. mit der Frequenz 20 kHz) stellt sich ein von dem Tastverhältnis des PWM-Signals 228 abhängiger annähernd konstanter Wicklungsstrom i_3 ein, und der Antriebsstrom i_2 entspricht bei geschlossenem Schalter 81 jeweils dem Wicklungsstrom i_3. Der arithmetische Mittelwert des impulsförmigen Stromes i_2 entspricht hierbei dem Zwischenkreis-Gleichstrom i_1.

## Wechselseitige Taktung

Bei einer wechselseitig getakteten Endstufe, wie sie hier bevorzugt verwendet wird, wird der Leistungsschalter 81 wie bei der einfachen Taktung durch das PWM-Signal 228 ein- und ausgeschaltet. Gleichzeitig wird zusätzlich der Leistungsschalter 80 durch ein PWM-Signal 227 geöffnet, wenn der Leistungsschalter 81 geschlossen ist, und umgekehrt. Das PWM-Signal 227 entspricht also im wesentlichen dem invertierten PWM-Signal 228. Näheres hierzu ist bei Fig. 5 ausgeführt.

Durch das wechselseitige Takten wird zum einen erreicht, dass durch den leitenden MOSFET 80 die Freilaufdiode 90 überbrückt wird, an der bei der einfachen Taktung ein Hauptteil der Verlustleistung entsteht. Hierbei wird ausgenutzt, dass bei MOSFETs der Strom in beiden Richtungen fließen kann. Zum anderen ist durch das wechselseitige Takten ein Wicklungsstrom i_3 in beiden Richtungen möglich, also motorisch und generatorisch. Bei der einfachen Taktung kann der Wicklungsstrom i_3 durch die Diode 90 nur in eine die Gleichstrommaschine 32 antreibende Richtung fließen.

Ein Wicklungsstrom i_3 in die entgegengesetzte Richtung bewirkt eine Bremsung der Gleichstrommaschine 32.

Auch bei der wechselseitigen Taktung stellt sich bei ausreichend schneller Taktung durch die PWM-Signale 227, 228 (z.B. mit der Frequenz 20 kHz) ein von dem Tastverhältnis der PWM-Signale 227, 228 abhängiger annähernd konstanter Wicklungsstrom i_3 ein, und der Strom i_2 entspricht bei geschlossenem Schalter 81 dem Wicklungsstrom i_3, welcher positiv oder negativ sein kann. Ein negativer, also bremsender Strom ist in Fig. 1 mit i_2' bezeichnet. Da der Strom i_2 oder i_2', solange er fließt, gleich groß ist wie i_3, kann dieser Strom verwendet werden, um i_3 auf einen gewünschten Wert zu regeln.

**Fig. 5A** bis **Fig. 5F** zeigen Diagramme der in Fig. 4 auftretenden Spannungen, Ströme und Leistungen bei einer wechselseitigen Taktung.

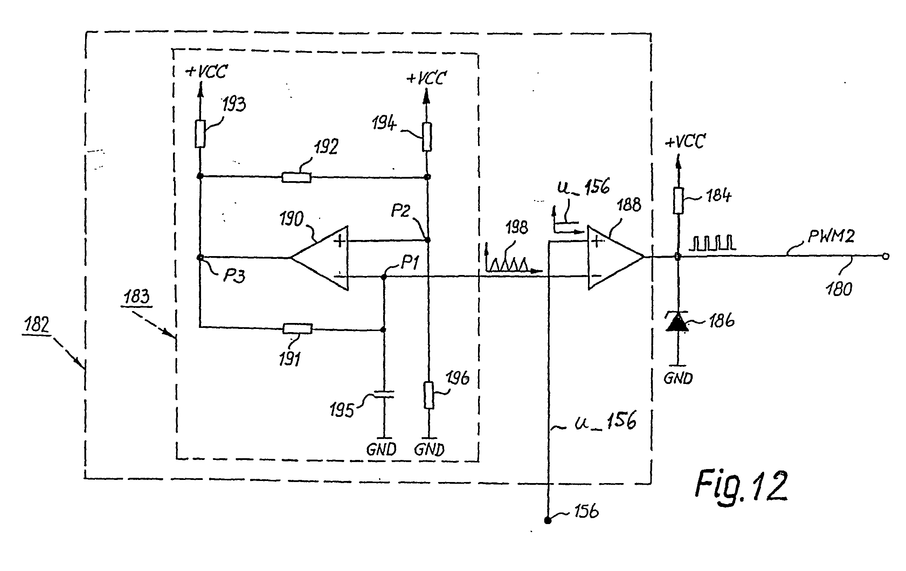

Fig. 5A zeigt ein PWM-Signal PWM2 180, welches z.B. eine Frequenz von 20 KHz hat und in Fig. 12 und 13 näher beschrieben ist, und mit dem die Signale 227 zur Ansteuerung des Leistungsschalters 80 (Fig. 4) und 228 zur Ansteuerung des Leistungsschalters 81 (Fig. 4) von dem Treiberbaustein 200 (Fig. 14) generiert werden. Die Signale 227 und 228 verlaufen im wesentlichen spiegelbildlich zueinander, d.h. wenn das Signal 227 hoch ist, ist das Signal 228 niedrig, und wenn das Signal 227 niedrig ist, ist das Signal 228 hoch. Diese Signale 227, 228 sind durch Totzeiten $\Delta t$ (z.B. 1 $\mu$s) voneinander getrennt, während derer beide Transistoren 80, 81 nichtleitend sind. Während dieser Totzeiten fließt ein Strom i_90 (Fig. 5D) durch die Diode 90.

Fig. 5B zeigt schematisch den Strom i_80, der in Abhängigkeit von dem PWM-Signal 227 durch den Transistor 80 fließt, wenn dieser leitend und der Transistor 81 gesperrt ist. Der maximale Strom i_max hat z.B. den Wert 4 A.

Fig. 5C zeigt schematisch den Strom i_81, der in Abhängigkeit von dem PWM-Signal 228 durch den Transistor 81 fließt, wenn dieser leitend und der Transistor 80 gesperrt ist. Der maximale Strom i_max hat z.B. den Wert 5 A.

Fig. 5D zeigt den Strom i_90, der in jeder Totzeit $\Delta t$ durch die Diode 90 fließt. Der maximale Strom i_max hat z.B. den Wert 5 A. Die Totzeit $\Delta t$ muss eingehalten werden, da bei gleichzeitigem Leitendwerden des Transistors 80 und des Transistors 81 ein Kurzschluss entstehen würde, der die Vollbrücke zerstören würde.

Der Wicklungsstrom i_3 (siehe Fig. 4) fließt also bei der wechselseitigen Taktung abwechselnd über den unteren Schalter 81 und über den oberen Schalter 80. Bei der Umschaltung fließt er jeweils während einer kurzen Totzeit $\Delta t$ über die Freilaufdiode 90.

Fig. 5E zeigt die entstehende Verlustleistung P80 von Transistor 80 und P90 von der Diode 90. Die maximale Verlustleistung P80_max des Transistors 80 beträgt z.B. 1 W, die maximale Verlustleistung P90_max der Diode 90 beträgt z.B. 6 W. Durch das wechselseitige Takten wird also die Verlustleistung während der Zeit, die der Transistor 81 geöffnet ist, außerhalb der Totzeit von 6 W auf 1 W reduziert, da während der Zeit T_80 (Fig. 5E) der Transistor 80 mit seinem niedrigen Innenwiderstand (z.B. 60 m$\Omega$) die Diode 90 überbrückt.

Fig. 5F zeigt die Verlustleistung P81 des Transistors 81. Die maximale Verlustleistung P81_max des Transistors 81 beträgt z.B. 1 W.

Durch das "wechselseitige Takten" der Transistoren 80 und 81 wird also ein Großteil der Verlustleistung, welche bei der "einfachen Taktung" in der Diode 90 entsteht, vermieden. Dasselbe gilt in Fig. 2 für die Dioden 92 und 94. Bei Reduzierung der Verlustleistung in den Dioden 90, 92, 94 werden die Bauteile der Schaltung weniger stark erwärmt, eine kompaktere Bauweise wird möglich, und der Wirkungsgrad der Gleichstrommaschine 32 wird verbessert.

**Hardware-Strombegrenzung**

Sowohl ein zu hoher Antriebsstrom i_2 als auch ein zu hoher Bremsstrom i_2' können die Gleichstrommaschine 32 beschädigen oder zerstören. Daher ist der Messwiderstand 87 (vgl. Fig. 1) in dem Gleichstromzwischenkreis vorgesehen. An ihm wird der Antriebsstrom i_2 bzw. der Bremsstrom i_2' gemessen.

Die Strombegrenzung gemäß Fig. 6 und 8 beruht auf einem Vergleich zwischen einem ersten Signal (z.B. dem Signal am Eingang 138 des Komparators 137, welches durch das Signal PWM_I+ beeinflussbar ist), das bevorzugt in Form eines geglätteten analogen Werts vorliegt, und einem zweiten Signal , das in Form von Impulsen vorliegt, (z.B. dem Signal am Eingang 140 des Komparators 137, welches von dem Antriebsstrom i_2 abgeleitet wird).

Auch das erste Signal wird bevorzugt von einem impulsförmigen Signal (PWM_I+) abgeleitet, sofern ein digitaler Regler verwendet wird.

Als zweites Signal wird bei Fig. 6 und 8 ein impulsförmiges Signal verwendet, das von den Motorstromimpulsen i_2 bzw. i_2' abgeleitet ist. Die Höhe der Motorstromimpulse i_2 bzw. i_2' entspricht der Höhe des Wicklungsstroms i_3 (vgl. Beschreibung zu Fig. 4). Es wäre auch möglich, die Stromimpulse i_2 bzw. i_2' vor dem Vergleich zu glätten und als analoges zweites Signal zuzuführen. Durch die Glättung geht aber ein Teil der Informationen bezüglich der Höhe des Wicklungsstroms i_3 verloren.

Das Signal PWM2, welches das Ein- und Ausschalten der getakteten Endstufe und damit den Strom i_2 bzw.

i_2' bestimmt, wird durch das Potenzial an einem Punkt 156 (Fig. 6 und 8) gesteuert, und dieses Potenzial wird unter anderem durch einen analogen Stellwert SWA1 bestimmt. Die Strombegrenzungsanordnung ändert das am Punkt 156 vorliegende Potenzial, wenn der Strom i_2 bzw. i_2' zu groß wird. Diese Änderung ist außerordentlich schnell, weshalb sie gemäß der Erfindung auch für Regelaufgaben eingesetzt werden kann.

**Fig. 6** zeigt die Strombegrenzungsanordnung 131 für den durch den Messwiderstand 87 fließenden, impulsförmigen Antriebsstrom i_2. Sie ist nur wirksam, wenn der Strom i_2 die dargestellte Richtung hat (Motor 32 treibt an) und wird deshalb als "positive" Strombegrenzung bezeichnet. Ihre Funktion ist es, das Tastverhältnis des Signals PWM2 sofort zu verkleinern, wenn der Strom i_2 größer als ein Wert wird, der durch das Tastverhältnis des Signals PWM_I+ vorgegeben wird, und dadurch den Strom i_2 auf den eingestellten Wert zu begrenzen.

Wie Fig. 6 zeigt, erzeugt der Regler 24 ein PWM-Signal PWM_I+. Ferner erzeugt er an seinem Ausgang 157 ein PWM-Signal PWM1, das über einen Widerstand 158 einem Knotenpunkt 154 zugeführt wird, der über einen Kondensator 159 mit Masse GND verbunden ist. R 158 und C 159 bilden zusammen ein Integrierglied. Am Knotenpunkt 154 erhält man deshalb ein analoges Sollwertsignal SWA1, dessen Höhe von der Größe des Tastverhältnisses von PWM1 abhängt. Wenn PWM1 eine Amplitude von 5 V und ein Tastverhältnis von 100 % hat, liegt der Ausgang 157 ständig auf +5 V, und deshalb ist SWA1 = +5 V. Bei einem Tastverhältnis von 0 % liegt der Ausgang 157 ständig auf 0 V, und deshalb ist SWA1 = 0 V. Bei PWM1 = 50 % gilt SWA1 = 2,5 V. (Das Signal SWA1 könnte auch direkt als analoges Signal von dem Regler 24 ausgegeben werden.)

Der Knotenpunkt 154 ist über einen hochohmigen Widerstand 152 mit einem Knotenpunkt 156 verbunden, der mit dem Eingang eines Analog-PWM-Wandlers 182 (vgl. Fig. 12 und 13) verbunden ist, an dessen Ausgang man ein PWM-Signal PWM2 erhält, das gemäß Fig. 1 und 11 den Treiberstufen 50, 52, 54 zugeführt wird und die Höhe des Antriebs- oder Bremsstroms in der Statorwicklung 114 bestimmt.

Der Knotenpunkt 156 ist über einen Widerstand 150 mit einem Knotenpunkt 146 verbunden. Der Widerstand 150 ist niederohmiger als der Widerstand 152, vgl. die nachfolgende Tabelle. Ein kleiner Kondensator 148 liegt zwischen dem Punkt 146 und GND.

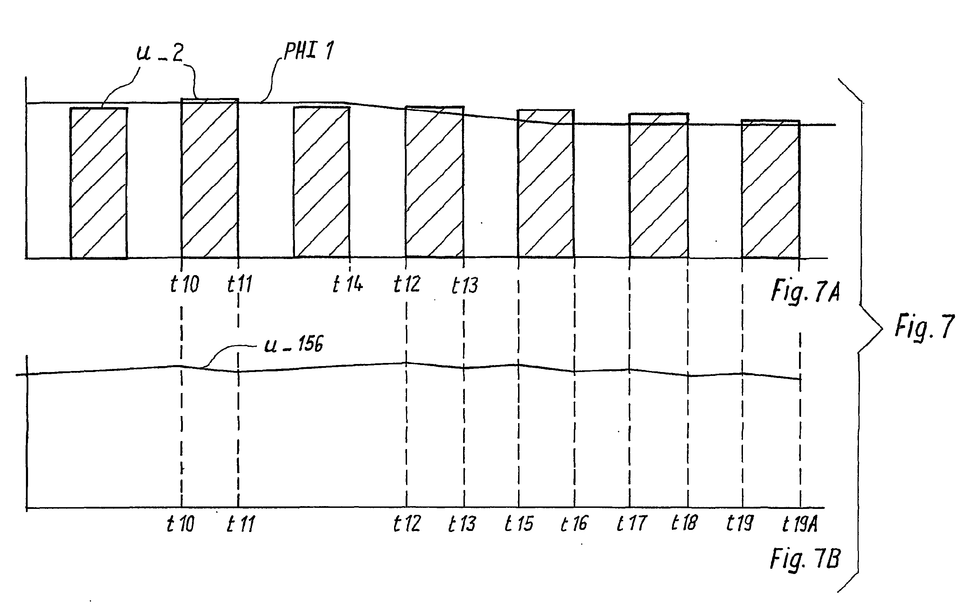

Wie die Fig. 6 und 7A zeigen, bewirken die Stromimpulse i_2 des Motorstroms positive Spannungsimpulse u_2 am negativen Eingang 140 des Komparators 137, während am positiven Eingang 138 ein analoges Potenzial PHI1 liegt, dessen Höhe durch das (variable) Tastverhältnis PWM_I+ bestimmt wird.

Haben die Stromimpulse i_2 im Messwiderstand 87 eine Amplitude, die höher ist als der durch PWM_I+ vorgegebene Sollwert PHI1, so wird PWM2 dadurch reduziert, dass der Ausgang 142 des Komparators 137 auf Masse gezogen wird. Dieser Ausgang 142 ist über einen Widerstand 144 mit dem Knotenpunkt 146 verbunden.

Der Minus-Eingang 140 des Komparators 137 ist über einen Widerstand 130 mit dem Knotenpunkt 88 am Messwiderstand 87 verbunden. Außerdem liegt ein kleiner Siebkondensator 132 (z.B. 1 nF) zwischen dem Minuseingang 140 und Masse GND, um Störsignale vom Messwiderstand 87 auszufiltern. Der Siebkondensator 132 dient in diesem Auführungsbeispiel also nicht zur Mittelwertbildung des Motorstroms i_2, sondern zur Filterung von Spitzen (Spikes) am Anfang jedes Impulses; deshalb ist dieser Kondensator nur sehr klein. Der Messwiderstand 87 ist hier so ausgelegt, dass beim maximal zulässigen Strom i_2 an ihm ein Spannungsabfall von ca. 200 mV auftritt.

Einem Eingang 304 des Strombegrenzers 131 wird vom Regler 24 das PWM-Signal PWM_I+ zugeführt, das zwischen einem positiven Potenzial von +5 V und Massepotenzial GND alterniert. Zwischen diesem Eingang 304 und einem Knotenpunkt 311 liegt ein Widerstand 310, und zwischen dem Knotenpunkt 311 und Masse GND liegt ein Kondensator 312. Je nach dem Tastverhältnis des Signals PWM_I+ stellt sich also am Knotenpunkt 311 eine Gleichspannung ein, die z.B. beim Tastverhältnis 100 % +5 V beträgt und mit sinkendem Tastverhältnis abnimmt.

Da die maximale Spannung u_2 am Messwiderstand 87 hier ca. 0,2 V beträgt, wäre eine Spannung von +5 V am Pluseingang 138 des Komparators 137 zu hoch. Deshalb liegt zwischen dem Knotenpunkt 311 und dem Pluseingang 138 ein Widerstand 314, und zwischen dem Pluseingang 138 und Masse ein Widerstand 136. Die Widerstände 311, 314, 136 bilden einen Spannungsteiler, der das Potenzial PHI1 am Pluseingang 138 bestimmt. PHI1 wird also bestimmt durch das Tastverhältnis des Signals PWM_I+, und der Spannungsteiler 311, 314, 136 ist so gewählt, dass auch beim Tastverhältnis 100 % der maximale Strom i_2 nicht überschritten werden kann, der für den Motor 32 zulässig ist, z.B. 5 A.

Die Fig. 7A und 7B erläutern die Wirkungsweise von Fig. 6. Steigt in Fig. 7A ein Impuls u_2 zwischen den Zeitpunkten t10 und t11 über einen Wert hinaus an, der durch das augenblickliche Potenzial PHI1 am Pluseingang 138 vorgegeben ist, so schaltet der Komparator 137 zwischen den Zeitpunkten t10 und t11 um. Dabei wird sein bisher hochohmiger Ausgang 142 intern mit Masse GND verbunden, so dass zwischen t10 und t11 über den Widerstand 144 ein Entladestrom vom Kondensator 148 nach Masse GND fließt und folglich das Potenzial am Punkt 146 abnimmt. Dadurch wird auch das Potenzial u_156 am Punkt 156 reduziert, vgl. Fig. 7B, und das analoge Eingangssignal des Analog-PWM-Wandlers 182 sinkt, so dass das Tastverhältnis des Signals PWM2 abnimmt. PWM2 bestimmt die Amplitude der Impulse i_2. Deshalb nimmt diese Amplitude ab und wird auf den Wert begrenzt, der durch PWM_I+ vorgegeben ist.

Anschließend bleibt in Fig. 7A zwischen t11 und t12 das Potenzial PHI1 dauernd größer als u_2, so dass in diesem Zeitraum das Potenzial u_156 und damit die Amplitude der Stromimpulse i_2 ansteigt, vgl. Fig. 7B. Die Steigung des Anstiegs hängt von der Größe des eingestellten Werts von PWM1 ab. Aus diesem Grund wird bei bestimmten Betriebsarten ein hoher Wert von PWM1 eingestellt.

Ab t14 wird bei diesem Beispiel der Wert PHI1 dadurch verringert, dass das Tastverhältnis PWM_I+ langsam abgesenkt wird. Deshalb ist zwischen t12 und t13 die Amplitude u_2 größer als PHI1, so dass der Ausgang 142 auf Masse geschaltet wird und folglich das Potenzial u_156 am Knotenpunkt 156 abnimmt, wie in Fig. 7B dargestellt. Dasselbe geschieht zwischen den Zeitpunkten t15 und t16, den Zeitpunkten t17 und t18, sowie den Zeitpunkten t19 und t19A.

Die Folge ist, dass das Potenzial u_156 mit einer geringen Verzögerung dem Sollwert PHI1 folgt, welcher seinerseits durch den (variablen) Wert PWM_I+ vorgegeben wird, und da u_156 die Spannung an der Statorwicklung 114 und damit die Amplitude des Motorstroms i_2 bestimmt, sinkt der Motorstrom i_2 entsprechend und wird folglich durch das Signal PWM_I+ festgelegt.

Wie man ohne weiteres erkennt, könnten bei einer solchen Anordnung die Signale PWM_I+ und PWM1 auch als analoge Signale vorgegeben werden, doch haben digitale Signale den großen Vorteil, dass sie mit digitaler Präzision in einem (oder mehreren) Mikroprozessoren sehr rasch berechnet, erzeugt und geändert werden können.

Da der Widerstand 150 wesentlich kleiner ist als der Widerstand 152, hat das Potenzial des Punktes 146 Vorrang vor dem Potenzial SWA1 des Punktes 154, so dass bei einem zu hohen Strom i_2 das Potenzial u_156 am Punkt 156 sofort erniedrigt wird, auch wenn PWM1 hoch ist.

Folglich kann durch Einstellen des Tastverhältnisses des Signals PWM_I+ der maximal zulässige Strom i_2 sehr bequem im Rahmen des Verstellbereichs der Strombegrenzungsanordnung 131 eingestellt werden, also z.B. von 0...5 A, wenn der maximal zulässige Strom i_2 5 A beträgt. Je kleiner das Tastverhältnis PWM_I+ ist, umso kleiner wird der Strom i_2, bei dem die Strombegrenzung einsetzt.

Die Strombegrenzungsanordnung 131 kann dazu benutzt werden, durch Verändern des Wertes PWM_I+ die Drehzahl des Motors 32 zu regeln. Wenn der Motor 32 eine Last antreibt, wird in diesem Fall PWM1 ständig auf einen hohen Wert gesetzt, z.B. auf 100 %.

Wenn der Motor 32 eine Last bremst, was bei Fig. 8 erläutert wird, wird PWM1 auf einen drehzahlabhängigen Wert eingestellt, z.B. auf 0 % bei der Drehzahl 0, auf 50 % bei 10.000 U/min, und dazwischen auf linear veränderliche Zwischenwerte.

Die Strombegrenzungsanordnung 131 kann auch dazu verwendet werden, den Strom im antreibenden Motor 32 auf einen konstanten Wert zu regeln, wobei auch in diesem Fall PWM1 auf 100 % gesetzt wird. PWM_I+ wird in diesem Fall auf einen konstanten Wert eingestellt, und der Motor 32 liefert dann in einem größeren Drehzahlbereich ein konstantes Antriebsmoment, vgl. die Kurve 796 in Fig. 36.

Die Anordnung 131 kann auch in üblicher Weise dazu dienen, den Motorstrom i_2 auf einen maximal zulässigen Wert zu begrenzen, z.B. auf 5 A, wobei PWM_I+ in diesem Fall auf seinen maximalen Wert eingestellt und die Drehzahl n durch Veränderung des Signals PWM1 geregelt wird.

Falls der Motor 32 nur zum Antrieb und nicht zum Bremsen verwendet wird, kann die Strombegrenzungsanordnung 161 (Fig. 8) entfallen. In diesem Fall kann der Motor mit einseitiger Taktung betrieben werden, wie vorstehend beschrieben. Alternativ kann auch in diesem Fall eine wechselseitige Taktung verwendet werden, die hinsichtlich des Wirkungsgrads besondere Vorteile hat.

**Fig. 8** zeigt die "negative" Strombegrenzungsanordnung 161. Ihre Funktion ist es, das Tastverhältnis des Signals PWM2 zu erhöhen, wenn der Bremsstrom i_2' höher als ein Wert ist, der durch das Tastverhältnis des Signals PWM_I-vorgegeben wird. In der nachfolgenden Beschreibung von Fig. 8 werden für gleiche oder gleich wirkende Teile wie in Fig. 6 dieselben Bezugszeichen verwendet. Zu diesen wird auf Fig. 6 verwiesen.

Hier sind folgende Zusammenhänge zu beachten:

| | | |
|---|---|---|
| Maximaler Bremsstrom: | PWM_I- = 0 % | ... (4) |
| Minimaler Bremsstrom: | PWM_I- = 100 % | ... (5) |

Der maximale Bremsstrom betrug bei diesem Beispiel 5 A, der minimale 0 A.

Die Anordnung 161 der Fig. 8 enthält einen Komparator 167, dessen Ausgang 172 mit der Anode einer Diode 176 verbunden ist, deren Katode an den Punkt 146 angeschlossen ist. Ferner ist der Ausgang 172 über einen Widerstand 174 mit der geregelten Spannung +Vcc (hier: +5 V) verbunden. Vcc ist auch über einen Widerstand 162 mit dem Minus-Eingang 170 des Komparators 167 verbunden, der über einen Widerstand 160 mit dem Knotenpunkt 88 und über einen kleinen Kondensator 163 mit Masse GND verbunden ist.

Der Plus-Eingang 168 des Komparators 167 ist über einen Widerstand 166 mit Masse und direkt mit einem Knotenpunkt 324 verbunden, der über einen Kondensator 322 mit Masse und über einen Widerstand 320 mit einem Eingang 308 verbunden ist, dem das Signal PWM_I- zugeführt wird. In Verbindung mit den Widerständen 166 und 320 dient der Kondensator 322 als Tiefpassfilter.

Wie bereits bei Fig. 6 beschrieben, wird der analoge Stellwert SWA1 am Punkt 154 über den hochohmigen Widerstand 152 dem Punkt 156 zugeführt. Durch das Potenzial u_156 am Punkt 156 wird die Bestromung der Statorwicklung 114 und damit auch der Strom durch den Messwiderstand 87 bestimmt. Ist dieser Strom negativ, so wird von einem Bremsstrom i_2' gesprochen. Steigt dieser Bremsstrom über einen Wert hinaus an, der durch das Tastverhältnis von PWM_I- bestimmt ist, so zieht die Strombegrenzung 161 das Potenzial am Punkt 156 sofort so weit nach oben und erhöht dadurch PWM2 so weit, dass der Bremsstrom i_2' maximal den durch PWM_I- vorgegebenen Wert annehmen kann.

Vom Regler 24 wird dem Eingang 308 das Signal PWM_I- zugeführt. Die Amplitude der Impulse von PWM_I- beträgt +5 V.

Bei maximalem Bremsstrom i_2' (hier: 5 A) beträgt die Spannung u_2' am Messwiderstand 87 hier ca. 0,2 V, d.h. der Punkt 88 ist dann 0,2 V negativer als GND. Beim Bremsstrom Null hat der Punkt 88 Massepotenzial.

Dementsprechend ergeben sich durch den Spannungsteiler, der von den Widerständen 160 (z.B. 1 kΩ) und 162 (z.B. 22 kΩ) gebildet wird, am Minuseingang 170 des Komparators 167 die folgenden Potenziale:

Bei einer Amplitude des Bremsstroms von 0 A:

$$5 \text{ V}/23 = 0{,}22 \text{ V} \qquad\qquad \text{... (6)}$$

Bei einer Amplitude des Bremsstroms von 5 A:

$$-0{,}2 \text{ V} + 5{,}2 \text{ V}/23 = +0{,}02 \text{ V} \qquad\qquad \text{... (7)}$$

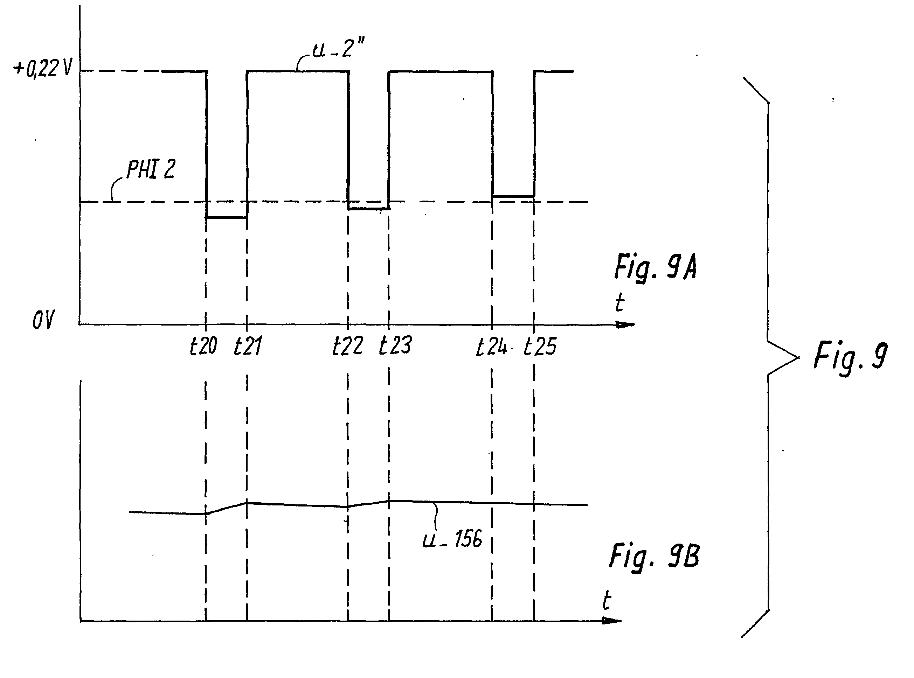

Fig. 9A zeigt typische Potenzialverläufe u_2" am Minuseingang 170, wenn ein Bremsstrom 1_2' fließt. In den Impulspausen, z.B. zwischen t21 und t22, hat man dort ein Potenzial von etwa +0,22 V, und bei einem Bremsstromimpuls sinkt dieses Potenzial auf einen Wert, der umso niedriger ist, je höher die Amplitude des Bremsstromimpulses ist.

Das Potenzial PHI2 am Plus-Eingang 168 des Komparators 167 wird bestimmt vom Tastverhältnis des Signals PWM_I-, dessen Amplitude (hier: + 5 V), und dem Spannungsteilerverhältnis der Widerstände 320 (z.B. 22 kΩ) und 166 (z.B. 10 kΩ).

Bei einem Tastverhältnis des Signals PWM_I- von 0 % (entsprechend einem maximalen Bremsstrom) hat man am Eingang 308 die Spannung 0 V, und folglich beträgt auch das Potenzial PHI2 am Plus-Eingang 168 0 V.

Beim Tastverhältnis 100 % liegt am Eingang 308 ständig eine Spannung von +5 V, und durch den Spannungsteiler 320, 166 ergibt sich ein Potenzial PHI2 von

$$(5 \text{ V}* 10 \text{ k}\Omega)/(10 \text{ k}\Omega + 220 \text{ k}\Omega) = 5 \text{ V}/23 = 0{,}22 \text{ V} \qquad\qquad \text{... (8)}$$

Mit ansteigendem Tastverhältnis des Signals PWM_I-, also abnehmendem Bremsstrom, steigt das Potenzial PHI2 von 0 V auf + 0,22 V an. In Fig. 9A ist ein Potenzial PHI2 von etwa 0,1 V beispielhaft dargestellt, welches bei diesem Beispiel einem Soll-Bremsstrom von ca 2,6 A entsprechen würde.

Wenn das Potenzial am Minus-Eingang 170 positiver ist als das Potenzial PHI2 am Plus-Eingang 168, ist der Ausgang 172 des Komparators 167 intern mit Masse verbunden. Dadurch sperrt die Diode 176, und das Potenzial der Punkte 146 und 156 wird durch einen Strom zum Punkt 154 reduziert. Der Punkt 154 hat in diesem Fall ein niedriges Potenzial, z.B. bei PWM1 = 0 % ein Potenzial von 0 V. (PWM1 ist beim Bremsen bevorzugt drehzahlabhängig und steigt mit steigender Drehzahl z.B. von 0 % auf 50 % an.)

Überschreitet der augenblickliche Wert des Bremsstroms i_2' den Wert PHI2, der durch das Tastverhältnis von PWM_I- vorgegeben wird, so wird der Eingang 170 negativer als der Eingang 168, und der Ausgang 172 wird hochohmig. Dies ist z.B. in Fig. 9A zwischen t20 und t21 der Fall, ebenso zwischen t22 und t23.

Während dieser Zeitintervalle fließt ein Strom von +Vcc über den Widerstand 174, die Diode 176 und den Widerstand 150 zum Knotenpunkt 156, so dass das Potenzial u_156 während dieser Zeitintervalle ansteigt, wie in Fig. 9B dargestellt, wodurch das Tastverhältnis des Signals PWM2 ansteigt und die Amplitude der Bremsstromimpulse - infolge der Änderung des Tastverhältnisses PWM2 - so weit abnimmt, dass das Potenzial des Eingangs 170 nicht mehr negativer wird als das Potenzial PHI2 des Punktes 168. Dies ist in Fig. 9 z.B zwischen t24 und t25 der Fall. Der Ausgang 172 wird dann auch während dieser Zeitintervalle mit Masse GND verbunden, und die Diode 176 sperrt, so dass das Potenzial u_156 abnimmt, weil ein Strom vom Punkt 156 zum Punkt 154 fließt. - Der (kleine) Kondensator 148 verhindert abrupte Spannungsänderungen am Punkt 146. Der Widerstand 174 ist kleiner als der Widerstand 152, so dass die Strombegrenzung 161, die den Kondensator 148 auflädt, Vorrang vor dem Wert SWA1 am Punkt 154 hat. - Der kleine Kondensator 163 verhindert, dass kurze Störimpulse (Spikes) den Komparator 167 beeinflussen.

Die Höhe des zulässigen Bremsstroms $i\_2'$ wird also durch das Tastverhältnis des Signals PWM_I- direkt beeinflusst, und der Bremsstrom kann den Wert nicht überschreiten, der durch dieses Tastverhältnis vorgegeben wird. Durch die schnelle Arbeitsweise der Anordnungen nach Fig. 6 und 8 können diese sehr gut für Regelaufgaben verwendet werden, wie das nachfolgend beschrieben wird.

Bei der "negativen" Strombegrenzung durch die Strombegrenzungsanordnung 161 (Fig. 8) muss für PWM2 ein minimales Tastverhältnis SW_MIN_CONST von z.B. 15 % eingehalten werden, da unterhalb dieses Wertes die durch den Messwiderstand 87 fließenden Stromimpulse so kurz werden, dass keine Messung mehr möglich ist. Hierdurch wird der Drehzahlbereich des Motors nach unten eingeschränkt. Es gibt jedoch Möglichkeiten, diese Einschränkung des Drehzahlbereichs dadurch zu umgehen, dass man die Software entsprechend auslegt, vgl. die nachfolgende Beschreibung.

Bei der "positiven" Strombegrenzungsanordnung 131 tritt dieses Problem nicht auf, da bei einem sehr kleinen Tastverhältnis nur ein niedriger Antriebsstrom $i\_2$ auftritt. Dagegen könnten bei einem kleinen Tastverhältnis und einer zu hohen Drehzahl n des Motors 32 sehr große Bremsströme $i\_2'$ fließen, was durch entsprechende Maßnahmen verhindert werden muss. Deshalb erhöht man PWM1 bei bremsendem Motor mit steigender Drehzahl, wie bereits beschrieben.

Wenn man mit einem variablen Wert für PWM_I+ bzw. PWM_I- arbeitet, hat der Geber für PWM1 die Funktion einer digital steuerbaren Spannungsquelle und könnte naturgemäß auch durch eine andere steuerbare Spannungsquelle, oder eine umschaltbare Spannungsquelle, ersetzt werden.

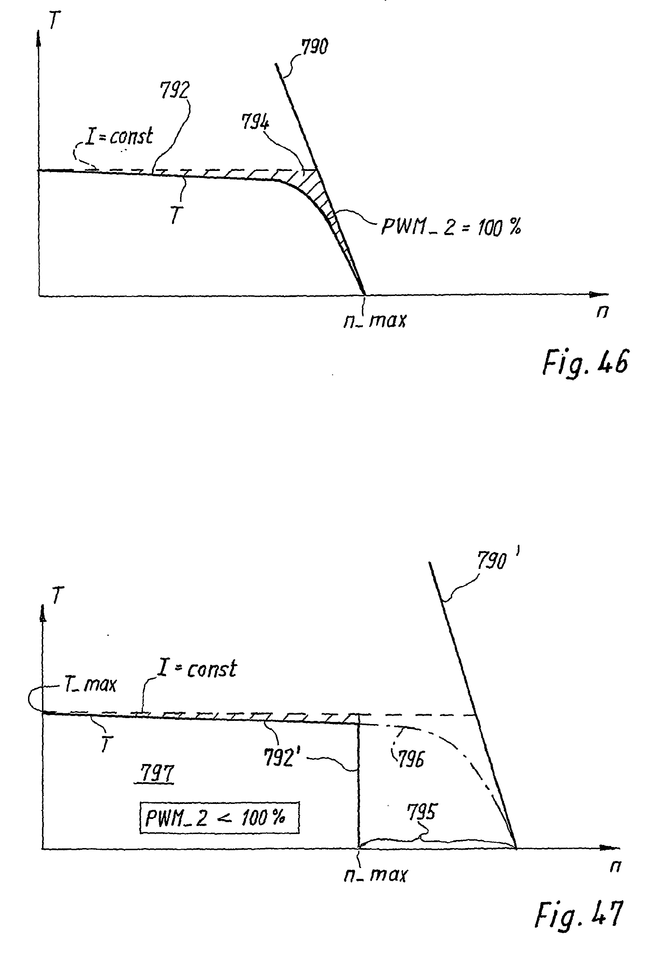

Fig. 46 zeigt für einen konventionellen Gleichstrommotor, z.B. einen Kollektormotor, eine Darstellung des Drehmoments T über der Drehzahl n. Wird der Motor nicht geregelt, so erreicht er im Leerlauf eine Drehzahl n_max. Mit zunehmendem Drehmoment nimmt die maximale Drehzahl etwa längs einer Geraden 790 ab, die man als Motorkurve bezeichnen kann. Wie dargestellt, geht bei diesem Motor die Drehmoment-Drehzahl-Kennlinie 792 asymptotisch in die Motorkurve 790 über. Dadurch ergibt sich ein schraffiert eingezeichneter Bereich 794, in welchem kein Betrieb des Motors möglich ist. Die Motorkurve 790 wird erreicht, wenn der Motorstrom $i\_2$ ununterbrochen fließt, wenn also PWM2 = 100 % ist.

Fig. 47 zeigt eine bevorzugte Motorauslegung gemäß der Erfindung. Durch elektronische Maßnahmen, wie sie bei den vorhergehenden Figuren beschrieben wurden, ist die maximale Drehzahl n_max auf einen Wert links von der Motorkurve 790' festgelegt, d.h. zwischen diesem Wert und der Motorkurve 790' liegt ein Bereich 795, der nicht benutzt wird, weil der Betrieb in diesem Bereich gewöhnlich zu einer Überlastung des Motors 32 führen würde. Der Motor 32 arbeitet nur in einem Bereich 797, der durch T_max und n_max definiert ist.

Die Drehmoment-Drehzahl-Kennlinie 792' hat folglich den Verlauf gemäß Fig. 47, d.h. bis zur vorgegebenen Drehzahl n_max bringt der Motor praktisch sein volles Drehmoment T_max, weil der (strichpunktiert angedeutete) abfallende Ast 796 der Drehmoment-Drehzahl-Kennlinie nicht verwendet wird.

Das Arbeiten in einem Abstand 795 von der Motorkurve 790' hat zur Folge, dass der Motorstrom $i\_2$ ständig begrenzt werden muss, weil die induzierte Spannung des Motors 32 relativ niedrig ist und Motorstrom und Motordrehzahl deshalb ständig das Bestreben haben, bis zur Kennlinie 790' anzusteigen. Dies bedeutet, dass das Tastverhältnis PWM2 des antreibenden Motorstroms $i\_2$ ständig kleiner als 100 % gehalten werden muss, wie in Fig. 47 angegeben, d.h. der Motorstrom $i\_2$ hat ständig die Form von Stromimpulsen mit einer Frequenz von z.B. 20 bis 25 kHz. Der Motor 32 verhält sich dann - bildlich gesprochen - wie eine komprimierte Feder, d.h. seine Drehzahl hätte an sich (bei PWM2 = 100 %) das Bestreben, entlang der Kennlinie 796 bis zur Motorkurve 790' anzusteigen, wird aber daran durch die Elektronik des Motors 32 gehindert. Deshalb hat der Motor 32 in dem Bereich 797 bis zur zulässigen Drehzahl n_max seine volle Leistung, und bei Betrieb mit konstantem Strom (I = const) ergibt sich praktisch ein konstantes Drehmoment T zwischen der Drehzahl 0 und der Drehzahl n_max.

Vorteilhaft ist hierbei, dass gemäß Fig. 19B der Strom durch einen Strang des Motors 32 nach der Kommutierung (bei K) gemäß einem Kurvenabschnitt 338 sehr rasch auf den eingestellten Maximalstrom I_max ansteigt, bis zur nächsten Kommutierung K' auf diesem Wert bleibt, und danach rasch wieder auf 0 abfällt.

Durch den breiten Dachbereich Z mit im wesentlichen konstantem Strom erhält man eine exzellente Ausnutzung des Motors, nämlich ein im wesentlichen konstantes Drehmoment (entsprechend dem konstanten Strom I_max) bei ruhigem Lauf des Motors. Besonders vorteilhaft ist diese Ausführungsform dann, wenn der Rotor 110 des Motors 32 eine trapezförmige Magnetisierung hat, bei der die Lücken zwischen den Polen nur klein sind, vgl. die DE 23 46 380.

Zum Vergleich zeigt Fig. 19A die Form des Motorstroms bei Fig. 46 und PWM2 = 100 %. Hier ergibt sich eine starke Welligkeit des Stroms 335, und dadurch ergeben sich stärkere Schwankungen des Drehmoments, stärkere Motorgeräusche, und eine schlechtere Ausnutzung des Motors, weil nur während eines kleinen Prozentsatzes des in Fig. 19A dargestellten Stromblocks der volle Motorstrom I fließt. Die Fig. 19A und 19B zeigen diesen Unterschied mit großer Deutlichkeit. Dieser Unterschied ermöglicht es bei Fig. 19B, aus einem vorgegebenen Motor 32 ein höheres Drehmoment T und damit eine höhere Leistung herauszuholen. Ein zusätzlicher Vorteil ist, dass das Drehmoment hierbei sehr niedrige Schwankungen hat.

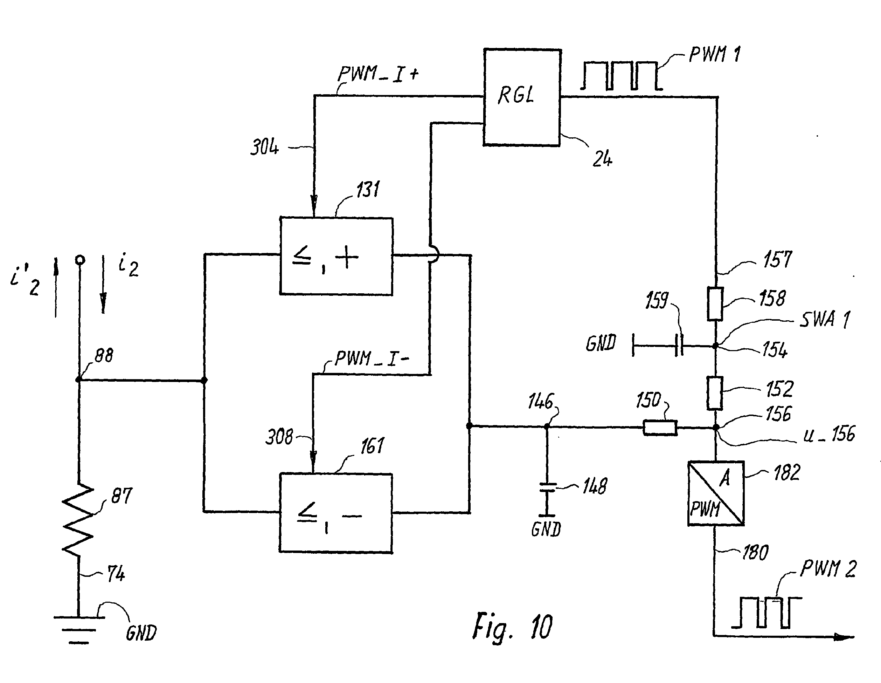

**Fig. 10** zeigt eine Kombination aus "positiver" Strombegrenzung 131 (Fig. 6) und "negativer" Strombegrenzung 161 (Fig. 8), welche zusammen das Potenzial an Punkt 156 so beeinflussen, dass der Motorstrom i_2 kleiner als ein durch PWM_I+ bestimmter Wert und der Bremsstrom i_2' kleiner als ein durch PWM_I- bestimmter Wert ist. Das Potenzial am Punkt 88 wird sowohl der positiven Strombegrenzung 131 als auch der negativen Strombegrenzung 161 zugeführt.

Die Ausgänge der Strombegrenzungen 131 und 161 sind beide an den Kondensator 148 angeschlossen.

Findet keine Strombegrenzung durch die Strombegrenzer 131 oder 161 statt, so wird der kleine Kondensator 148, der wichtig für das Potenzial an Punkt 156 ist, über die Widerstände 152 und 150 auf das Potenzial SWA1 am Punkt 154 aufgeladen. Wenn die Strombegrenzer 131 oder 161 nicht aktiv sind, wird das Potenzial am Punkt 156 also nur durch das Signal PWM1 von RGL 24 bestimmt.

Wird jedoch die positive Strombegrenzung 131 (Fig. 6) bzw. die negative Strombegrenzung 161 (Fig. 8) aktiv, so wird der Kondensator 148 (z.B. 100 pF) aufgeladen bzw. entladen, wie bereits beschrieben.

Beim Aufladen bzw. Entladen des Kondensators 148 hat die Hardware-Strombegrenzung Priorität vor dem Signal SWA1, da der Widerstand 144 (Fig. 6) zum Entladen des Kondensators 148 und der Pullup-Widerstand 174 (Fig. 8) zum Aufladen des Kondensators 148 viel kleiner als der Widerstand 152 sind. - Nach dem Ende eines Strombegrenzungsvorgangs wird der Kondensator 148 wieder auf das Potenzial von Punkt 154 aufgeladen.

**Bevorzugte Werte eines Ausführungsbeispiels**

Nachfolgend werden für das Ausführungsbeispiel der Fig. 6 bis 10 bevorzugte Werte für die Komponenten angegeben:

Widerstand 81 ... 41 mΩ
Widerstände 130, 144, 160 ... 1 kΩ
Widerstände 136, 150, 166 ... 10 kΩ
Widerstände 152, 310, 320 ... 220 kΩ
Widerstände 158, 162, 174 ... 22 kΩ
Wichtig erscheint, dass der Widerstand 150 wesentlich kleiner ist als der Widerstand 152, z.B. 5 % von R152.
Komparatoren 137, 167 ... LM2901
Kondensatoren 132, 163 ... 1 nF
Kondensator 148 ... 100 pF
Kondensatoren 159, 312, 322 ... 100 nF
Diode 176 ... 8AS216
A/D-Wandler 182 ... Fig. 12 zeigt eine mögliche Ausführung

Die Frequenzen aller Signale PWM1, PWM2, PWM_I+, PWM_I- lagen bei diesem Ausführungsbeispiel in der Größenordnung von 20 kHz.

Das Tastverhältnis PWM1 beim Bremsen ist bevorzugt drehzahlabhängig, z.B. 0 % beim Stillstand des Motors, 50 % bei 10.000 U/min, dazwischen linear ansteigend.

**Übersichtsdarstellung (Fig. 11)**

**Fig. 11** zeigt eine Übersicht über ein bevorzugtes Ausführungsbeispiel eines erfindungsgemäßen elektronisch kommutierten Motors 32.

Die dargestellte Anordnung enthält einen Mikroprozessor oder Mikrocontroller 23, im folgenden µC 23 genannt (z.B. PIC 16C72A von Microchip, gegebenenfalls mit zusätzlichen Bauteilen).

Die drei Rotorstellungssensoren 111, 112 und 113 sind seriell geschaltet und über einen Widerstand 64 mit +12 V und über einen Widerstand 65 mit Masse (GND) verbunden. Die Signale der Rotorstellungssensoren 111, 112 und 113 werden in Signalaufbereitern 61, 62 und 63 aufbereitet und dem µC 23 als Hallsignale HS1, HS2 und HS3 zugeführt, die in Fig. 15 schematisch dargestellt sind.

Drei Potentiometer 43, 45, 47 sind jeweils zwischen der Spannung +Vcc und Masse (GND) geschaltet. Die durch die Potentiometer 43, 45 und 47 einstellbaren Potenziale werden drei analogen Eingängen 44, 46 und 48 des µC 23 zugeführt.Der µC 23 weist einen A/D-Wandler 30 auf. Zwei Steuerkanäle IN_A und IN_B des µC 23 können über einen Schalter 41 bzw. 42 mit einem Potenzial +5 V verbunden werden.

Der Bus 18 (Fig. 1) ist an den μC 23 angeschlossen, und das EEPROM 20 (nichtflüchtiger Speicher) ist über einen Bus 19 an den μC 23 angeschlossen.

Die Betriebsspannung +U_B des Motors 32 wird am Punkt 76 (Fig. 1) abgegriffen und dem Eingang 68 des μC 23 über zwei als Spannungsteiler geschaltete Widerstände 66 und 67 zugeführt.

Der μC 23 ist über die Ausgänge EN1, IN1 mit der Treiberstufe 50, über die Ausgänge EN2, IN2 mit der Treiberstufe 52, und über die Ausgänge EN3, IN3 mit der Treiberstufe 54 verbunden. Die Treiberstufen 50, 52 und 54 sind ihrerseits mit der Endstufe 78 (Fig. 2) verbunden.

Ein PWM-Generator 182 (Fig. 12, 13) erzeugt ein Signal PWM2 180, welches den Treiberstufen 50, 52 und 54 zugeführt wird. Sein Ausgang 180 ist über einen Widerstand 184 mit +5 V und über eine Zenerdiode 186 mit Masse (GND) verbunden. Letztere begrenzt die Amplitude des Signals PWM2 180, und der Widerstand 184 dient als Pullup-Widerstand für den Open-Collector-Ausgang des PWM-Generators 182.

Der μC 23 weist den Regler RGL 24 und drei durch diesen steuerbare PWM-Generatoren 25, 27 und 29 auf.

Der PWM-Generator 25 hat einen Ausgang PWM1 157, welcher über das aus dem Widerstand 158 und dem Kondensator 159 gebildete RC-Glied und den Widerstand 152 mit dem Punkt 156 verbunden ist.

Der PWM-Generator 27 hat einen Ausgang PWM_I-, welcher über die Leitung 308 mit der negativen Strombegrenzung 161 (Fig. 8) verbunden ist.

Der PWM-Generator 29 hat einen Ausgang PWM_I+, der über die Leitung 304 mit der positiven Strombegrenzung 131 (Fig. 6) verbunden ist.

Der Punkt 88 am Messwiderstand 87 ist mit der positiven Strombegrenzung 131 und der negativen Strombegrenzung 161 verbunden.

Die positive Strombegrenzung 131 und die negative Strombegrenzung 161 sind über den gegen Masse (GND) geschalteten Kondensator 148 und den Widerstand 150 mit dem Punkt 156 verbunden, wie in Fig. 6, 8 und 10 ausführlich erläutert.

### Arbeitsweise

Die Treiberstufen 50, 52 und 54 steuern die Brückenzweige in der Endstufe 78, über die die Statorwicklungen 114 bestromt werden ( Fig. 2).

Die Treiberstufen 50, 52 und 54 werden zum einen durch den μC 23 über die Leitungen EN1, IN1, EN2, IN2, EN3 und IN3 und zum anderen über das Signal PWM2 180 gesteuert.

Die Signale EN1, IN1, EN2, etc. steuern, welche der Statorwicklungen 114 bestromt werden (vgl. Beschreibung zu Fig. 2 und 3).

Das Signal PWM2 180 steuert, wie groß der Strom ist, der durch die Motorwicklungen fließt (vgl. Beschreibung zu Fig. 4).

Der μC 23 erhält über die Rotorlagegeber 111, 112 und 113 drei Rotorstellungssignale HS1, HS2 und HS3, aus denen er die Lage des Rotors 110 und damit die notwendige Kommutierung über die Ausgänge EN1, IN1, EN2 etc. bestimmen kann.

Der μC 23 weist den Regler RGL 24 auf, welcher über den PWM-Generator 25 das Signal PWM1, über den PWM-Generator 27 das Signal PWM_I- und über den PWM-Generator 29 das Signal PWM_I+ steuert.

Das Signal PWM1 wird über den aus dem Widerstand 158 und dem Kondensator 159 gebildeten Tiefpass zu einem analogen, geglätteten Signal SWA1 umgeformt (transformiert) und über den Widerstand 152 dem Punkt 156 zugeführt, der mit dem PWM-Generator 182 verbunden ist. Das Potenzial am Punkt 156 bestimmt deshalb das Tastverhältnis des Signals PWM2, welches den Strom durch die Statorwicklungen 114 steuert.

Ein größeres Tastverhältnis des Signals PWM1 erhöht das Tastverhältnis PWM2 und damit den Strom i_2 durch die Statorwicklungen. Das Signal PWM1 wird also über den Tiefpass 152, 158, 159 und den PWM-Generator 182 in ein PWM-Signal PWM2 "transformiert". Diese "Transformation" wird beeinflusst durch die beiden Strombegrenzungen 131, 161, sofern diese aktiv sind.

Das Signal PWM_I+ steuert die Schwelle, ab der die positive Strombegrenzung 131 aktiv wird, und das Signal PWM_I- steuert die Schwelle, ab der die negative Strombegrenzung 161 aktiv wird.

Wenn der Motorstrom i_2 größer als der durch das Signal PWM_I+ steuerbare Schwellwert der positiven Strombegrenzung 131 ist, wird das Potenzial u_156 so weit reduziert, bis der Motorstrom i_2 wieder unter dem Schwellwert ist.

Wenn der Bremsstrom i_2' größer als der durch das Signal PWM_I- steuerbare Schwellwert der negativen Strombegrenzung 161 ist, wird das Potenzial u_156 so weit angehoben, bis der Bremsstrom i_2' wieder unter dem Schwellwert ist.

Dabei hat sowohl die positive Strombegrenzung 131 als auch die negative Strombegrenzung 161 an Punkt 156 Vorrang vor dem durch PWM1 gesteuerten analogen Signal SWA1 (vgl. Fig. 6, 8, 10).

Der Regler RGL 24 des µC 23 hat mehrere Möglichkeiten, den Motor 32 zu regeln:

Eine Möglichkeit besteht darin, die Drehzahl des Rotors 110 über den PWM-Generator 25 (Fig. 11) und das Signal PWM1 zu regeln, und die Signale PWM_I+ und PWM_I- zur Steuerung der positiven und negativen Strombegrenzung 131, 161 auf einen konstanten Wert zu setzen, damit die Strombegrenzung 131, 161 bei zu großen Strömen i_2 bzw. i_2' aktiv wird und eine Beschädigung des Motors 32 verhindert. In diesem Fall ist also PWM1 variabel; PWM_I+ wird z.B. auf 100 % gesetzt, und PWM_I- z.B. auf 0 %.

Über die drei Potentiometer 43, 45 und 47 können dem µC 23 analoge Stellgrößen zugeführt werden. Die Potenziale an den Eingängen 44, 46 und 48 können über den A/D-Wandler 30 digitalisiert und als Stellwertvariablen, z.B. für einen Drehzahlsollwert n_s, gespeichert werden.

Die beiden Eingänge IN_A und IN_B des µC 23 können über die Schalter 41 und 42 auf HIGH (Schalter geschlossen) oder LOW (Schalter offen) gestellt werden, um z.B. einen Betriebsmodus MODE des µC 23 einzustellen.

Über den Bus 18 kann der µC 23 mit anderen Geräten, z.B. einem PC oder einer Steuereinrichtung verbunden werden, um z.B. Steuerbefehle und Daten in beide Richtungen auszutauschen, oder Daten in das EEPROM 20 zu schreiben oder aus diesem zu lesen. Das EEPROM 20 (nichtflüchtiger Speicher) ist über den Bus 19 mit dem µC 23 verbunden, und der µC 23 kann z.B. Betriebsparameter aus dem EEPROM 20 lesen bzw. in das EEPROM 20 schreiben.

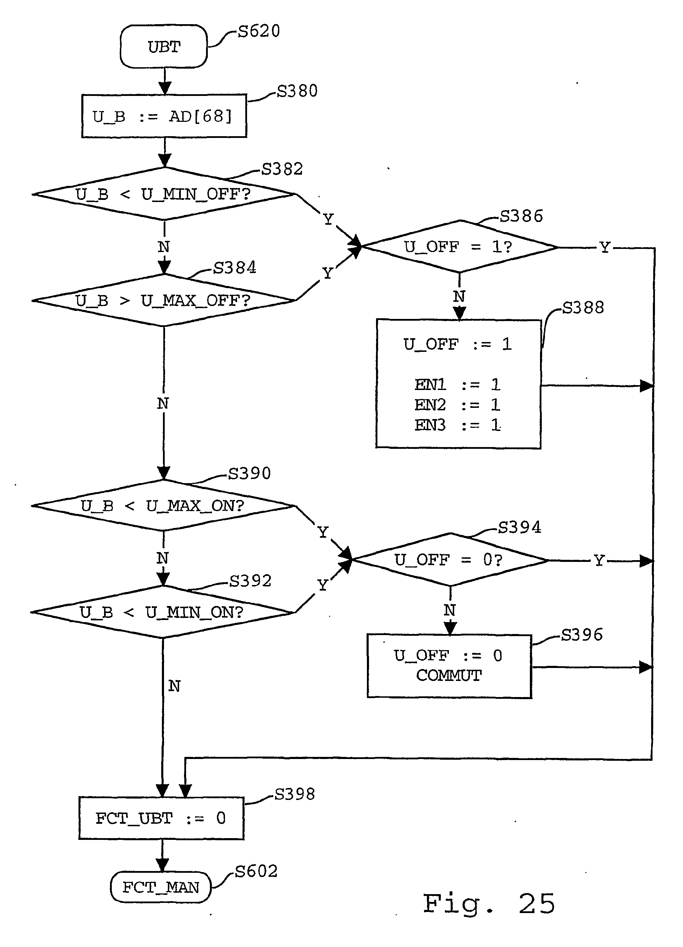

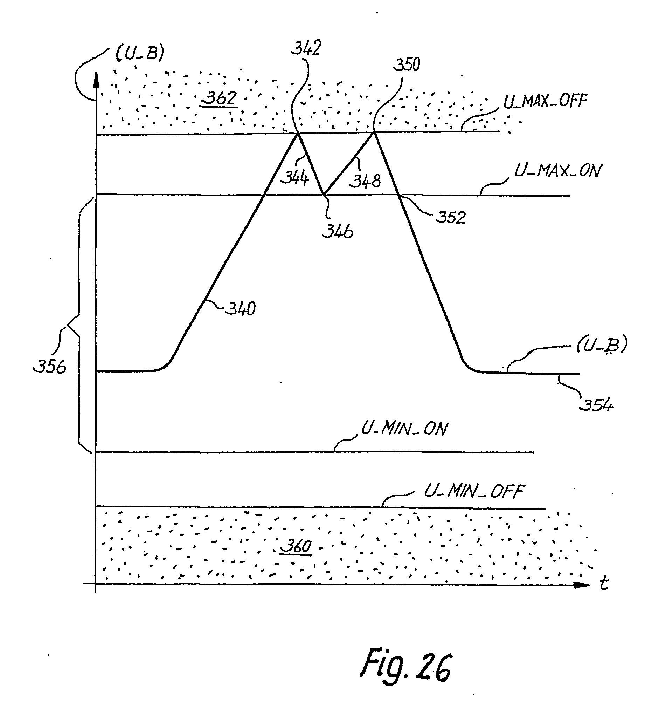

Die Betriebsspannung +U_B des Motors 32 wird am Punkt 76 (Fig. 1) abgegriffen und dem µC 23 über die beiden als Spannungsteiler arbeitenden Widerstände 66 und 67 zugeführt. In dem µC 23 wird das Potenzial am Punkt 68 durch den A/D-Wandler 30 digitalisiert. Die Widerstände 66, 67 transformieren die Betriebsspannung +U_B in einen für den A/D-Wandler 30 geeigneten Bereich. Der µC 23 hat somit die momentane Betriebsspannung +U_B zur Verfügung, um z.B. eine Spannungsüberwachung zu realisieren, vgl. Fig. 25 und 26.

**PWM-Signalgenerator**

**Fig. 12** zeigt beispielhaft eine bekannte Schaltung für den PWM-Generator 182. Gleiche oder gleich wirkende Teile wie in den vorhergehenden Figuren sind mit denselben Bezugszeichen bezeichnet wie dort und werden gewöhnlich nicht nochmals beschrieben.

An dem Pluseingang eines Komparators 188 liegt der Stellwert u_156 in Form des Potenzials am Punkt 156 (Fig. 11) vor. An dem Minuseingang des Komparators 188 liegt ein durch einen Dreieckoszillator (Sägezahnoszillator) 183 erzeugtes Dreiecksignal 198 (Fig. 12 und 13).

Der Dreiecksoszillator 183 weist einen Komparator 190 auf. Vom Ausgang P3 des Komparators 190 führt ein Mitkopplungswiderstand 192 zu dessen Pluseingang. Ebenso führt ein Gegenkopplungswiderstand 191 vom Ausgang P3 des Komparators 190 zum Minuseingang P1 des Komparators 190. Ein Kondensator 195 liegt zwischen dem Minuseingang des Komparators 190 und Masse. Der Ausgang P3 des Komparators 190 ist ferner über einen Widerstand 193 mit +Vcc verbunden. Der Pluseingang P2 des Komparators 190 ist über zwei Widerstände 194 und 196 mit +Vcc bzw. Masse verbunden. - Zur Erläuterung der Wirkungsweise des Dreiecksgenerators 183 wird auf DE198 36 882.8 (intern: D216) verwiesen.

Liegt das Potenzial des Dreiecksignals 198 am Minuseingang des Komparators 188 unter dem des Signals u_156 am Pluseingang des Komparators 188, so ist der Ausgang des Komparators 188 hochohmig, und der Pullup-Widerstand 184 zieht die Leitung PWM2 180 auf HIGH. Liegt die Spannung des Dreieckssignals 198 über der des Signals u_156, so ist der Ausgang des Komparators 188 niederohmig, und das Signal PWM2 180 ist LOW. Wird ein invertiertes PWM-Signal benötigt, so werden der Plus-Eingang und der Minus-Eingang am Komparator 188 vertauscht.

**Fig. 13A** zeigt das Dreieckssignal 198 und den Stellwert u_156 am Punkt 156, und **Fig. 13B** das aus Fig. 13A resultierende PWM-Signal PWM2 180.

Das Dreieckssignal 198 des Dreiecksgenerators 183 ist idealisiert dargestellt. In Wirklichkeit hat es keine perfekte Dreiecksform, was jedoch an der Arbeitsweise des PWM-Generators 182 aus Fig. 12 nichts ändert. Das Dreieckssignal 198 hat einen Offset 199 von der Spannung 0 V. Der Stellwert u_156 bewirkt also erst ein Tastverhältnis TV > 0, wenn er über dem Offset 199 liegt.

Das Tastverhältnis TV des Signals PWM2 (Fig. 5A, Fig. 13) ist definiert als

$$ TV = t_{ON} / T \qquad \qquad ...\,(9) $$

TV kann zwischen 0 % und 100 % liegen. Ist die Motordrehzahl z.B. zu hoch, so wird u_156 erniedrigt und dadurch TV verkleinert, vgl. Fig. 13. Dies wird als Pulsweitenmodulation (PWM) bezeichnet. Die Tastverhältnisse werden zur besseren Verständlichkeit mit PWM1 und PWM2 bezeichnet.

**Endstufenansteuerung**

**Fig. 14** zeigt die Treiberstufe 50 für den Wicklungsanschluss L1. Die beiden anderen Treiberstufen 52 und 54 sind gleich aufgebaut. Die Treiberstufe 50 schaltet ausgehend von den Signalen EN1, IN1 und in Verbindung mit dem Signal PWM2 180 den oberen Leistungsschalter 80 und den unteren Leistungsschalter 81. Verwendet wird bei diesem Ausführungsbeispiel ein Treiberbaustein 200 vom Typ L6384 der Firma SGS-Thomson.

Der Treiberbaustein 200 weist einen Totzeitgenerator 202, eine Freigabelogik 204, eine Logik 206, eine Diode 208, einen oberen Treiber 210, einen unteren Treiber 212 sowie die Anschlüsse 221 bis 228 auf.

An den Anschlüssen EN1 und IN1 wird der µC 23, oder gegebenenfalls eine einfachere Logikschaltung, angeschlossen, vgl. Fig. 11.

Ist EN1 auf HIGH oder auf TRISTATE, so schaltet ein Transistor 250 ein und wird niederohmig. Ein Widerstand 252, welcher, wie unten erläutert, eine Totzeit des Treiberbausteins 200 bestimmt, wird hierdurch überbrückt, und dadurch wird der Eingang 223 niederohmig. Dadurch werden der obere Treiber 210 und der untere Treiber 212 und damit auch der Brückenzweig mit den Leistungsschaltern 80, 81 ausgeschaltet. Das Signal IN1 hat in diesem Zustand keinen Einfluss auf den Treiberbaustein 200. Der µC 23 erhält über den Transistor 250 Kontrolle über den Treiberbaustein 200 und damit auch über den Wicklungsanschluss L1.

Wird EN1 auf LOW gesetzt, so wird der Transistor 250 gesperrt und hochohmig. Ein Konstantstrom aus dem Treiberbaustein 200 fließt über den Widerstand 252 (z.B. 150 kΩ) nach Masse. Dabei fällt an dem Widerstand 252 eine Spannung ab, die am Eingang 223 anliegt. Liegt diese Spannung über z.B. 0,5 V, so wird der Treiberbaustein 200 aktiviert. Ist der Transistor 250 dagegen leitend, so fällt diese Spannung auf praktisch Null, und der Treiberbaustein 200 wird deaktiviert. Die Spannung am Eingang 223 dient gleichzeitig zur Einstellung der Totzeit.

Bei einem Resetvorgang am µC 23 sind alle Ein- und Ausgänge des µC 23 hochohmig, also auch IN1 und EN1. In diesem Fall wird über die Widerstände 242 und 244 der Transistor 250 eingeschaltet und dadurch der Treiberbaustein 200 ausgeschaltet. Dies bringt zusätzliche Sicherheit.

Eine Schaltung ohne den Transistor 250 und die Widerstände 242, 244 und 248 wäre theoretisch ebenfalls möglich. In diesem Fall müsste das Signal EN 1 zum Einschalten des Treiberbausteins 200 auf TRISTATE gesetzt werden und zum Ausschalten auf LOW. Bei einem Reset des µC 23 werden jedoch, wie oben aufgeführt, die Ein- und Ausgänge des µC 23 hochohmig, und damit wäre der Treiberbaustein 200 und damit auch der jeweilige Brückenzweig eingeschaltet, was zu unkontrollierten Schaltzuständen führen könnte und deshalb nicht erwünscht ist.

Bei aktiviertem Treiberbaustein 200 (EN1 = LOW) kann über den Eingang 221 eingestellt werden, ob der obere Leistungsschalter 80 oder der untere Leistungsschalter 81 leitend gemacht werden soll.

Ist der Eingang 221 auf LOW, so ist der untere Treiber 212 eingeschaltet und der Leistungsschalter 81 leitend. Der obere Leistungsschalter 80 ist gesperrt.

Ist der Eingang 221 dagegen auf HIGH, so ist es genau umgekehrt. Der obere Leistungsschalter 80 ist leitend, und der untere Leistungsschalter 81 ist gesperrt.

Bei jedem Wechsel des Signals am Eingang 221 des Treiberbausteins 200 wird durch den Totzeitgenerator 202 eine Totzeit erzeugt, während der beide Treiber 210 und 212 ausgeschaltet sind, damit es in den einzelnen Brückenzweigen nicht zum Kurzschluss kommt. Die Totzeit kann über die Größe des Widerstands 252 eingestellt werden und beträgt z.B. 1 µs.

Der Eingang IN1 kann bei aktiviertem Treiberbaustein (EN1 = 0) auf drei unterschiedliche Arten benutzt werden.

Bei IN1 = TRISTATE wird PWM2 über die Diode 260 vorrangig eingeschleust, und dieses Signal bewirkt die wechselseitige Taktung des dargestellten Brückenzweigs 80, 81 mit dem Tastverhältnis von PWM2. Der Widerstand 262 zieht dabei die Spannung am Eingang 221 auf 0 V, wenn PWM2 auf LOW ist, da dies über die Diode 260 nicht möglich ist. Bei IN1 = TRISTATE hat also PWM2 Vorrang vor dem Ausgang IN1 des µC 23.

Durch Setzen von IN1 auf HIGH schaltet der µC 23 den oberen Treiber 210 des Treiberbausteins 200 ein. Das Signal des Ausgangs IN1 ist vorrangig vor PWM2, wenn IN1 = 1 ist, d.h. PWM2 hat dann keinen Einfluss.

Durch Setzen von IN1 auf LOW schaltet der µC 23 den unteren Treiber 212 des Treiberbausteins 200 ein. Das Signal des Ausgangs IN1 ist auch hier vorrangig vor PWM2, d.h. dieses hat auch hier keinen Einfluss. Das Signal IN1 wird nur auf Null gesetzt, wenn über den µC 23 "gepumpt" wird, d.h. der Treiberbaustein 200 kann so gesteuert werden, dass die Brückentransistoren 80, 81 als Ladungspumpe dienen. Dies wird nachfolgend beschrieben.

Durch das Einschleusen von PWM2 über die Diode 260, in Verbindung mit dem Widerstand 262, kann der µC 23 bestimmen, ob das Signal PWM2 Vorrang für die Ansteuerung des Eingangs 221 des Treiberbausteins 200 haben soll. Soll PWM2 Vorrang haben, dann setzt der µC 23 IN1 auf TRISTATE. Der µC 23 hat jedoch Vorrang, wenn er IN1 auf HIGH oder LOW setzt.

Es ist eine Besonderheit dieser Schaltung, dass das Signal PWM2 erst so kurz vor dem Treiberbaustein 200 eingeschleust wird und der µC 23 trotzdem die Kontrolle über den Treiberbaustein behält. Die Signale IN1, EN1 etc von der Ansteuerlogik werden zuerst ausgegeben, und erst daraufhin wird das Signal PWM2 eingeschleust.

Ein Kondensator 230 und die im Treiberbaustein 200 integrierte Diode 208 stellen eine BOOTSTRAP-Schaltung dar. Die BOOTSTRAP-Schaltung ist notwendig, wenn für den oberen Leistungsschalter 80 N-Kanal MOSFETs verwendet werden, weil diese eine Ansteuerspannung benötigen, welche über der zu schaltenden Spannung - hier +U_B - liegt.

Ist der Leistungsschalter 81 geschlossen, so liegt der Wicklungsanschluss L1 auf Masse und der Kondensator 230 wird über die Diode 208 auf +12 V aufgeladen, vgl. Fig. 14. Wird der Leistungsschalter 81 ausgeschaltet und der Leistungsschalter 80 eingeschaltet, so steht dem oberen Treiber über den Eingang 228 eine Spannung zur Verfügung, welche 12 V über der Spannung des Wicklungsanschlusses L1 liegt. Der obere Treiber 210 kann somit den oberen Leistungsschalter 80 einschalten, solange der Kondensator 230 geladen ist.

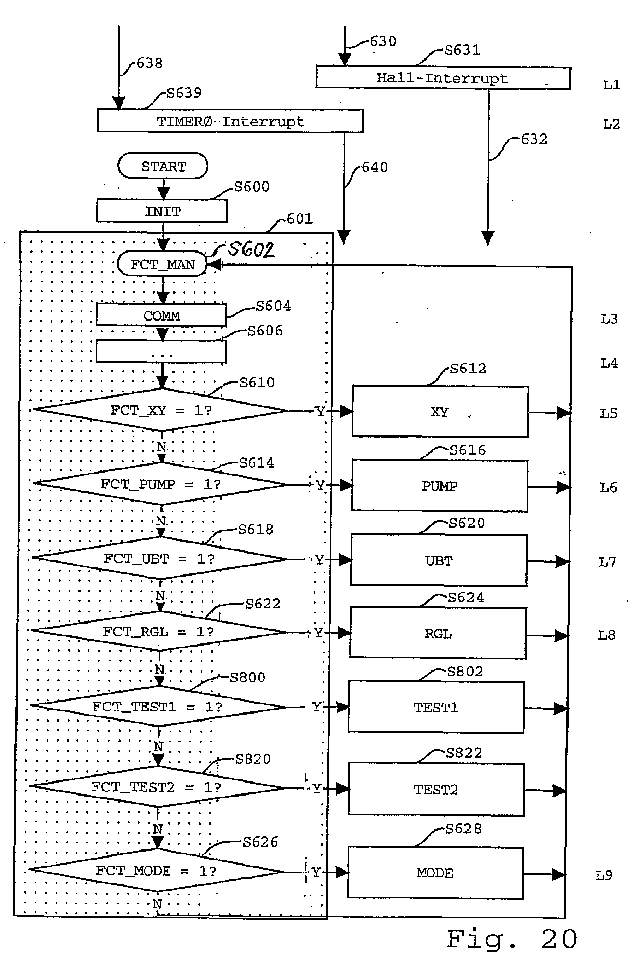

Der Kondensator 230 muss also in regelmäßigen Abständen aufgeladen werden, was als "Pumpen" bezeichnet wird. Dieses Prinzip ist dem Fachmann als Ladungspumpe bekannt. Das Pumpen wird durch den μC 23 überwacht und gesteuert, vgl. S616 in Fig. 20.

Zwei Widerstände 232 und 234 begrenzen den maximalen Treiberstrom für die Transistoren 80, 81, und ein Kondensator 236 liefert einen für den Treiberbaustein 200 benötigten kurzzeitig hohen Strom.

## Pumpen

Wird bei der Schaltung gemäß Fig. 14 der untere Treiber 212 längere Zeit nicht eingeschaltet, so entlädt sich der Kondensator 230, und der obere Treiber 210 kann den oberen Leistungsschalter 80 nicht mehr einschalten. Deshalb muss in einem solchen Fall Ladung in den Kondensator 230 gepumpt werden.

Im normalen Betrieb des Motors 32 in einer bestimmten Drehrichtung wird gemäß Fig. 4 ein Brückenzweig ständig wechselseitig aus- und eingeschaltet ("getaktet"). Dies geschieht so oft, dass ein ausreichendes Pumpen gewährleistet ist und der Kondensator 230 stets ausreichend geladen ist.

Wird der Motor 32 jedoch sehr langsam oder bleibt stehen, so ist das ausreichende Pumpen nicht mehr gewährleistet. Dieser Fall kann anhand der Hallzeit t_HALL (Fig. 15), also der Zeit zwischen zwei aufeinanderfolgenden Änderungen des Hallsignals HS (Fig. 15D), überprüft werden. Überschreitet die Hallzeit z.B. 10 ms, so muss neu gepumpt werden.

Ein weiterer Fall, bei dem zwar Hallwechsel stattfinden, ein ausreichendes Pumpen jedoch nicht gewährleistet ist, ist ein Oszillieren des Motors um eine Ruhestellung, z.B. weil der Rotor 110 blockiert ist. Es kann vorkommen, dass sich der Rotor 110 immer zwischen zwei Bereichen hin- und herbewegt, in denen die wechselseitige Taktung nur beim Wicklungsanschluss L1 bzw. L2 stattfindet. L3 muss in diesem Fall gepumpt werden.

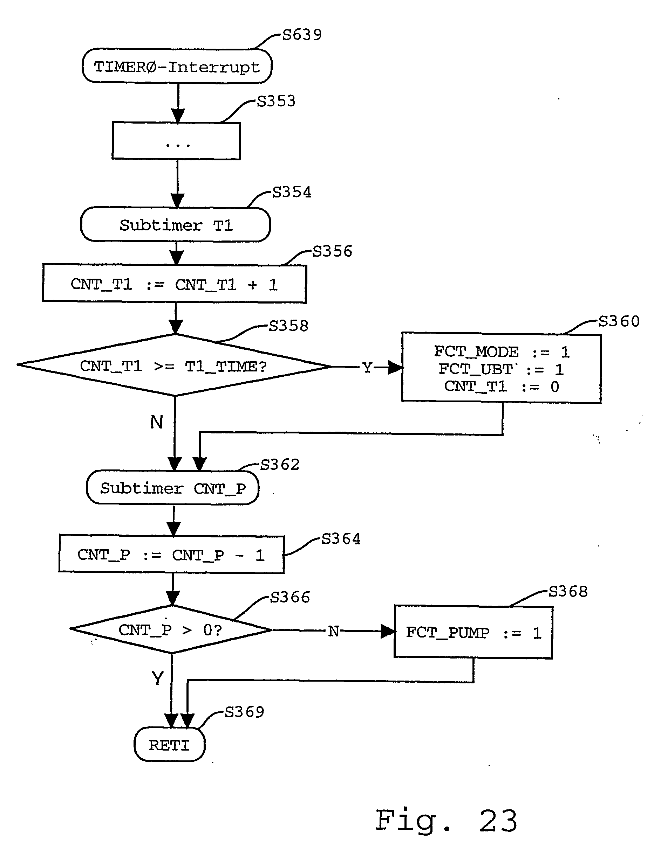

Ein ausreichendes Pumpen kann in diesem zweiten Fall gewährleistet werden, indem bei jedem Richtungswechsel des Motors 32 gepumpt wird. Der Richtungswechsel wird in der Kommutierungsroutine über die Rotorstellungssensoren 111, 112 und 113 detektiert. Bei einem Richtungswechsel wird das Flag FCT_PUMP (S368 in Fig. 23, S614 in Fig. 20) auf 1 gesetzt. Hierdurch wird dem Hauptprogramm (Fig. 20) im μC 23 mitgeteilt, dass gepumpt werden soll.

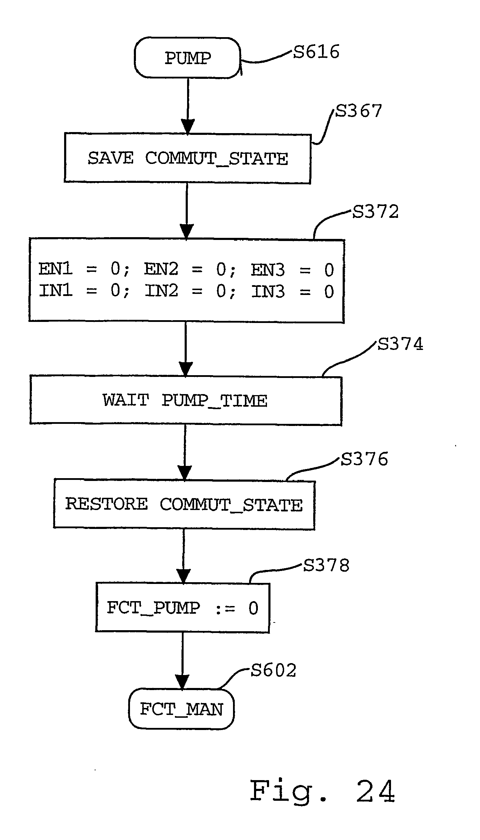

Ist FCT_PUMP = 1, so wird von einem Funktionsmanager 601 (Fig. 20) eine Routine PUMP S616 (Fig. 24) aufgerufen. In dieser Routine werden alle Ausgänge EN1, IN1, EN2, IN2, EN3, IN3 des μC 23 (Fig. 11) für eine Zeit von ca. 15 bis 20 μs auf LOW gesetzt. Hierdurch werden die unteren Leistungsschalter 81, 83 und 85 (Fig. 2) eingeschaltet, die oberen Leistungsschalter 80, 82, 84 werden ausgeschaltet, und somit werden alle Treiberstufen 50, 52 und 54 (Fig. 11) gepumpt. Nach dem Pumpen werden die Treiberstufen wieder entsprechend der gespeicherten Hallsignale HS1, HS2 und HS3 aktiviert, wie bei Fig. 2 und Fig. 3 beschrieben.

**Fig. 15** zeigt die Bildung eines Hallsignals HS 265 als Summe bzw. Antivalenz aus den Hallsignalen HS1, HS2 und HS3 der Rotorstellungssensoren 111, 112. 113. Das Hallsignal HS 265 wechselt bei jedem auftretenden Wechsel der Hallsignale HS1, HS2 bzw. HS3 von HIGH auf LOW bzw. LOW auf HIGH, so dass das Hallsignal HS 265 alle 60° el. (30° mech.) wechselt. Diese Wechsel des Hallsignals HS 265 werden Hallwechsel 267 genannt. Aus der Hallzeit t_HALL (Fig. 15D) zwischen zwei Hallwechseln 267 kann die Drehzahl n des Rotors 110 ermittelt werden.

Da eine elektrische Umdrehung (360 °el.) in diesem Ausführungsbeispiel sechs Hallwechseln entspricht, erfolgen pro mechanischer Umdrehung 12 Hallwechsel. Für die Istdrehzahl n gilt

$$n = 1 / (12 \times t\_HALL) \qquad \ldots (10)$$

## Betriebsarten des Motors

Der Motor 32, wie er in Fig. 1 und 11 dargestellt ist, kann in verschiedenen Betriebsarten betrieben werden.

**Fig. 16** zeigt eine Übersicht über vier mögliche Betriebsarten.

Die erste Unterscheidung liegt bei S500 in der Wahl zwischen einer Spannungsstellung (U-Stellung bzw. U_CTRL) und einer Stromstellung (I-Stellung bzw. I_CTRL).

Bei der Spannungsstellung U_CTRL wird in S502 eine Drehzahlregelung durchgeführt. Hierzu wird in S504 das Signal PWM1 und damit der analoge Stellwert SWA1 durch den Stellwert des Reglers RGL 24 gesteuert, welcher hierdurch die Drehzahl n des Motors 32 regelt. Die Werte I_max+ und I_max- für die Strombegrenzung in positiver und negativer Richtung werden entsprechend den Daten des Motors 32 festgelegt.

Bei der Stromsteuerung I_CTRL wird in S506 zwischen zwei weiteren Fällen unterschieden. Entweder wird in S508 ein Drehmoment T des Motors 32 eingestellt (T_CTRL), oder in S518 wird eine Drehzahlregelung (n_CTRL) via Einstellung des Stroms (I_CTRL) durchgeführt.

Die Drehzahlregelung über Stromstellung in S518 wird - wie in S520 dargestellt - durchgeführt, indem PWM1 auf einen Wert U_max gesetzt wird, wobei U_max bevorzugt so groß ist, z.B. 100 %, dass die positive Strombegrenzung immer aktiv ist. Der Stellwert PWM_I+ für die positive Strombegrenzung wird nun durch einen Stellwert des Reglers RGL 24 gesteuert, und hierdurch wird die Drehzahl n des Motors 32 geregelt. Der zulässige Bremsstrom I_max- wird gemäß den Daten des Motors 32 festgelegt.

Bei der Drehmomentstellung via Stromstellung besteht die Möglichkeit, das Drehmoment T positiv (S510) oder negativ (S514) zu steuern.

Die positive Drehmomenteinstellung (S510), welche den Motor 32 antreibt, wird durchgeführt, indem gemäß S512 das Signal PWM1 auf einen Wert U_max gesetzt wird, der bevorzugt so groß ist, z.B. 100 %, dass die positive Strombegrenzung immer aktiv ist. Der Stellwert PWM_1+ wird dann auf einen zu dem positiven Drehmoment T+ gehörenden Wert I(T+) gesetzt, z.B. ein Tastverhältnis, das 2,3 A entspricht. Der Stellwert PWM_I- wird auf den Wert I_max- gesetzt, welcher dem maximal zulässigen Bremsstrom i_2' entspricht, also z.B. auf 0 %.

Die negative Drehmomenteinstellung (S514), welche den Motor 32 bremst, wird durchgeführt, indem gemäß S516 das Signal PWM1 auf einen Wert U_min gesetzt wird, der bevorzugt so klein ist, dass die negative Strombegrenzung immer aktiv ist. Der Stellwert PWM_I- wird auf einen zu dem negativen Drehmoment T-gehörenden Wert I(T-) gesetzt. Der Stellwert PWM_I+ wird auf den Wert I_max+ gesetzt, welcher dem maximal zulässigen Antriebsstrom i_2 entspricht.

Im folgenden wird näher auf die einzelnen Betriebsarten eingegangen.

## Drehmomentstellung

Das von dem Elektromotor 32 erzeugte Drehmoment ist im wesentlichen proportional zu dem Strom i_2 während der Zeit, während der der jeweilige untere Leistungsschalter 81, 83 bzw. 85 geschlossen ist.

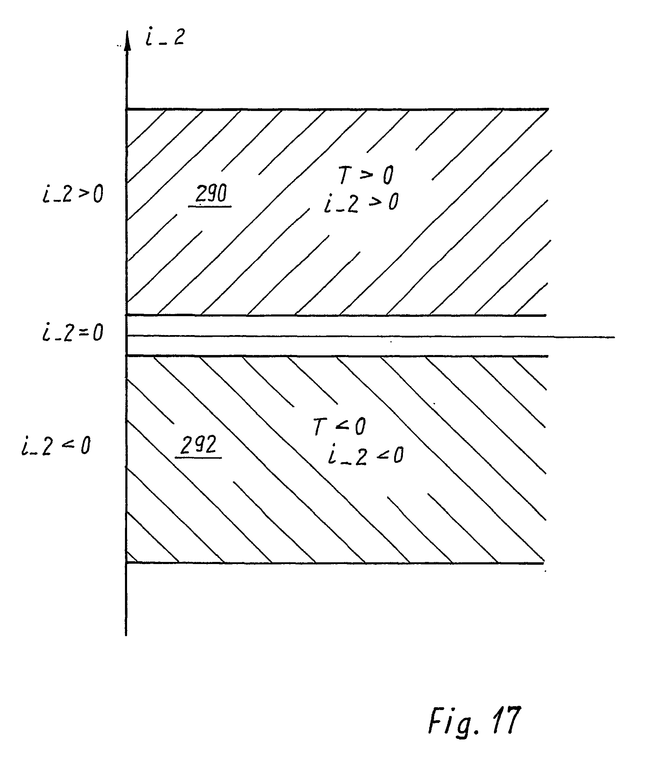

**Fig. 17** zeigt die beiden Betriebsarten für die Einstellung des Drehmoments.

- Die positive Drehmomenteinstellung (S510 in Fig. 16) findet in einem Bereich 290 statt. Der Motor 32 treibt dabei mit einem einstellbaren positiven Drehmoment T+ an.
- Die negative Drehmomenteinstellung (S514 in Fig. 16) findet in einem Bereich 292 statt. Der Motor 32 bremst dabei mit einem einstellbaren negativen Drehmoment T- ab.

Beim dargestellten Ausführungsbeispiel besteht bei der Drehmomenteinstellung die Möglichkeit, ein gewünschtes Drehmoment T des Motors 32 in beiden Richtungen einzustellen, also antreibend oder bremsend. Sofern kein bremsendes Drehmoment erforderlich ist, kann der betreffende Teil entfallen.

## Physikalisches Motormodell

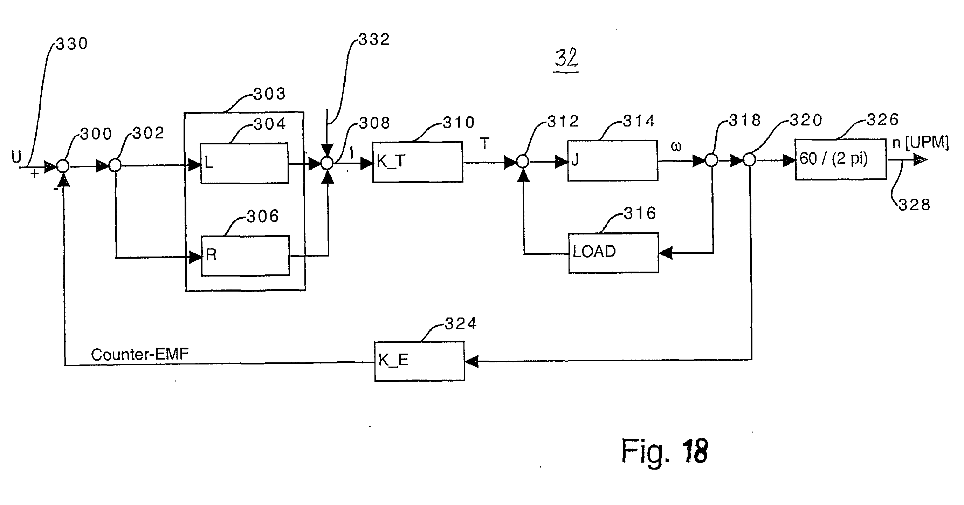

**Fig. 18** zeigt ein Motormodell, welches die physikalischen Vorgänge im Motor 32 in vereinfachter Weise darstellt.

An einem Punkt 300 liegt eine Spannung U an, die einen Wicklungsstrom I 308 (der Strom I an der Stelle 308) durch die Statorwicklung 303 bewirkt, welch letztere zwischen den Punkten 302 und 308 liegt. Sie kann als Parallelschaltung einer Induktivität L 304 und eines Widerstands R 306 betrachtet werden.

Durch die Statorwicklung 303 entsteht eine Zeitverzögerung zwischen der sich ändernden Spannung U 300 und dem daraus resultierenden Wicklungsstrom I 308. Man spricht von einem Verzögerungsglied oder pT1-Glied.

Der Strom I 308 durch die Statorwicklung 303 bewirkt über die Gerätekonstante K_T der Wicklung 303 bzw. des Motors 32 eine bestimmte Magnetflussdichte und damit ein Drehmoment T 312 auf den permanentmagnetischen Rotor (110 in Fig. 1).

Das Drehmoment T 312 beeinflusst die Kreisfrequenz $\omega$ 318 des Rotors in Abhängigkeit vom Trägheitsmoment J 314 des Rotors 110 (Fig. 1) und der angelegten Last LOAD 316.

Die Drehung des Rotors 110 (Fig. 1) mit der Kreisfrequenz $\omega$ induziert über die Gerätekonstante K_E 324 des Motors 32 eine Gegen-EMK (Counter-EMF) in der Statorwicklung 303, welche der Spannung U 300 entgegenwirkt.

Die Kreisfrequenz $\omega$ 318 ergibt schließlich über einen Umrechnungsfaktor $60/(2\pi)$ die Drehzahl n 328 in U/min.

Die Drehzahlregelung n_CTRL über U-Stellung U_CTRL (S502 in Fig. 16) verändert über den Punkt 330 die Spannung U auf den durch den Regler RGL 24 (Fig. 11) berechneten Stellwert, um so die Drehzahl n des Rotors 110 zu beeinflussen. Die U-Stellung hat infolge der durch die Statorwicklung 303 bewirkten Zeitverzögerung eine lange Regelstrecke (pT1-Glied), was insbesondere bei sich schnell ändernden Lasten LOAD zu einer schlechten Regelung führt.

Die Drehzahlregelung n_CTRL über I-Stellung I_CTRL (S518 in Fig. 16) bzw. die Drehmomentstellung T_CTRL über I-Stellung (S510 bzw. S514 in Fig. 16) steuert den Wicklungsstrom I 308. Hierzu wird der Wicklungsstrom 308 am Punkt 332 gemessen, und die Spannung U 300 wird über den Punkt 330 so eingestellt, dass der durch die Drehzahlregelung über I-Stellung (S518 in Fig. 16) bzw. die Drehmomentstellung T_CTRL über I-Stellung (S510 bzw. S514 in Fig. 16) vorgegebene Wicklungsstrom I 308 durch die Statorwicklung 303 fließt.

**Fig. 19A** zeigt zur Erläuterung von Fig. 18 den Strom I 334 durch einen der Wicklungsanschlüsse L1, L2 oder L3 (Fig. 1) bei der Drehzahlregelung n_CTRL über U-Stellung (S502 in Fig. 16), bei der die Spannung U 300 (Fig. 18) über einen kurzen Zeitraum hinweg betrachtet konstant ist. Die Zeitverzögerung durch die Statorwicklung 303 (Fig. 18) führt zu einem langsamen Ansteigen des Stroms I an der Stelle 335 der Fig. 19A. An der Stelle 336 wird kommutiert, d.h. eine andere Statorwicklung 303 wird bestromt, und der Strom I 334 steigt aufgrund der geringeren Gegen-EMK 324 (Fig. 18) kurzzeitig an.

**Fig. 19B** zeigt den Strom I 337 durch einen der Wicklungsanschlüsse L1, L2 oder L3 (Fig. 1) bei der Drehzahlregelung über I-Stellung (S518 in Fig. 16) bzw. der Drehmomentstellung T_CTRL über I-Stellung (S510 bzw. S514 in Fig. 16).

Bei der I-Stellung ist der Strom I 337 vorgegeben, und die Vorgabe ist über einen kurzen Zeitraum betrachtet konstant (I = const). Der Anstieg des Stroms I 337 an der Stelle 338 ist steiler, da über die Strombegrenzung 131 oder 161 die Spannung U 300 (Fig. 18) so eingestellt wird, dass der vorgegebene Wert I = const schnell erreicht wird. Der Strom I 337 ist zwischen dem Beginn der Bestromung bei 338 und der folgenden Kommutierung an der Stelle 339 weitestgehend konstant, und bei der Kommutierung an der Stelle 339 hat der Strom I 337 keinen wesentlichen Anstieg wie bei 336 in Fig. 19A, sondern wird praktisch konstant gehalten. Der Motor wird am Ende dieser Bestromung gemäß Ansteuerlogik über einen anderen der Wicklungsanschlüsse L1, L2, L3 bestromt, z.B. über den Wicklungsanschluss L2, was nicht dargestellt ist.

Der Stromverlauf bei der I-Stellung I_CTRL ist also nahezu konstant. Dies reduziert die Welligkeit des vom Motor erzeugten Drehmoments und dadurch die Geräusche und verbessert die EMV (ElektroMagnetische Verträglichkeit). Deshalb sind für die Stromversorgung eines solchen Motors wegen seiner besseren EMV weniger große Kondensatoren und ein geringerer Schaltungsaufwand erforderlich. Weiterhin werden Netzteile und Kabel weniger belastet, da keine Stromspitzen auftreten, oder man kann kleinere Netzteile verwenden.

Der von der Drehzahlregelung eingestellte Strom I wird im Vergleich zu Fig. 19A schneller erreicht, und dadurch kann schnell auf Laständerungen reagiert werden. Dies erhöht bei einer Drehzahlregelung via I-Stellung I_CTRL die Regelgüte. Eine Drehzahlregelung via Spannungssteuerung U_CTRL kann auf Laständerungen nicht so schnell reagieren, da bei der Spannungssteuerung U_CTRL durch das pT1-Verzögerungsglied der Strom I und damit das Drehmoment T langsamer ansteigen oder fallen.

Die physikalischen Grenzen des Motors 32 werden durch die I-Stellung nicht verändert. So wird z.B. der Strom I 337 im Bereich 338 bei großer Leistung flacher ansteigen, da die Spannung U nicht beliebig hoch gewählt werden kann. Bei Fig. 19 wird also der Motor 32 in einem Bereich unterhalb seiner natürlichen Kennlinie betrieben, wie das bei Fig. 47 erläutert wird.

## Gesamtprogramm und Funktionsmanager

**Fig. 20** zeigt ein Flussdiagramm mit einer möglichen Ausführungsform des in dem μC 23 ablaufenden Gesamtprogramms.

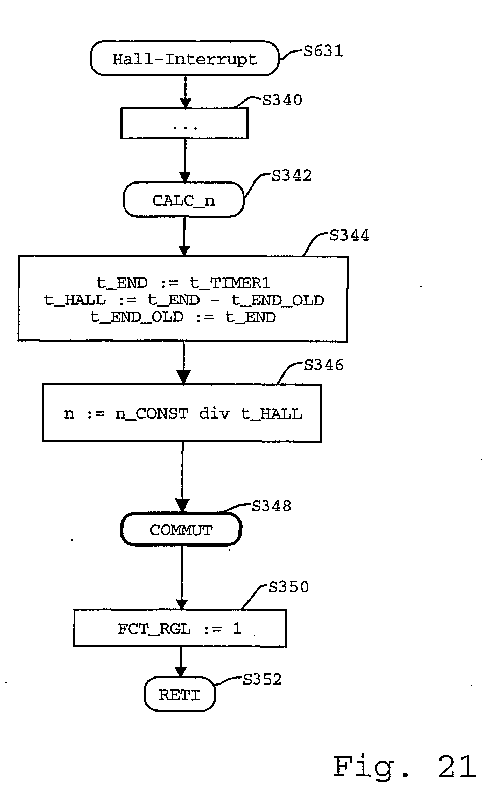

Ganz oben stehen zwei Interruptroutinen Hall-Interrupt S631 (Fig. 21) und TIMERØ-Interrupt S639 (Fig. 23), welche beim Auftreten des jeweiligen Interrupts 630 bzw 638 ausgeführt werden und über 632 bzw 640 auf das Hauptprogramm einwirken. Dabei nimmt die Priorität, also die Reihenfolge, in der die einzelnen Programmteile ausgeführt werden, von oben nach unten ab. Die Prioritäten sind deshalb auf der rechten Seite mit L1 bis L9 bezeichnet, wobei eine kleinere Zahl eine höhere Priorität bedeutet. L1 hat also die höchste Priorität.

Unterhalb der Interruptroutinen beginnt das Hauptprogramm. Nach dem Einschalten des Motors 32 wird in dem μC 23 ein interner Reset ausgelöst. In S600 erfolgt die Initialisierung des μC 23.

Nach der Initialisierung erfolgt ein Sprung in den sogenannten Funktionsmanager 601, der in S602 beginnt. Der Funktionsmanager FCT_MAN regelt den Ablauf der einzelnen Unterprogramme bzw. Routinen.

Als erstes werden die Routinen abgearbeitet, die zeitkritisch sind und bei jedem Durchlauf ausgeführt werden müssen. Ein Beispiel hierfür ist eine Kommunikationsfunktion COMM S604, welche die Datenübertragung zwischen dem μC 23 und dem EEPROM 20 (Fig. 11) bzw. dem Bus (Datenleitung) 18 durchführt. S606 steht für eine beliebige andere zeitkritische Funktion.

Nach S606 kommen anforderbare Funktionen S612, S616, S620, S624 und S628. Für jede dieser Funktionen besteht ein Anforderungsbit, welches mit den Buchstaben "FCT_" anfängt. Zu der Funktion XY S612 gehört beispielsweise ein Anforderungsbit FCT_XY.

So kann an jeder Stelle des in dem μC 23 ablaufenden Programms jede anforderbare Funktion durch Setzen des zugehörigen Anforderungsbits auf 1 angefordert werden, z.B. FCT_XY := 1. Ist die zugehörige anforderbare Funktion abgearbeitet, so setzt sie Ihr Anforderungsbit automatisch wieder auf 0, z.B. FCT_XY := 0.

Nach S606 wird in einer vorbestimmten Reihenfolge, von der wichtigsten anforderbaren Funktion ausgehend, geprüft, ob deren Anforderungsbit gesetzt ist. Ist dies bei einer Funktion der Fall, so wird diese ausgeführt, und daraufhin wird wieder an den Anfang FCT_MAN S602 des Funktionsmanagers 601 gesprungen. Die Reihenfolge der Überprüfung der Anforderungsbits ergibt die Priorität der anforderbaren Funktionen. Je höher eine Funktion im Funktionsmanager 601 steht, desto höher ist ihre Priorität.

Ein Beispiel erläutert die Arbeitsweise des Funktionsmanagers 601: Springt z.B. das Programm von S610 nach S614, so wird dort überprüft, ob das Funktionsregisterbit FCT_PUMP = 1 ist, ob also die Routine PUMP S616 angefordert wurde, die in Fig. 24 dargestellt ist. Ist dies der Fall, so wird nach S616 gesprungen, und die Funktion PUMP S616 wird ausgeführt. Bei Beendigung setzt die Funktion PUMP S616 das Anforderungsbit FCT_PUMP wieder auf 0 zurück, vgl. S378 in Fig. 24, und es wird wieder nach S602 gesprungen.

War in keiner der Abfragen bis S626 ein Anforderungsbit gesetzt, so wird ohne eine Aktion nach S602 zurückgesprungen, und die Funktion S604, die bei jedem Durchlauf des Funktionsmanagers 601 ausgeführt wird, wird erneut abgearbeitet.

Durch den Funktionsmanager erhält man eine optimale Ausnutzung der Ressourcen des μC 23.

**Fig. 21** zeigt ein Ausführungsbeispiel für die Routine Hall-Interrupt S631, welche bei jedem durch das Auftreten eines Hallwechsels (z.B. 267 in Fig. 15D) des Signals HS (HALL) ausgelösten Hall-Interrupt 630 (Fig. 20) ausgeführt wird. Selbstverständlich könnte der Interrupt auch durch einen optischen oder mechanischen Sensor ausgelöst werden, und man kann ihn deshalb auch als "sensorgesteuerten Interrupt" bezeichnen.

Es werden folgende Variablen benutzt:

| | |
|---|---|
| t_END | Zeitpunkt des aktuellen Flanken- bzw. Hallwechsels |
| t_TIMER1 | Ringzähler TIMER1 zur Zeitmessung |
| t_HALL | Zeit zwischen zwei Hallwechseln, vgl. Fig. 15 |
| t_END_OLD | Zeit des vorhergehenden Hallwechsels |
| n | Drehzahl |
| n_CONST | Drehzahlberechnungskonstante |
| FCT_RGL | Anforderungsbit des Reglers RGL |

Die Routine Hall-Interrupt S631 erfasst den Zeitpunkt t_END des Hallwechsels, berechnet daraus die Hallzeit t_HALL und die Drehzahl n. Daraufhin wird die Kommutierung durchgeführt und der Regler S624 wird aufgerufen.

Der Schritt S340 steht für Aktionen, welche eventuell in der Routine HallInterrupt S631 durchgeführt werden.

In S342 beginnt die Berechnung der Drehzahl n aus der Hallzeit t_HALL.

In S344 wird die Zeit des aktuellen Hallwechsels 267 (Fig. 15D) in der Variablen t_END gespeichert. Die Zeit wird dem Ringzähler t_TIMER1 entnommen. Daraufhin wird die Zeit t_HALL aus der Differenz zwischen der Zeit t_END des aktuellen Hallwechsels und der Zeit t_END_OLD des vorhergehenden Hallwechsels berechnet. Nach der Berechnung wird der Wert t_END - für die Berechnung des nächsten t_HALL - in t_END_OLD gespeichert.

In S346 wird die Drehzahl n aus dem Quotienten der Drehzahlberechnungskonstante n_CONST und der Hallzeit t_HALL berechnet. Vergleiche hierzu Beschreibung zu Fig. 15 und Gleichung (10).

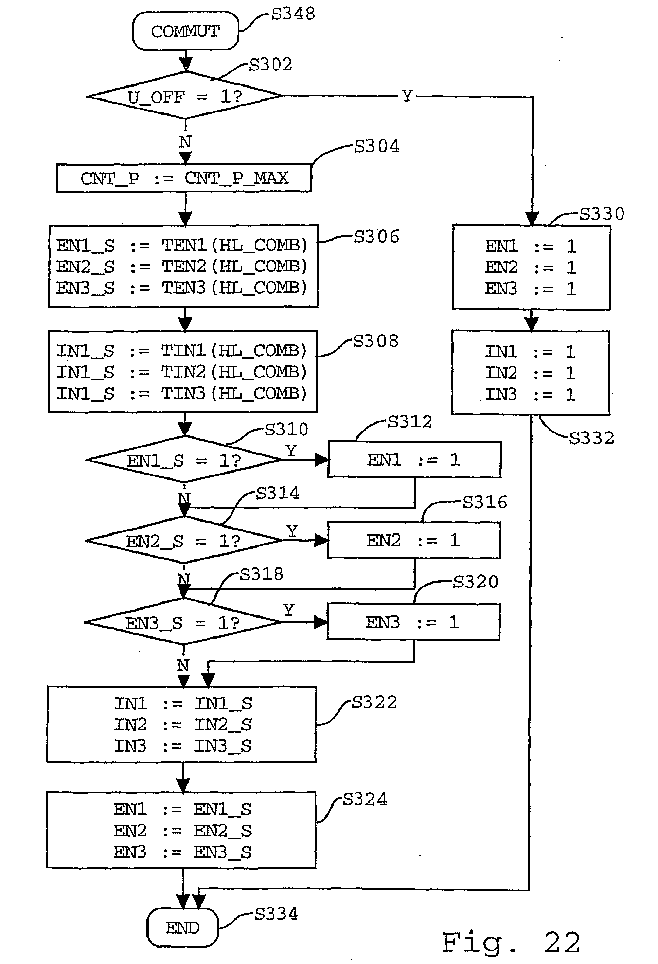

In S348 findet die Kommutierung COMMUT der Endstufe 78 mittels der Treiberstufen 50, 52, 54 statt, vgl. Fig. 22.

In S350 wird der Regler RGL S624 durch Setzen von FCT_RGL auf 1 angefordert, und in S352 wird die Interruptroutine Hall-Interrupt S631 verlassen.

**Fig. 22** zeigt das Unterprogramm COMMUT S348, welches die Kommutierung der Endstufe 78 (Fig. 1 und 2) gemäß der Kommutierungstabelle der Fig. 3 mit Hilfe der Treiberstufen 50, 52, 54 (Fig. 11) durchführt. Das Unterprogramm COMMUT S348 wird in der Routine Hall-Interrupt S631 aufgerufen.

Bei einem Motor mit einer von der Drehzahl n des Motors 32 abhängigen zeitlich verfrühten Kommutierung wird das Unterprogramm COMMUT S348 z.B. erst nach Ablauf einer von der Drehzahl n des Motors 32 abhängigen Zeit nach dem Hallwechsel 267 ausgeführt. In vielen Fällen ist jedoch eine solche zeitlich verfrühte Kommutierung ("Frühzündung") nicht erforderlich.

Es werden folgende Variablen benutzt:

| | |
|---|---|
| U_OFF | Flag, ob Endstufe 78 abgeschaltet |
| CNT_P | Zähler für Pumpüberwachung |
| CNT_P_MAX | Maximal zulässige Zeit zwischen zwei Pumpvorgängen |
| HL_COMB | Zustand der Signale HS1 bis HS3 |

| TEN1, TEN2, TEN3 | Kommutierungstabellen (Fig. 2) |
|---|---|
| EN1_S, EN2_S, EN3_S | Kommutierungssollwerte |
| TIN1, TIN2, TIN3 | Kommutierungstabellen (Fig. 2) |
| IN1_S, IN2_S, IN3_S | Kommutierungssollwerte |
| EN1, EN2, EN3 | Kommutierungswerte |
| IN1, IN2, IN3 | Kommutierungswerte |

In S302 wird überprüft, ob durch die Spannungsüberwachung UBT S620 (Fig. 25) die Endstufe ausgeschaltet wurde (U_OFF = 1). Dies bedeutet, dass die Spannung am Gleichstrom-Zwischenkreis (dc link) 73, 74 (Fig. 2) zu hoch oder zu tief ist.

In diesem Fall wird nach S330 gesprungen. In S330 werden alle Treiberbausteine 200 deaktiviert. Dies geschieht durch Setzen der Ausgänge EN1, EN2, EN3 auf 1.

In S332 werden die Signale IN1, IN2, IN3 auf 1 gesetzt. Dies hat zwar bei deaktivierten Treiberbausteinen 200 keine Auswirkung, der Zustand der Signale IN1, IN2, IN3, der gespeichert bleibt, ist jedoch dadurch für nachfolgende Vorgänge definiert. - Daraufhin wird an das Ende S334 gesprungen.

War in S302 U_OFF = 0, d.h. die Spannung am Gleichstrom-Zwischenkreis (dc link) 73, 74 ist normal, so wird gemäß der Kommutierungstabelle der Fig. 2 normal kommutiert.

In S304 wird der Zähler CNT_P, der für die Pumpüberwachung PUMP S616 (Fig. 24) verwendet wird, auf CNT_P_MAX gesetzt, da im folgenden kommutiert und folglich auch gepumpt wird.

In S306 werden die Sollwerte EN1_S, EN2_S, EN3_S für die Signale EN1 bis EN3 entsprechend der Kombination HL_COMB der Hallsignale HS1, HS2, HS3 aus der Tabelle der Fig. 3 geladen. Die Tabellenwerte aus Fig. 3 werden mit TEN1, TEN2 und TEN3 bezeichnet. Wenn sich z.B. der Rotor 110 in der Winkelstellung 0 ° ... 60 °el. befindet, so ist die Kombination HL_COMB der Hallsignale (HS1 = 1, HS2 = 0, HS3 = 1), und es werden die folgenden Werte geladen: EN1_S = 0, EN2_S = 0, EN3_S = 1.

Ebenso werden in S308 die Sollwerte IN1_S, IN2_S, IN3_S für die Signale IN1 bis IN3 entsprechend der Kombination HL_COMB der Hallsignale HS1, HS2, HS3 aus der Tabelle der Fig. 3 geladen. Die Tabelle für die IN-Werte wird mit TIN1, TIN2, TIN3 bezeichnet. Für das Beispiel aus S306 ergibt sich IN1_S = 1, IN2_S = TRISTATE, IN3_S = 1 (für die Winkelstellung 0 ° ... 60 °el.).

Vor der Kommutierung waren zwei der Treiberbausteine aktiviert und ein Treiberbaustein war deaktiviert. Z.B. waren vor der Kommutierung in Fig. 11 die Treiberstufen 52 und 54 aktiviert, und die Treiberstufe 50 war deaktiviert. Nach der Kommutierung ist z.B. die Treiberstufe 54 deaktiviert, und die Treiberstufen 50 und 52 sind aktiviert.

Die Schritte S310 bis S320 dienen zum Ausschalten der Treiberstufe, die vor der Kommutierung aktiviert war, und nach der Kommutierung deaktiviert sein soll, im obigen Beispiel der Treiberstufe 54. Eine Treiberstufe, die vor und nach der Kommutierung aktiviert sein soll, wird nicht zwischendurch abgeschaltet, wodurch Verluste im Motor 32 vermieden werden.

In Fig. 3 sind in den Spalten EN1, EN2, EN3 die Felder mit einem Rahmen 740 versehen, bei denen der respektive Treiberbaustein während zweier aufeinanderfolgender Winkelbereiche aktiviert ist.

Deshalb wird in S310 überprüft, ob der Sollwert EN1_S für das Signal EN1 gleich 1 ist, ob also EN1 nach der Kommutierung ausgeschaltet werden soll. In diesem Fall wird EN1 in S312 auf 1 gesetzt, und der Treiberbaustein des Brückenzweigs des Wicklungsanschlusses L1 wird deaktiviert. War EN1 vor der Kommutierung deaktiviert, so hat ein neuerliches Deaktivieren keine Auswirkung.

In S314 bis S320 geschieht das gleiche für die Brückenzweige der Wicklungsanschlüsse L2 und L3.

In S322 werden die Signale IN1, IN2 und IN3 auf die Sollwerte IN1_S, IN2_S und IN3_S gesetzt.

In S324 werden die Signale EN1, EN2 und EN3 auf die Sollwerte EN1_S, EN2_S und EN3_S gesetzt. Da die Treiberbausteine, die nach der Kommutierung deaktiviert sein sollen, bereits in S310 bis S320 deaktiviert wurden, bewirkt S324 ein Einschalten des Treiberbausteins, der zuvor ausgeschaltet war. Der andere Treiberbaustein, der sowohl vor der Kommutierung als auch nach der Kommutierung eingeschaltet ist, wurde ja in S310 bis S320 nicht ausgeschaltet, um Leistungsverluste im Motor 32 zu vermeiden, die bei einer Stromunterbrechung auftreten würden.

In S324 wird das Unterprogramm COMMUT beendet.

Falls gewünscht wird, den Motor 32 in beiden Drehrichtungen zu betreiben, muss eine zweite Kommutierungstabelle für die andere Drehrichtung analog zu Fig. 3 gegeben sein. Der Sollwert EN1_S wird dann in S306 z.B. durch eine Funktion TEN1(HL_COMB, DIR) ermittelt, wobei DIR für die gewünschte Drehrichtung steht. In vielen Fällen, z.B. bei Radiallüftern, wird aber nur der Betrieb in einer Drehrichtung gefordert. Der Betrieb mit einer Kommutierungstabelle für die umgekehrte Richtung ist für den Fachmann problemlos möglich und wird deshalb nicht weiter beschrieben, da dies für das Verständnis der Erfindung nicht notwendig ist und die Beschreibung ohnedies sehr lang ist.

**Fig. 23** zeigt die Routine TIMERØ-Interrupt S639 (vgl. Fig. 20), welche bei jedem Auftreten eines Interrupts 638 ausgeführt wird, der durch den in dem µC 23 integrierten Timer TIMERØ ausgelöst wird.

Es werden folgende Variablen benutzt:

CNT_T1       Zähler für die Anforderung der Routine MODE S628
T1_TIME      Zeit zwischen zwei Anforderungen der Routine MODE S628
FCT_MODE    Anforderungsbit für die Routine MODE S628
FCT_UBT      Anforderungsbit für die Routine UBT S620
CNT_P        Zähler für Pumpüberwachung
FCT_PUMP    Anforderungsbit für die Routine PUMP S616 (Fig. 24)

Der Timer TIMERØ ist z.B. 1 Byte (256 Bit) groß, und bei einer Prozessorfrequenz von 10 MHz und einer Vorskalierung (Prescale) von 8 erreicht er alle

$$256 \times 8 \times 0{,}4 \; \mu s = 820 \; \mu s$$

den Wert 0, und ein Interrupt 638 wird ausgelöst. Die 0,4 $\mu$s ergeben sich daraus, dass bei einer Prozessorfrequenz von 10 MHz ein Takt 0,1 $\mu$s benötigt und der Prozessor für jeden Befehl vier Takte und damit 0,4 $\mu$s benötigt. Daran ist auch der Timer TIMERØ gebunden.

In S353 werden evtl. weitere, hier nicht ausgeführte Schritte durchlaufen, falls z.B. durch den TIMERØ andere Programmteile gesteuert werden sollen.

In S354 beginnt ein Zähler Subtimer T1. Subtimer bedeutet, dass durch die im folgenden erläuterten Schritte S356, S358 und S362 die eigentliche Aktion in S360 erst nach einer bestimmten Anzahl von TIMERØ-Interrupts ausgelöst wird. Dies hat den Vorteil, dass der Timer TIMERØ auch für andere Zwecke verwendet werden kann, welche häufiger aufgerufen werden müssen.

In S356 wird der interne Zähler CNT_T1 um 1 erhöht.

In S358 wird überprüft, ob CNT_T1 größer oder gleich dem Wert T1_TIME ist. Falls nein, so wird sofort nach S362 gesprungen.

Falls jedoch in S358 der Zähler CNT_T1 den Wert T1_TIME erreicht hat, wird in S360 FCT_MODE auf 1 gesetzt und damit die Routine MODE S628 (Fig. 20) angefordert. Weiterhin wird FCT UBT auf 1 gesetzt und damit die Routine UBT S620 angefordert. Der Zähler CNT_T1 wird wieder auf 0 gesetzt.

Der Aufruf in S360 findet z.B. alle 24,6 ms statt, falls der TIMERØ-Interrupt 638 alle 820 $\mu$s ausgelöst wird, und der Wert T1_TIME = 30 ist. Die Zeit T1_TIME muss an den jeweiligen Motor angepasst werden.

In S362 beginnt der Zähler Subtimer CNT_P.

In S364 wird der Zähler CNT_P um 1 dekrementiert.

In S366 wird CNT_P überprüft. Falls CNT_P > 0 ist, wird an das Ende S369 gesprungen. Falls CNT_P = 0 ist, so ist seit der letzten Kommutierung bzw. seit dem letzten Pumpen eine erhebliche Zeit verstrichen, und die Routine PUMP S616 muss in in S368 angefordert werden. In S368 wird das Anforderungsbit FCT_PUMP auf 1 gesetzt und dadurch die Funktion PUMP S616 (Fig. 24) angefordert. Danach wird an das Ende S369 gesprungen und die Routine TIMERØ_ Interrupt wird verlassen..

**Fig. 24** zeigt die Routine PUMP S616, welche durch die Routine TIMERØ-Interrupt S639 aufgerufen wird, wenn gepumpt werden muss.

In S367 wird der momentane Zustand COMMUT_STATE der Kommutierung gesichert. In S372 werden alle Ausgänge EN1, EN2, EN3, IN1, IN2, IN3 auf 0 gesetzt, wodurch die unteren Leistungsschalter 81, 83 und 85 geschlossen werden, so dass gepumpt wird. In S374 wird die für das Pumpen notwendige Zeit PUMP_TIME gewartet.

Daraufhin wird in S376 der in S367 gespeicherte Zustand COMMUT_STATE der Kommutierung wieder hergestellt. Dies kann auch geschehen, indem die Sollwerte EN1_S, EN2_S, EN3_S, IN1_S, IN2_S und IN3_S verwendet werden.

In S378 wird das Anforderungsbit FCT_PUMP der Routine PUMP S616 wieder zurückgesetzt, und es wird nach FCT_MAN S602 (Fig. 20) gesprungen.

### Überwachung der Betriebsspannung

**Fig. 25** zeigt das Unterprogramm UBT S620, welches zur Überwachung der Betriebsspannung +U_B dient, die in Fig. 11 am Anschluss 68 des $\mu$C 23 gemessen werden kann. Liegt +U_B außerhalb eines erlaubten Bereichs, so wird die Vollbrückenschaltung 78 entsprechend beeinflusst, damit die am Zwischenkreis 73, 74 angeschlossenen Bauteile, z.B. die Leistungstransistoren 80 bis 85, die Freilaufdioden 90 bis 95, der Kondensator 75, der Motor 32 und die Bauteile 77 (Fig. 2) nicht zerstört werden.

Das Unterprogramms UBT wird in der Interruptroutine TIMERØ-Interrupt S639 (S360 in Fig. 23) angefordert. Es werden folgende Variablen benutzt:

| U_B | Wert für die Betriebsspannung +U_B |
|---|---|
| U_MIN_OFF | Unterer Grenzwert für die Betriebsspannung +U_B |
| U_MAX_OFF | Oberer Grenzwert für die Betriebsspannung +U_B |
| U_MIN_ON | Unterer Grenzwert für Einschalten der Bestromung |
| U_MAX_ON | Oberer Grenzwert für Einschalten der Bestromung |
| U_OFF | Flag, ob Endstufe abgeschaltet |
| FCT_UBT | Anforderungsbit für die Funktion UBT S620 |

In S380 wird über den A/D-Wandler (im µC 23) abgefragt, wie hoch die Spannung am Eingang 68 des µC 23 ist, und das Resultat wird als digitaler Wert in der Variablen U_B gespeichert.

**Fig. 26** zeigt beispielhaft einen zeitlichen Verlauf der digitalisierten Größe U_B, die der analogen Größe +U_B (Betriebsspannung des Motors 32) entspricht.

Der Wert U_B kann zu klein werden, weil z.B. bei einem Elektrofahrzeug der Akkumulator entladen ist. Dann sinkt die Betriebsspannung unter einen unteren Grenzwert U_MIN_OFF, und der Motor 32 muss automatisch abgeschaltet werden. Steigt dann diese Spannung über einen höheren unteren Grenzwert U_MIN_ON an, so kann der Motor 32 wieder eingeschaltet werden. Hierdurch erhält man eine untere Schalthysterese.

Beim Bremsen kann die Größe U_B zu groß werden, weil der Motor 32 generatorisch Energie in den Kondensator 75 (Fig. 2) zurückliefert, so dass U_B ansteigt, weil diese Energie von den Verbrauchern 77 nicht verbraucht werden kann. Ein zu hoher Anstieg der Spannung U_B muss verhindert werden, da sonst die Bauteile 77 zerstört werden könnten.

Bei 340 ist ein Anstieg der Größe U_B dargestellt, der durch einen Bremsvorgang des Motors 32 entsteht. Bei 342 wird ein oberer Schwellwert U_MAX_OFF überschritten und alle Transistoren 80 bis 85 des Motors 32 werden gesperrt. Dadurch sinkt bei 344 der Wert U_B und erreicht bei 346 den niedrigeren Schwellwert U_MAX_ON, bei dem die Kommutierung der Transistoren 80 bis 85 wieder normal eingeschaltet wird, so dass bei 348 U_B wieder ansteigt. Bei 350 werden die Transistoren 80 bis 85 erneut gesperrt, so dass der Wert U_B erneut sinkt, und bei 352 wird wieder der Schwellwert U_MAX_ON erreicht, wo wieder die Kommutierung des Motors 32 eingeschaltet wird. Da jetzt bei diesem Beispiel der Bremsvorgang beendet ist, weil der Motor seine Solldrehzahl n_s erreicht, fällt U_B weiter bis auf einen "normalen" Wert 354, der im "sicheren Bereich" 356 liegt.

Ein "verbotener Bereich" mit zu niedriger Betriebsspannung U_B ist mit 360 bezeichnet, und ein verbotener Bereich mit zu hoher Betriebsspannung U_B mit 362.

Das Programm gemäß Fig. 25 dient zur Realisierung der soeben beschriebenen Abläufe. In den Schritten S382, S384 wird überprüft, ob die Größe U_B außerhalb des erlaubten Bereichs zwischen U_MIN_OFF und U_MAX_OFF liegt. Ist dies der Fall, so wird nach S386 gesprungen, ansonsten nach S390.

In S386 wird anhand der Variablen U_OFF überprüft, ob die Endstufe 78 bereits abgeschaltet ist. Ist dies der Fall, also U_OFF = 1, so kann die Routine UBT S620 verlassen werden, und es wird nach S398 gesprungen. Ansonsten wird in S388 U_OFF auf 1 gesetzt, und alle Ausgänge EN1, EN2, EN3 (Fig. 11) werden auf HIGH gesetzt, so dass alle Brückentransistoren 80 bis 85 (Fig. 2) nichtleitend gesteuert werden. Da die in den Phasen 115, 116, 117 induzierte Spannung bei geöffneten Leistungsschaltern 80 bis 85 unter der Spannung U_B am Kondensator 75 liegt, sind alle Freilaufdioden 90 bis 95 gesperrt, und es kann kein Strom und damit auch keine Leistung aus dem Motor 32 in den Zwischenkreis (dc link) 73, 74 fließen. Der Motor 32 ist also "freigeschaltet", d.h. er nimmt weder Leistung auf, noch gibt er Leistung ab.

In S390, S392 wird überprüft, ob sich U_B in dem erlaubten Bereich 356 (Fig. 24) befindet. Durch diesen erlaubten Bereich 356, der kleiner ist als der nicht erlaubte Bereich, welcher durch die Schritte S382 und S384 definiert ist, erhält man eine Hysterese der Strombegrenzung, was die Arbeitsweise des Motors verbessert. Ist keine Hysterese notwendig, so wird S394 direkt an die Alternative "N" von S384 angehängt, und die Schritte S390, S392 können entfallen.

Befindet sich U_B im erlaubten Bereich 356, so wird von S390 bzw. S392 nach S394 gesprungen; ansonsten wird nach S398 gesprungen.

In S394 wird überprüft, ob U_OFF schon 0 war, die Endstufe 78 also bereits normal kommutiert wurde. War U_OFF = 0, so wird nach S398 gesprungen, und sonst wird in S396 die Variable U_OFF auf 0 gesetzt, und bei COMMUT wird die Endstufe 78 gemäß der Tabelle in Fig. 3 normal in Abhängigkeit von den Hallsignalen HS1, HS2, HS3 kommutiert (vgl. Fig. 22). Hierbei kann man auch den Beginn der Kommutierung mit zunehmender Drehzahl in Richtung nach früh verlegen, vgl. hierzu beispielhaft die DE 197 00 479 A1.

Auf diese Weise kann der Motor 32 beim Bremsen, also dann, wenn er die vom Drehzahlregler vorgegebene gewünschte Drehzahl n_s überschreitet, Energie generatorisch in den Kondensator 75 (Fig. 2) zurückliefern, ohne dass dabei die Spannung U_B an diesem Kondensator unzulässige Werte annehmen kann.

Ebenso wird sichergestellt, dass der Motor 32 abgeschaltet wird, wenn seine Betriebsspannung U_B unter einen zulässigen Wert U_MIN_OFF absinkt, wodurch Fehlfunktionen des Motor 32 vermieden werden. Dies ist besonders wichtig, wenn ein solcher Motor aus einem - nicht dargestellten - Akkumulator betrieben wird, den man sich in Fig. 2 an der Stelle des Gleichrichters 72 denken muss, wie dem Fachmann geläufig ist.

In dem Unterprogramm COMMUT S348 (Fig. 22) wird die Endstufe 78 in Abhängigkeit von den Hallsignalen HS1, HS2, HS3 kommutiert, falls keine Störungen vorliegen. Das Unterprogramm COMMUT, das auch allgemein zur Kommutierung dient, berücksichtigt bei der Kommutierung den Wert von U_OFF. Hat U_OFF den Wert 1, so bleiben alle Signale EN1, EN2, EN3 (Fig. 11) auf HIGH, vgl. S302 in Fig. 22, d.h. alle Treiberbausteine 200 (Fig. 14) bleiben deaktiviert.

In S398 der Fig. 25 wird die Variable FCT_UBT auf 0 zurückgesetzt, und es wird an den Anfang des Funktionsmanagers FCT_MAN S602 (Fig. 20) gesprungen.

**Der Regler RGL 24**

Im folgenden werden Ausführungsbeispiele des Reglers RGL 24 für die in Fig. 16 aufgeführten Betriebsarten des Motors 32 gezeigt.

**Drehzahlregelung via Spannungsstellung**

**Fig. 27** zeigt die Routine RGL_U S624_1, welche eine Drehzahlregelung n_CTRL via Spannungsstellung U_CTRL durchführt, vgl. S502 in Fig. 16, d.h. die Drehzahl n wird dadurch geregelt, dass die Spannung am Motor 32 verändert wird. Die Routine RGL_U wird von der Interruptroutine HALL-Interrupt S631 (Fig. 21) nach der Berechnung der Drehzahl n angefordert, dort S350.

Es werden folgende Variablen benutzt:

| | |
|---|---|
| RGL_DIFF | Regeldifferenz |
| n_s | Gewünschte Drehzahl |
| n | Tatsächliche Drehzahl |
| RGL_PROP | Proportionalanteil |
| RGL_P | Proportionalfaktor |
| RGL_INT | Integralanteil |
| RGL_I | Integralfaktor |
| RGL_VAL | Vom Regler berechneter Stellwert |
| RGL_MAX | Maximaler Stellwert |
| PWM1 | Stellwert für das Signal PWM1 |
| PWM_I+ | Stellwert für die positive Strombegrenzung 131 |
| PWM_I- | Stellwert für die negative Strombegrenzung 161 |
| FCT_RGL | Anforderungsbit der Routine RGL S624_1 |

Die Routine RGL_U führt bei diesem Beispiel eine PI-Regelung zur Berechnung des Stellwerts RGL_VAL aus. Der Stellwert RGL_VAL wird auf Zulässigkeit überprüft und dem PWM-Generator 25 (Fig. 11) zur Erzeugung des Signals PWM1 zugeführt.

In S400 wird die Regeldifferenz RGL_DIFF als Differenz der gewünschten Drehzahl n_s und der aktuellen Drehzahl n berechnet.

In S402 wird der Proportionalanteil RGL_PROP durch Multiplikation der Regeldifferenz RGL_DIFF mit dem Proportionalfaktor RGL_P berechnet. Der neue Integralanteil RGL_INT wird durch Addition des alten Integralanteils RGL_INT zu dem Ergebnis der Multiplikation der Regeldifferenz RGL_DIFF mit dem Integralfaktor RGL_I berechnet, und der Stellwert RGL_VAL ergibt sich aus der Summe des Proportionalanteils RGL_PROP und des Integralanteils RGL_INT.

In den Schritten S404 bis S410 wird geprüft, ob sich der Stellwert RGL_VAL in einem zulässigen Bereich befindet.

Ist der Stellwert RGL_VAL kleiner als 0, so wird er in S406 auf 0 gesetzt.

Ist der Stellwert RGL_VAL größer als der maximal zulässige Wert RGL_MAX, so wird er in S410 auf RGL_MAX gesetzt.

In S412 wird der Wert PWM1 auf den - ggf. begrenzten - Stellwert RGL_VAL gesetzt, und die Werte PWM_I+ bzw. PWM_I- werden auf die für den maximalen Strom i_2 bzw i_2' maximal zulässigen Werte I_max+ bzw. I_max- gesetzt. Mit diesen Werten findet eine Regelung der Drehzahl n auf den gewünschten Wert n_s via Spannungsstellung statt. Die positive Hardware-Strombegrenzung 131 (Fig. 6) begrenzt den Strom i_2 auf I_max+, und die negative Hardware-Strombegrenzung 161 (Fig. 8) begrenzt den Strom i_2' auf I_max-.

In S414 wird die Routine RGL _U durch Setzen von FCT_RGL auf 0 beendet, und es erfolgt ein Sprung nach FCT_MAN S602 (Fig. 20).

Anstelle eines PI-Reglers kann selbstverständlich auch ein anderer Regler, z.B. ein PID-Regler, verwendet werden, wie das dem Fachmann bekannt ist.

**Drehzahlregelung via Stromstellung**

**Fig. 28** zeigt die Routine RGL_I S624_2, welche eine Drehzahlregelung n_CTRL via Stromstellung I_CTRL durchführt, vgl. S518 in Fig. 16, d.h. die Drehzahl wird dadurch geregelt, dass der Strom verändert wird, auf den die Strombegrenzungsanordnung 131 und/oder 161 eingestellt wird.

Die Routine RGL_I wird von der Interruptroutine HALL-Interrupt S631 (Fig. 21) nach der Berechnung der Drehzahl n angefordert, dort S350.

Es werden folgende Variablen benutzt:

| | |
|---|---|
| RGL_DIFF | Regeldifferenz |
| n_s | Gewünschte Drehzahl |
| n | Tatsächliche Drehzahl |
| RGL_PROP | Proportionalanteil |
| RGL_P | Proportionalfaktor |
| RGL_INT | Integralanteil |
| RGL_I | Integralfaktor |
| RGL_VAL | Vom Regler berechneter Stellwert |
| RGL_MAX | Maximaler Stellwert |
| PWM1 | Stellwert für das Signal PWM1 |
| PWM_I+ | Stellwert für die positive Strombegrenzung 131 |
| PWM_I- | Stellwert für die negative Strombegrenzung 161 |
| FCT_RGL | Anforderungsbit der Routine RGL S624_2 |

Die Routine RGL_I (Fig. 28) führt eine PI-Regelung zur Berechnung des Stellwerts RGL_VAL aus, welcher auf Zulässigkeit überprüft und dem PWM-Generator 29 (Fig. 11) zugeführt wird, der die positive Strombegrenzung 131 steuert.

Die Schritte S420 bis S430 entsprechen den analogen Schritten S400 bis S410 der Routine RGL_U S624_1. Die Regeldifferenz RGL_DIFF wird in S420 berechnet, der PI-Regler berechnet in S422 den Stellwert RGL_VAL, und in S424 bis S430 findet eine Bereichsüberprüfung des Stellwerts RGL_VAL statt.

Die Begrenzung von RGL_VAL auf RGL_MAX erscheint wichtig, da damit eine Begrenzung des maximalen Motorstroms i_2 erreicht wird.

In S432 wird der Wert PWM1 auf einen Wert U_max gesetzt, der so groß ist, dass die positive Strombegrenzung immer aktiv ist, also z.B. auf 100 %, so dass der Motorstrom ständig die Form von Stromimpulsen hat. Der Wert PWM_I+ wird auf den - ggf. durch S424 bis S 430 begrenzten - Stellwert RGL_VAL gesetzt. Damit findet eine Regelung der Drehzahl n auf den gewünschten Wert n_s via Stromstellung statt. Der Wert PWM_I- wird auf den für den maximalen Strom i_2' und die augenblickliche Drehzahl maximal zulässigen Wert I_max-gesetzt. Die negative Hardware-Strombegrenzung 161 begrenzt den Strom i_2'.

Da der Stellwert RGL_VAL den Wert festlegt, bei dem die positive Strombegrenzung 131 wirksam wird, muss der Wert RGL_MAX der Bereichsüberprüfung in S428 und S430 so gewählt werden, dass der Strom i_2 nicht größer als der zulässige Maximalstrom I_max+ werden kann.

In S434 wird die Routine RGL_I S624_2 durch Setzen von FCT_RGL auf 0 beendet, und es erfolgt ein Sprung nach FCT_MAN S602 (Fig. 20).

Anstelle eines PI-Reglers kann selbstverständlich auch ein anderer Regler, wie z.B. ein PID-Regler, verwendet werden, wie dem Fachmann bekannt ist.

**Positive Drehmomenteinstellung via Stromstellung**

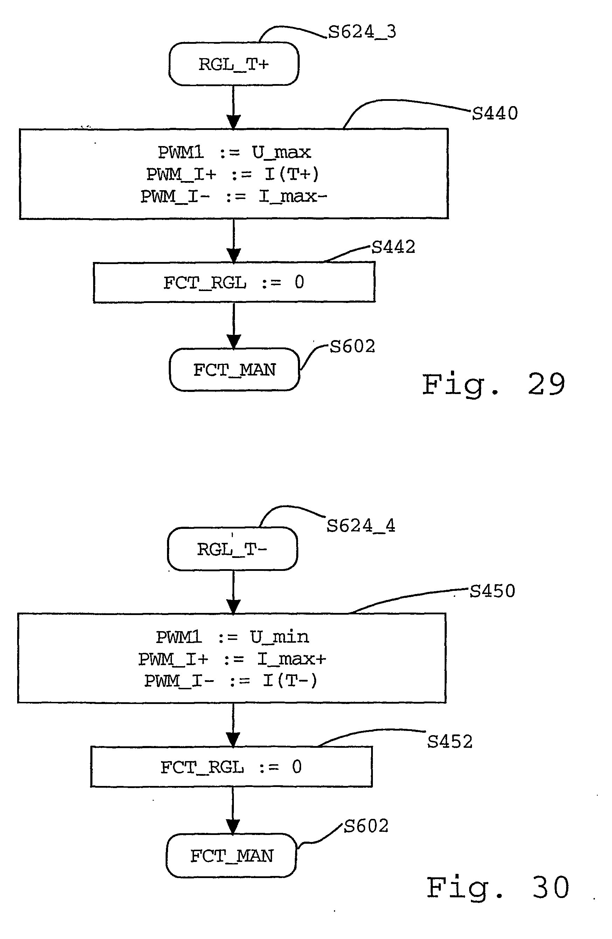

**Fig. 29** zeigt die Routine RGL_T+ S624_3, welche eine positive Drehmomenteinstellung T_CTRL pos. via Stromstellung I_CTRL durchführt, vgl. S510 in Fig. 16, d.h. das gewünschte Drehmoment T+ wird dadurch eingestellt, dass der Strom i_2 auf einen vorgegebenen Wert geregelt wird.

Die Routine RGL S624_3 wird von der Interruptroutine HALL-Interrupt S631 (Fig. 21) nach der Berechnung der Drehzahl n angefordert, dort S350. Da in diesem Fall keine Drehzahlregelung stattfindet, wäre auch ein von der Berechnung der Drehzahl n unabhängiger Aufruf möglich.

Folgende Variablen werden benutzt:

PWM1  Stellwert für das Signal PWM1
U_max  Wert für PWM1, bei dem die Strombegrenzung 131 aktiv ist
PWM_I+  Stellwert für die positive Strombegrenzung 131
I(T+)  Wert für PWM_I+, der dem Drehmoment T+ entspricht
PWM_I-  Stellwert für die negative Strombegrenzung 161
I_max-  Wert für den maximal zulässigen Bremsstrom i_2'
FCT_RGL  Anforderungsbit der Routine RGL_T+ S624_3

Die Routine RGL_T+ stellt in S440 das Signal PWM1 auf einen Wert U_max ein, bei dem die positive Strombegrenzung 131 ständig aktiv ist, also gewöhnlich auf 100 %. Das Signal PWM_I+ wird auf einen Wert I(T+) gesetzt, der dem gewünschten positiven Drehmoment T+ entspricht, und PWM_I- wird auf einen Wert I_max- gesetzt, der dem maximal zulässigen Bremsstrom i_2' entspricht, vgl. S512 in Fig. 16.

In S442 wird das Anforderungsbit FCT_RGL wieder auf 0 gesetzt, da die Routine RGL_T+ abgearbeitet ist.

Daraufhin wird wieder an den Anfang FCT_MAN S602 des Funktionsmanagers 601 (Fig. 20) gesprungen.

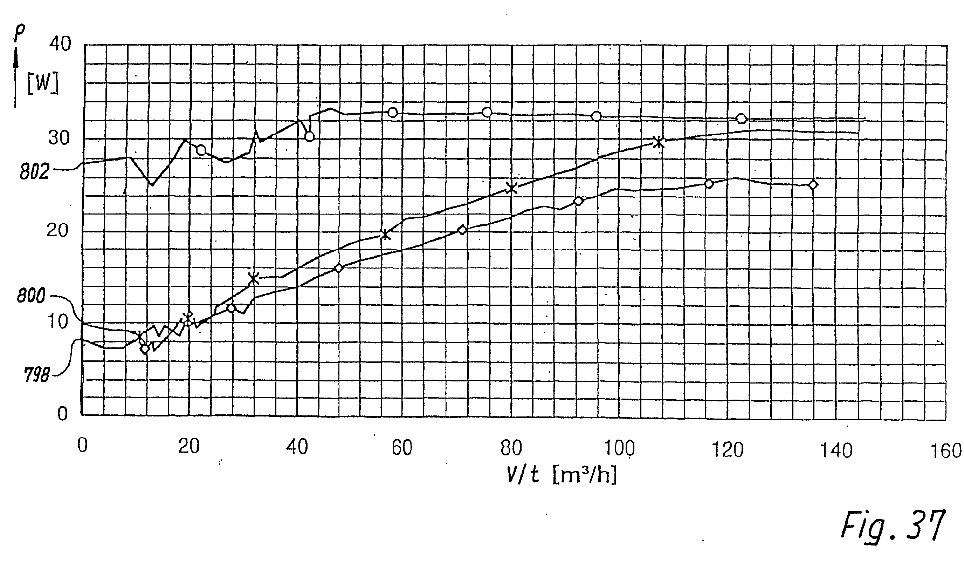

Da - wegen PWM1 = U_max - die positive Strombegrenzung ständig wirksam ist, wird durch sie der Strom auf den gewünschten Wert geregelt, und dadurch wird das Drehmoment des Motors konstant gehalten. Dieer Kurve 796 der Fig. 36 zeigt die Konstanthaltung des Stroms über einen großen Lastbereich, die Kurve 802 der Fig. 37 die sich daraus ergebende Konstanthaltung der vom Motor aufgenommenen Leistung P, und die Kurve 790 der Fig. 35 zeigt, wie sich infolge des konstanten Drehmoments die Drehzahl eines Lüfters bei unterschiedlicher Belastung stark ändert. Die Aufnahme einer konstanten Leistung erlaubt es, Netzteile, Batterien etc. knapper zu dimensionieren und führt - indirekt - zu einer starken Reduzierung der Investitionskosten.

**Negative Drehmomenteinstellung via Stromstellung**

**Fig. 30** zeigt die Routine RGL_T- S624_4, welche eine negative Drehmomenteinstellung T_CTRL neg. via Stromstellung I_CTRL durchführt, vgl. S514 in Fig. 16, d.h. das gewünschte Bremsmoment T- wird dadurch eingestellt, dass der Strom i_2' auf einen vorgegebenen Wert geregelt wird.

Die Routine RGL_T- wird z.B. von der Interruptroutine HALL-Interrupt S631 (Fig. 21) nach der Berechnung der Drehzahl n angefordert, dort S350. Da in dieser Betriebsart keine Drehzahlregelung stattfindet, wäre auch ein von der Berechnung der Drehzahl n unabhängiger Aufruf möglich.

Es werden folgende Variablen benutzt:

PWM1  Stellwert für das Signal PWM1
U_min  Wert für PWM1, bei dem die Strombegrenzung 161 aktiv ist
PWM_I+  Stellwert für die positive Strombegrenzung 131
I_max+  Wert für den maximal zulässigen Antriebsstrom i_2
PWM_I-  Stellwert für die negative Strombegrenzung 161
I(T-)  Wert für PWM_I-, der dem Drehmoment T- entspricht
FCT_RGL  Anforderungsbit der Routine RGL S624_4

Die Routine RGL_T- stellt in S450 das Signal PWM1 auf einen Wert U_min ein, bei dem die negative Strombegrenzung 161 ständig aktiv ist. Das Signal PWM_I- wird auf den Wert I(T-) gesetzt, welcher dem gewünschten negativen Drehmoment T- entspricht, und PWM_I+ wird auf den dem maximal zulässigen Antriebsstrom i_2 entsprechenden Wert I_max+ gesetzt, z.B. auf 100 %, vgl. S516 in Fig. 16.

In S452 wird das Anforderungsbit FCT_RGL wieder auf 0 gesetzt, da die Routine RGL_T- abgearbeitet ist.

Daraufhin wird wieder an den Anfang FCT_MAN S602 des Funktionsmanagers 601 (Fig. 20) gesprungen.

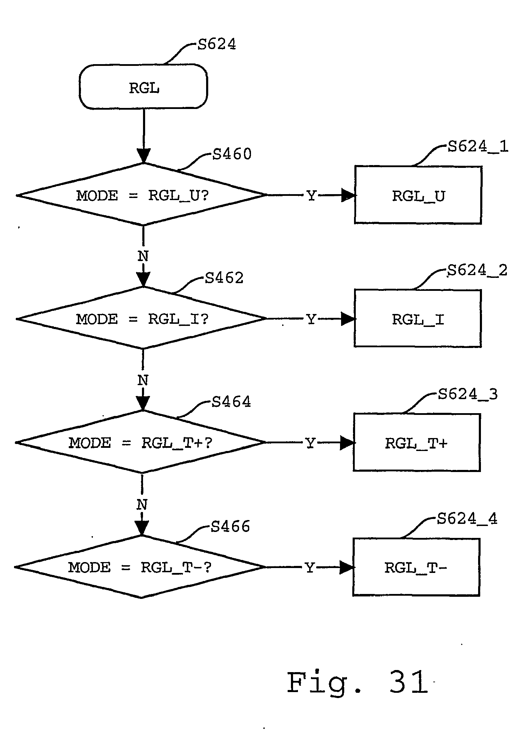

Auf diese Weise wird das Bremsmoment in einem großen Drehzahlbereich auf einem konstanten Wert gehalten. **Fig. 31** zeigt die Routine RGL S624. Diese ermöglicht eine Auswahl, welche der Routinen RGL_U S624_1 (Fig. 27), RGL_I S624_2 (Fig. 28), RGL_T+ S624_3 (Fig. 29) und RGL_T- S624_4 (Fig. 30) für den Regler RGL 24 (Fig. 11) verwendet werden soll. Alternativ kann man in einem Motor auch nur eine oder zwei dieser Routinen vorsehen. Z.B. braucht ein Lüfter gewöhnlich keine Bremsroutine.

Die Routine RGL S624 wird z.B. von der Interruptroutine HALL-Interrupt S631 (Fig. 21) nach der Berechnung der Drehzahl n angefordert, dort S350.

Es werden folgende Variablen benutzt:

MODE  gewählte Betriebsart
RGL_U  Wert für Betriebsart RGL_U S624_1
RGL_I  Wert für Betriebsart RGL_I S624_2

RGL_T+      Wert für Betriebsart RGL_T+ S624_3

RGL_T-      Wert für Betriebsart RGL_T- S624_4

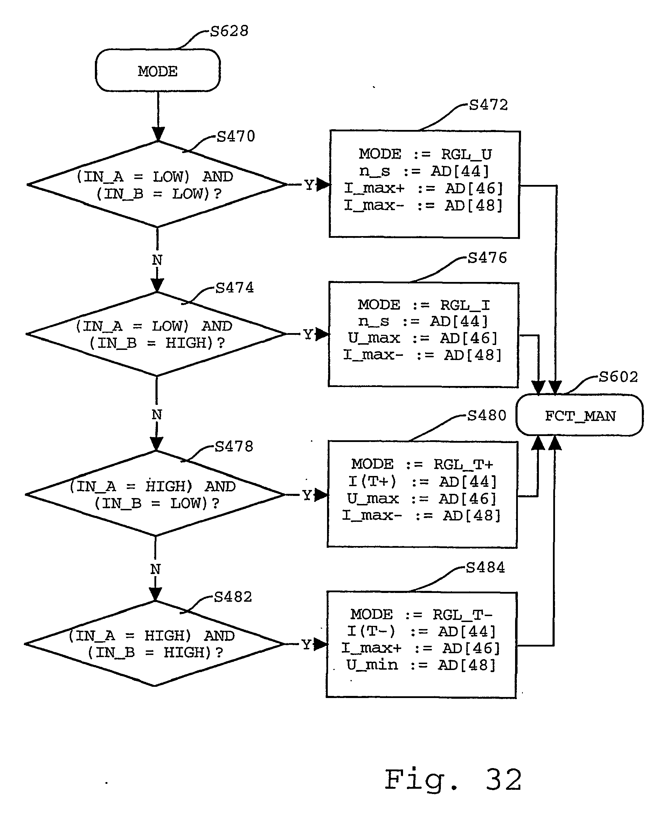

Die Variable MODE gibt die Betriebsart vor, in der der Motor 32 betrieben wird. Die Variable MODE wird in der Routine MODE S628 (Fig. 20) gesetzt. Ein Ausführungsbeispiel für die Routine MODE S628 ist in Fig. 32 gegeben.

In S460 wird überprüft, ob die gewählte Betriebsart MODE gleich der Betriebsart RGL_U ist. Falls ja, so wird die Routine RGL_U S624_1 aufgerufen.

Ansonsten wird in S462 überprüft, ob die gewählte Betriebsart MODE gleich der Betriebsart RGL_I ist. Falls ja, so wird die Routine RGL_I S624_2 aufgerufen.

In gleicher Weise wird in S464 und S466 überprüft, ob die Betriebsarten RGL_T+ S624_3 oder RGL_T- S624_4 gewählt sind, und die entsprechenden Routinen werden aufgerufen.

**Fig. 32** zeigt die Routine MODE S628. Diese Routine setzt in Abhängigkeit von den Eingabeleitungen IN_A, IN_B, 44, 46 und 48 des µC 23 (Fig. 11) die Betriebsart des Motors 32. Sie wird von der Routine TIMERØ-Interrupt S639 (Fig. 23) in S360 angefordert und durch den Funktionsmanager 601 (Fig. 20) in S626 aufgerufen.

Es werden folgende Variablen benutzt:

MODE      gewählte Betriebsart

n_s      Drehzahlvorgabe (gewünschte Drehzahl)

I_max+      Wert für den maximal zulässigen Antriebsstrom i_2

I_max-      Wert für den maximal zulässigen Bremsstrom i_2'

U_max      Wert für PWM1, bei dem die positive Strombegrenzung 131 aktiv ist

I(T+)      Wert für PWM_I+, der das Drehmoment T+ bewirkt

I(T-)      Wert für PWM_I-, der das Drehmoment T- bewirkt

U_min      Wert für PWM1, bei dem die negative Strombegrenzung 161 aktiv ist

In der Routine MODE S628 wird anhand der Eingänge IN_A und IN_B (Fig. 11), welche z.B. von außerhalb des Motors 32 eingestellt oder über den Bus 18 übermittelt werden können, ausgewählt, welche Betriebsart MODE verwendet werden soll. Bei der gewählten Betriebsart werden die Parameter für den Regler RGL S624 (Fig. 31) gesetzt, indem über den A/D-Wandler 30 (Fig. 11) durch eine Funktion AD[x] der analoge Wert am Eingang x digitalisiert wird. Der Wert x ist einer der Eingänge 44, 46 oder 48 des µC 23, und ihr analoger Wert wird durch die Potentiometer 43, 45 bzw. 47 bestimmt.

In S470 wird überprüft, ob IN_A = LOW und IN_B = LOW ist. Falls ja, wird nach S472 gesprungen. Die gewählte Betriebsart MODE wird auf RGL_U gesetzt, so dass durch die Routine RGL S624 (Fig. 31) die Routine RGL_U S624_1 (Fig. 27) aufgerufen wird, die eine Drehzahlregelung n_CTRL via Spannungseinstellung U_CTRL durchführt. Die Drehzahlvorgabe n_s wird auf den digitalisierten Wert AD[44], der Wert I_max+ für den maximal zulässigen Antriebsstrom i_2 wird auf den Wert AD[46] und der Wert I_max- für den maximal zulässigen Bremsstrom i_2' wird auf den Wert AD[48] gesetzt. Daraufhin erfolgt ein Sprung zu FCT_MAN S602. AD[44] bedeutet z.B. den Wert am Eingang 44 der Fig. 11.

In gleicher Weise wird in S474 überprüft, ob IN_A = LOW und IN_B = HIGH ist.

Falls ja, wird in S476 die Betriebsart MODE auf RGL_I gesetzt, die Drehzahlvorgabe n_s wird auf den digitalisierten Wert AD[44], der Wert U_max auf den Wert AD[46] und der Wert I_max- auf den Wert AD[48] gesetzt.

In S478 wird überprüft, ob IN_A = HIGH und IN_B = LOW ist. Falls ja, wird in S480 die Betriebsart MODE auf RGL_T+ gesetzt, der Wert I(T+) wird auf den Wert AD[44], der Wert U_max auf den Wert AD[46] und der Wert I_max- auf den Wert AD[48] gesetzt.

In S482 wird überprüft, ob IN_A = HIGH und IN_B = HIGH ist. Falls ja, wird in S484 die Betriebsart MODE auf RGL_T- gesetzt, der Wert I(T-) wird auf den Wert AD[44], der Wert I_max+ auf den Wert AD[46] und der Wert U_min auf den Wert AD[48] gesetzt.

Selbstverständlich kann man die Betriebsart auch auf andere Weise eingeben, z.B. über den Bus 18 oder das EEPROM 20 (Fig. 11). Die Betriebsparameter, die in diesem Ausführungsbeispiel über die Eingänge IN_A, IN_B, 44, 46 und 48 eingegeben wurden, können auch über den Bus 18 oder das EEPROM 20 eingegeben werden, z.B. durch Austausch des EEPROMs oder eines ROMs.

Bei der Bestimmung der Betriebsart in MODE (Fig. 32) können auch Parameter des Motors 32 einbezogen werden. Z.B. kann der Motor 32 auf ein Signal IN_A hin die Betriebsart RGL_I für eine Drehzahlregelung n_CTRL via Stromsteuerung I_CTRL durchführen, um eine gewünschte Drehzahl n_s zu erreichen. Nach Erreichen der Drehzahl n_s wird dann z.B. in der Routine MODE S628 auf die Betriebsart RGL_T- umgeschaltet, und die Gleichstrommaschine 32 arbeitet mit einem konstanten bremsenden Drehmoment, also als Generator. Der anfängliche Antrieb der Gleichstrommaschine 32 auf eine Drehzahl n_s kann z.B. deshalb notwendig sein, weil sonst eine zu große Relativgeschwindigkeit zwischen der Gleichstrommaschine 32 und einem zu bremsenden Objekt entstehen würde.

**Fig. 33** zeigt einen Radiallüfter 370 mit einem Gehäuse 771, welches einen Lufteinlass 772 und einen Luftauslass 774 aufweist. Ein Motor 32 treibt ein Radiallüfterrad 776 an, um Luft vom Lufteinlass 772 zum Luftauslass 774 zu transportieren. Über zwei Leitungen 778 wird dem Motor 32 eine Betriebsspannung +U_B zugeführt. Die elektrischen und elektronischen Komponenten des Motors 32 befinden sich bevorzugt im Gehäuse 771.

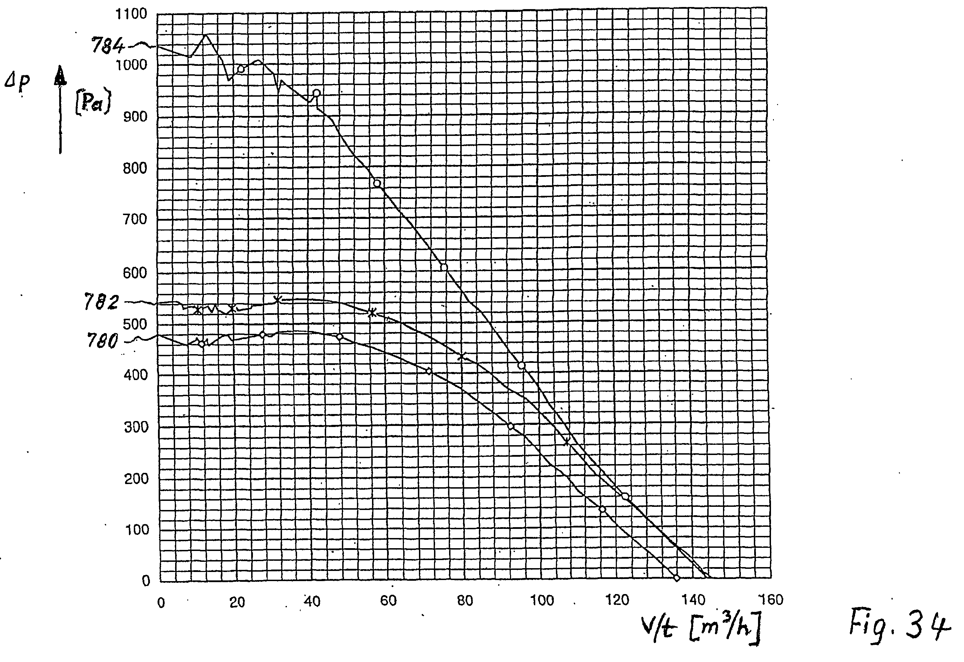

**Fig. 34** zeigt Kennlinien des Radiallüfters 370 der Fig. 33, bei denen die Druckerhöhung Δp über dem Volumenstrom V/t aufgetragen ist. Bei den Kurven 780 und 782 wurde der Radiallüfter mit Drehzahlregelung n_CTRL via Spannungssteuerung U_CTRL betrieben, wobei er bei der Kurve 780 auf 3800 U/min und bei der Kurve 782 auf 4000 U/min geregelt wurde. Bei der Kurve 784 wurde der Radiallüfter mit positiver Drehmomentensteuerung betrieben, bei der der Motorstrom I auf einen konstanten Wert gesetzt wurde, damit das Lüfterrad 776 in einem weiten Drehzahlbereich mit einem im wesentlichen konstanten Drehmoment angetrieben wird.

Die Kennlinie 784 des Radiallüfters, der mit einem positiven konstanten Drehmoment betrieben wird, ist wesentlich besser als die Kurven 780 und 782, da auch bei großen Druckdifferenzen Δp noch ein ausreichender Volumenstrom generiert wird, oder anders gesagt: Ein Lüfter mit der Kennlinie 784 kann bei einem erheblich höheren Gegendruck noch einen ausreichend hohen Volumenstrom erzeugen. Ein Radiallüfter mit der Kennlinie 784 hat folglich mehr Anwendungsgebiete. (Je steiler die Kennlinie 784 ist, desto günstiger für den Betrieb eines solchen Lüfters.)

Sehr vorteilhaft ist auch, dass in einer gegebenen Installation eines Radiallüfters, der mit konstantem Drehmoment angetrieben wird, die Drehzahl ansteigt, wenn ein Filter verstopft ist und folglich der Gegendruck ansteigt. Bei einem vorgegebenen Anstieg der Drehzahl kann also automatisch ein Alarmsignal ausgelöst werden, damit das Filter kontrolliert und ggf. ausgewechselt wird. Dies zeigt Fig. 38.

In den nachfolgenden Figuren 35, 36 und 37 gelten folgende Entsprechungen:

Die Kurve 780 (3800 U/min) entspricht den Kurven 786 bzw. 792 bzw. 798.
Die Kurve 782 (4000 U/min) entspricht den Kurven 788 bzw. 794 bzw. 800.
Die Kurve 784 (konstantes Drehmoment) entspricht den Kurven 790 bzw. 796 bzw. 802.

**Fig. 35** zeigt Kennlinien für verschiedene Lüftertypen, wobei die Drehzahl n über den Volumenstrom V/t aufgetragen ist.

Die Kurve 786 zeigt, dass eine Regelung auf die Drehzahl n_s = 3800 rpm stattfindet. Die Kurve 788 zeigt dementsprechend eine Regelung auf die Drehzahl n_s = 4000. Bei der der Kurve 790 (für den Radiallüfter 370) steigt die Drehzahl zu geringerem Volumenstrom V/t hin an. Hierdurch wird gemäß Fig. 34 auch bei höheren Druckdifferenzen Δp noch ein großer Volumenstrom V/t ermöglicht. Bei der Kurve 790 arbeitet der Radiallüfter 370 mit einem konstanten Drehmoment T+.

**Fig. 36** zeigt Kennlinien für verschiedene Lüftertypen, bei denen der Strom I durch den Motor 32 über dem Volumenstrom V/t aufgetragen ist.

Der Strom I bei der Kurve 796 ist in einem großen Bereich konstant, nimmt jedoch zu kleineren Volumenströmen hin leicht ab. Dies geht vermutlich auf Probleme mit dem Netzteil zurück, das bei der vorliegenden Messung verwendet wurde. Bei den Kurven 792 und 794 nimmt der Strom I mit zunehmendem Volumenstrom V/t zu.

**Fig. 37** zeigt für verschiedene Lüftertypen Kennlinien 798, 800 und 802, bei denen die Leistung P über dem Volumenstrom V/t aufgetragen ist.

Bei der Kurve 802 für den Radiallüfter 370 ist die Leistung bei größeren Volumenströmen V/t ziemlich konstant, wie es bei konstantem Motorstrom I zu erwarten ist; zu kleinerem Volumenstrom V/t hin nimmt die Leistung P leicht ab. Dies ist ebenfalls auf Probleme mit dem für die Messungen verwendeten Netzteil zurückzuführen. Bei den Kurven 798, 800 nimmt die Leistung mit zunehmendem Volumenstrom V/t zu.

Ein Betrieb gemäß der Kurve 802, also mit konstanter Leistung P, kann deshalb sehr vorteilhaft sein, weil das Netzteil des Motors 32 nur für diese Leistung dimensioniert zu werden braucht.

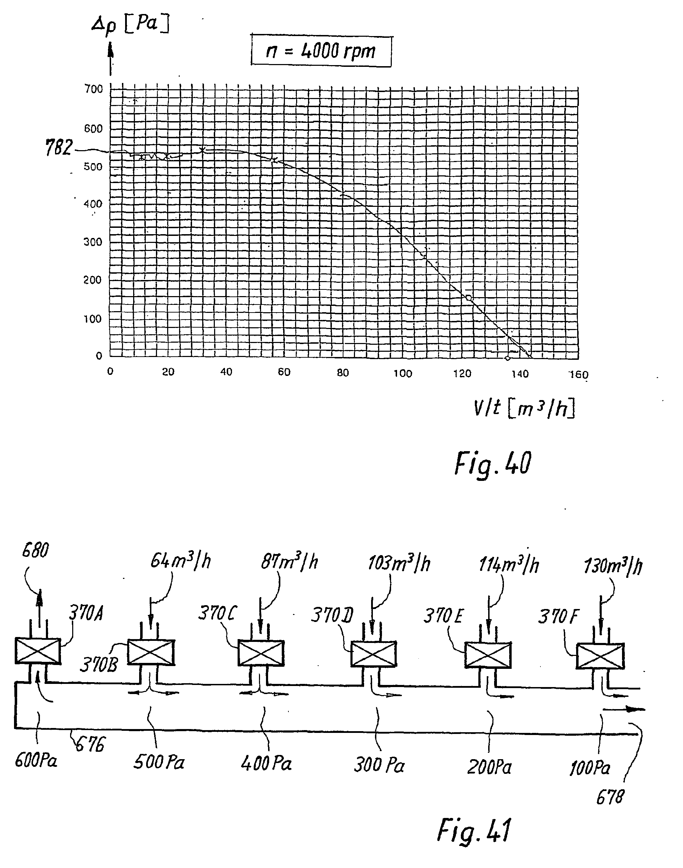

Ein Radiallüfter, der mit konstantem positivem Drehmoment arbeitet (Kennlinie 802), also mit etwa konstantem Motorstrom I, ist für einen größeren Bereich von Druckdifferenzen Δp (Fig. 34) geeignet, so dass er z.B. in einem Hochhaus gleich gut im 1. wie im 12. Stock verwendet werden kann, um eine Toilette oder Küche über einen gemeinsamen Abluftkanal zu entlüften. Dies wird nachfolgend anhand der Fig. 40 bis 43 erläutert.

Hierdurch kann ein Radiallüfter 370 mit positiver Drehmomentensteuerung z.B. in allen Stockwerken eines Hochhauses, bei denen im Lüftungsschacht in Abhängigkeit von dem Stockwerk sehr unterschiedliche Drücke herrschen, zur Entlüftung verwendet werden, während ein Radiallüfter 370 mit Drehzahlregelung n_CTRL via Spannungssteuerung U_CTRL nur in vorgegebenen Stockwerken verwendet werden könnte, d.h. eine größere Typenvielfalt von Axiallüftem bzw. nicht erfindungsgemäßen Radiallüftern kann durch einen einzigen Typ oder weniger Typen eines erfindungsgemäßen Radiallüfters ersetzt werden, der mit einem im wesentlichen konstanten Drehmoment T+ betrieben wird.

**Fig. 38** zeigt schematisch eine Mobilfunkstation 650. Diese hat unten ein Filter 652 für die bei 654 zuströmende und bei 656 abströmende Kühlluft. Oben befindet sich ein Radiallüfter 370, z.B. von der Art, wie sie in Fig. 33 dargestellt ist. Dieser Lüfter erhält seinen Strom über einen Regler 658. Sein Stromanschluss ist wie in Fig. 33 mit 778 bezeichnet. - In einem Raum 660 befinden sich die zu kühlenden, nicht dargestellten Bauelemente der Station 650.

Es sei angenommen, dass das Filter 652 im neuen Zustand einen Druckabfall Δp von 300 Pa verursacht. Dann ergibt sich gemäß **Fig. 39** auf der Kurve 784 (Regler 658 = Stromregler, der auf einen konstanten Strom regelt) ein Arbeitspunkt 662 entsprechend einem Volumenstrom der Kühlluft von 107 m$^3$/h.

Wenn der Regler 658 ein Drehzahlregler ist, der den Lüfter 370 auf eine konstante Drehzahl von 4000 U/min regelt, ergibt sich auf der Kurve 782 ein Arbeitspunkt 664 entsprechend einem Volumenstrom von 103 m3/h, d.h. bei neuem Filter 652 unterscheiden sich die Arbeitspunkte 662 und 664 kaum.

Verschmutzt das Filter 652 so, dass der Druckabfall Δp auf 600 Pa ansteigt, so ergibt sich gemäß Fig. 39 kein Schnittpunkt mehr mit der Kurve 782, d.h. bei Regelung auf eine konstante Drehzahl von 4000 U/min fördert der Lüfter 370 keine Luft mehr durch das Filter 652, und die Elektronik im Raum 660 wird nicht mehr gekühlt.

Dagegen ergibt sich auf der Kurve 784 (Regelung auf konstanten Strom, also konstantes Drehmoment) ein Arbeitspunkt 666 entsprechend einem Volumenstrom von 76 m$^3$/h. Wie man Fig. 35 entnimmt, ist dies die Folge davon, dass an diesem Arbeitspunkt die Drehzahl des Radiallüfters 370 auf 4500 U/min angestiegen ist, während sie beim Arbeitspunkt 662 nur 4150 U/min beträgt.

Trotz der Verdoppelung des Druckabfalls nimmt also in diesem Fall die Kühlluftmenge nur um 29 % ab, weil - wegen der Regelung auf I = const - die Drehzahl n des Lüfters 370 um 8,4 % angestiegen ist.

In der Praxis wird man den Lüfter 370 in einem solchen Fall so auslegen, dass die Kühlluftmenge bei stärker verschmutztem Filter 652 noch 100 % beträgt.

Ein wesentlicher Vorteil ist, dass dann, wenn der Regler 658 den Radiallüfter 370 auf konstanten Strom regelt, bei Fig. 38 meist ein einziger Lüfter genügt, während dann, wenn der Regler 658 den Lüfter 370 auf eine konstante Drehzahl von z.B. 4000 U/min regelt, aus Sicherheitsgründen meist zwei parallele Lüfter 370 verwendet werden müssen, damit auch bei verschmutztem Filter 652 die Kühlung der Komponenten 660 gewährleistet ist.

Wie man Fig. 39 entnimmt, kann der Lüfter 370 mit Stromregelung (Kurve 784) auch noch bei einem Druckabfall Δp von 900 Pa eine Kühlung aufrecht erhalten. Dies ist der Arbeitspunkt 668, an dem sich noch ein Volumenstrom von 44 m3/h ergibt, weil dort gemäß Fig. 35 die Drehzahl n des Lüfters 370 auf 5150 U/min angestiegen ist.

Der Anstieg der Drehzahl n mit zunehmender Verschmutzung des Filters 652 kann dazu ausgenutzt werden, um automatisch ein Warnsignal zu erzeugen, wenn das Filter 652 stärker verschmutzt ist. Hierzu dient ein Drehzahl-Überwachungsglied 672, z.B. eine entsprechende Routine im Programm, welche bei Überschreiten einer Drehzahl no (z.B. 4500 U/min) ein Signal ALARM erzeugt, das per Telemetrie an eine Zentralstation übertragen wird, damit das Filter 652 bei der nächsten Routinewartung ausgetauscht wird. Wenn das Filter 652 nicht ausgetauscht wird, bleibt das Signal ALARM bestehen, und man hat so in der Zentralstation eine Kontrolle darüber, ob die Wartungsarbeiten ordnungsgemäß erledigt wurden oder nicht.

**Fig. 41** zeigt einen Entlüftungskanal 676, dessen Auslass mit 678 bezeichnet ist und an den sechs Radiallüfter 370A bis 370F des in Fig. 33 dargestellten Typs angeschlossen sind, die alle auf eine konstante Drehzahl von 4000 rpm geregelt werden. **Fig. 40** zeigt die zugehörige Lüfterkennlinie 782, d.h. bei einem Gegendruck von 0 Pa fördert ein solcher Lüfter etwa 144 m$^3$ Luft pro Stunde, und bei einem Gegendruck von 400 Pa etwa 88 m3/h.

Die sechs Lüfter 370A bis 370F, welche in den Kanal 676 fördern, erzeugen z.B. am rechten Lüfter 370F einen Druck von etwa 100 Pa, der nach links bis auf 600 Pa (beim Lüfter 370A) zunimmt. Dadurch ergeben sich die Fördermengen gemäß folgender Tabelle:

| Fan | Δp (Pa) | n (rpm) | V/t (m^3/h) |
|---|---|---|---|
| 370A | 600 | 4000 | (-) |
| 370B | 500 | 4000 | 64 |
| 370C | 400 | 4000 | 87 |
| 370D | 300 | 4000 | 103 |
| 370E | 200 | 4000 | 114 |
| 370F | 100 | 4000 | 130 |

Man erkennt, dass die geförderte Luftmenge in Fig. 41 nach links rasch abnimmt, und dass der Lüfter 370A überhaupt keine Luft fördern kann, sondern dass Luft aus ihm herausströmt, wie durch einen Pfeil 680 angedeutet. Wenn es sich z.B. um die Entlüftung von Toiletten handelt, würde also dem Lüfter 370A der Geruch der Toilette des Lüfters 370B entströmen.

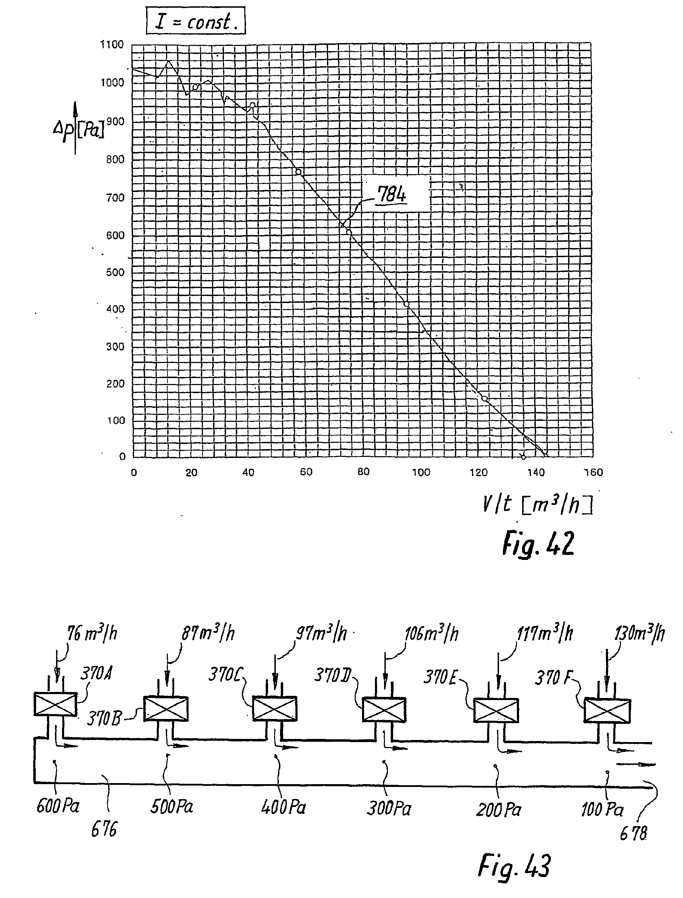

**Fig. 42** und **Fig. 43** zeigen zum Vergleich dieselbe Anordnung mit dem Kanal 676 und den sechs Lüftern 370A bis 370F, wobei aber diese Lüfter jeweils mit konstantem Strom, also einem im wesentlichen konstanten Drehmoment, betrieben werden. Wie man Fig. 42 direkt entnimmt, kann ein solcher Lüfter einen wesentlich höheren Druck erzeugen, weil bei zunehmendem Gegendruck seine Drehzahl automatisch ansteigt. Dies zeigt die nachfolgende Tabelle:

| Fan | $\Delta p$ (Pa) | n (rpm) | V/t (m^3/h) |
|------|------|------|------|
| 370A | 600 | 4500 | 76 |
| 370B | 500 | 4350 | 87 |
| 370C | 400 | 4230 | 97 |
| 370D | 300 | 4150 | 106 |
| 370E | 200 | 4100 | 117 |
| 370F | 100 | 4100 | 130 |

Man erkennt, dass der Lüfter 370F in Fig. 43 eine Luftmenge von 130 m$^3$ pro Stunde fördert, und dass der Lüfter 370A eine Luftmenge von 76 m$^3$ pro Stunde fördert. Dies ist eine Folge des Drehzahlanstiegs, d.h. der Lüfter 370F rotiert mit 4100 U/min, und der Lüfter 370A mit 4500 U/min, so dass nirgendwo ein negativer Luftstrom entsteht. Ein derartiger Lüfter hat also ein sehr breites Einsatzgebiet, z.B. bei der Entlüftung in Hochhäusern oder an langen Luftkanälen. Auch bei noch höheren Gegendrücken kann ein solcher Radiallüfter Anwendung finden, dessen Antriebsmotor auf konstantes Drehmoment geregelt wird. Sofern derartige Lüfter an einen Datenbus angeschlossen sind, über den sich ihre Betriebsdaten von einer Zentrale aus verändern lassen, erweitern sich die Anwendungsmöglichkeiten noch mehr, da man dann einzelne Lüfter zentral auf ein anderes konstantes Drehmoment umstellen kann, bei einer Funkstation 650 z.B. abhängig von der Außentemperatur oder einem sonstigen Parameter.

**Fig. 44** zeigt eine Testroutine TEST1 S802 zum Testen eines Motors auf einen Lagerschaden und zum Erzeugen eines Alarmsignals, wenn ein Lagerschaden vorliegt. Die Testroutine TEST1 kann ebenfalls zum Test eines Lüfters auf einen verstopften Filter und zum Erzeugen eines Alarmsignals verwendet werden, wenn ein verstopfter Filter vorliegt. Die zweite Variante wird nach der ersten Variante beschrieben.

**Erste Variante: Test auf Lagerschaden**

In S800 wird überprüft, ob die Routine TEST1 angefordert wurde (vgl. Fig. 20). Der Schritt S800 wird bevorzugt in dem Funktionsmanager 601 in Fig. 20 zwischen den Schritten S622 und S626 ausgeführt.

Ein entsprechender Testbefehl, welcher den Wert FCT_TEST1 auf 1 setzt, kann in regelmäßigen Abständen erzeugt werden, z.B. alle 24 Stunden, oder er kann beispielsweise über den Datenbus 18 dem Motor 32 zugeführt werden. Der Motor wird dann im laufenden Betrieb getestet. Bei einem Lüfter ist das normalerweise möglich.

Der Test läuft so ab, dass der Motor auf eine bestimmte niedrige Drehzahl n_TEST1 (z.B. n_TEST1 = 1000 rpm) eingestellt wird, und dass der dem Motorstrom entsprechende Wert PWM_I+ bei dieser Drehzahl geprüft wird, ob er über einem zulässigen Wert PWM_TEST1 liegt. Falls ja, so liegt ein Lagerschaden vor, und es wird ein Alarm ausgelöst. Denn bei der niedrigen Drehzahl n_TEST1 entstehen hauptsächlich Reibungsverluste durch ein schadhaftes Lager, Verluste durch eine Einwirkung der Luft sind dagegen zu vernachlässigen.

Liegt der Testbefehl FCT_TEST1 = 1 vor, so wird in S804 überprüft, ob IN_TEST1 = 1 ist, ob die Routine TEST1 also bereits gestartet wurde.

Falls nein, so wird im Schritt S806 die bisherige Betriebsart MODE des Motors 32 und die bisherige Solldrehzahl n_s gespeichert. In S808 wird der Motor auf die Betriebsart RGL_I (Fig. 28) umgeschaltet, und ihm wird die gewünschte Drehzahl n_TEST1 vorgegeben, bei einem Lüfter z.B. 1000 rpm. Auf diese Drehzahl wird der Motor durch Einstellung des Stromes über den Wert PWM_I+ geregelt. Man erhält so direkt den Strom im Motor 32 bei der Drehzahl n_TEST1; dieser entspricht dem Wert PWM_I+. Die Testroutine ist jetzt gestartet, und die Variable IN_TEST1 wird in S810 auf 1 gesetzt. Daraufhin erfolgt ein Sprung zum Start des Funktionsmanagers FCT_MAN S602.

War in S804 die Routine TEST1 bereits gestartet (IN_TEST = 1), so wird in S812 überprüft, ob die Drehzahl n bereits die Drehzahl n_TEST1 erreicht hat, z.B. 1000 rpm. Der Test kann z.B. so ablaufen, dass überprüft wird, ob sich die Drehzahl n in einem Bereich von +/-2 % um den Wert n_TEST1 befindet. Falls der Test in S812 negativ ist, so wird an den Beginn des Funktionsmanagers FCT_MAN S602 gesprungen, damit andere wichtige Funktionen ausgeführt werden können. Anstelle des Tests der Drehzahl könnte z.B. auch mit Hilfe des Timer TIMER1 eine bestimmte Zeit abgewartet werden, in der der Motor 32 sicher die Drehzahl n_TEST1 erreicht.

Ist in S812 die Drehzahl n_TEST1 erreicht, so werden in S814 die Werte PWM_I+ und PWM_TEST1 verglichen. Bei der ersten Variante wird mit der Funktion COMPARE geprüft, ob der Wert PWM_I+, der einem bestimmten Strom im Motor 32 entspricht, größer als ein vorgegebener Wert PWM_TEST1 ist, der z.B. einem Strom von 60 mA entspricht. Letzteres bedeutet, dass ein Lagerschaden vorliegt, und in diesem Falle geht das Programm zum Schritt S816, wo ein Alarmsignal erzeugt wird (SET ALARM1). Anschließend geht das Programm zum Schritt S818, wo die alte Betriebsart MODE und die alte Solldrehzahl n_s wieder hergestellt wird.

Ist der Motorstrom (entsprechend dem Wert PWM_I+) kleiner als der dem Wert PWM_TEST1 entsprechende Strom, so geht das Programm von S814 direkt zum Schritt S818, der bereits beschrieben wurde.

In S819 werden die Variablen IN_TEST1 und FCT_TEST1 auf den nächsten Test vorbereitet.

Die Testroutine TEST1 kann deshalb sehr leicht implementiert werden, weil bei der Drehzahlregelung gemäß Fig. 28 die Drehzahl dadurch geregelt wird, dass dem Motor ein Stromwert als Sollwert PWM_I+ vorgegeben wird, so dass der Strom im Motor 32 bei dieser Betriebsart automatisch bekannt ist und leicht getestet werden kann, ohne dass dazu eine spezielle Strommessung erforderlich wäre. Bei dieser Art von Regelung entspricht nämlich der Strom-Sollwert PWM_I+ dem tatsächlichen Strom durch den Motor 32, und dieser Sollwert liegt im Regler 24 in digitaler Form vor, kann also problemlos mit den vorgegebenen Wert PWM_TEST1 verglichen werden.

## Zweite Variante: Test auf verstopftes Filter

Die Routine kann auch zum Testen auf ein verstopftes Filter verwendet werden. Hierzu wird die Drehzahl n_TEST1 auf einen hohen Wert, z.B. 5000 rpm, gesetzt. Bei hohen Drehzahlen ist die Einwirkung eines defekten Lagers gegenüber der Einwirkung der Luft und ggf. eines verstopften Filters zu vernachlässigen. Ist das Filter verstopft, so hat der Lüfter weniger zu arbeiten, und der Motorstrom sinkt bei gleicher Drehzahl gegenüber einem Lüfter mit sauberem Filter. Die Vergleichsfunktion COMPARE in S814 testet daher umgekehrt, ob der Wert PWM_I+ kleiner als der Grenzwert PWM_TEST1 ist. Falls ja, so wird in S816 mit SET ALARM1 ein Alarm ausgelöst.

Natürlich kann in dem erfindungsgemäßen Motor 32 sowohl eine Routine TEST1 gemäß erster Variante zum Testen auf einen Lagerschaden als auch eine Routine TEST1' gemäß zweiter Variante zum Testen auf ein verstopftes Filter ausgeführt werden.

**Fig. 45** zeigt eine Testroutine TEST2 S822 zum Testen eines Motors 32 auf Lagerschäden. In S820 wird anhand des Funktionsmanagerbits FCT_TEST2 überprüft, ob die Routine TEST2 angefordert wurde (vgl. Fig. 20). Der Schritt S820 wird bevorzugt in dem Funktionsmanager 601 in Fig. 20 zwischen den Schritten S622 und S626 ausgeführt.

Ein entsprechender Testbefehl FCT_TEST2 := 1 kann in regelmäßigen Abständen erzeugt werden, z.B. alle 24 Stunden, oder er kann über den Datenbus 18 dem Motor 32 zugeführt werden, oder in sonstiger Weise.

Die Testroutine TEST2 S820 beruht auf einem sogenannten Auslaufversuch. Bei einem solchen Versuch wird zuerst der Motor auf eine konstante Drehzahl n_TEST2_BEG eingestellt, z.B. auf 1000 U/min. Dann wird der Motor zu einem Zeitpunkt t_MEAS2 abgeschaltet, und man misst mittels Timer TIMER1 die Zeit t_TIMER1 - t_MEAS2, bis der Motor 32 die Drehzahl n_TEST2_END (z.B. 50 rpm) erreicht hat.

Wenn der Motor hierfür z.B. eine Zeit von 10 Sekunden benötigt, weiß man, dass die Lager in Ordnung sind. Bleibt dagegen der Motor z.B. bereits 3 Sekunden nach dem Abschalten stehen, so geht man davon aus, dass ein Lagerschaden vorliegt und erzeugt ein Alarmsignal. Naturgemäß sind die angegebenen Zeitwerte nur Beispiele, und die Auslaufzeiten hängen von verschiedenen Parametern ab und werden gewöhnlich durch Versuche ermittelt. Sie können über den Datenbus 18 eingegeben werden.

Im Schritt S824 der Fig. 45 wird überprüft, ob IN_TEST2 >= 1 ist, ob die Routine TEST2 S822 also bereits gestartet wurde.

Falls nein, so wird im Schritt S826 die bisherige Betriebsart MODE und die bisherige Solldrehzahl n_s abgespeichert. In S828 wird durch MODE := RGL_I die Betriebsart RGL_I gemäß Fig. 28 eingestellt, und dem Motor 32 wird die gewünschte Drehzahl n_TEST2_BEG vorgegeben, z.B. 1000 U/min. Die Testroutine ist jetzt gestartet, und die Variable IN_TEST1 wird in S830 auf 1 gesetzt. Daraufhin erfolgt ein Sprung zum Start des Funktionsmanagers FCT_MAN S602.

Bei dem folgenden Aufruf der Routine TEST2 S822 ist diese bereits gestartet (IN_TEST2 = 1), und es erfolgt ein Sprung von S824 nach S832. In S832 wird überprüft, ob der Wert IN_TEST2 gleich 1 ist. Falls ja, wird in S834 überprüft, ob die Drehzahl n gleich der gewünschten Drehzahl n_TEST2_BEG ist (vgl. Beschreibung zu S812, Fig. 44).

Falls die Drehzahl n noch nicht gleich der Drehzahl n_TEST2_BEG ist, so wird nach FCT_MAN S602 gesprungen. Falls die Drehzahl n_TEST2_BEG in S834 erreicht ist, wird in S836 die Betriebsart MODE auf OFF geschaltet, wodurch der Motor 32 stromlos gemacht wird. Dies kann z.B. geschehen, indem alle drei Werte EN1, EN2, EN3 auf 1 gesetzt werden (vgl. Beschreibung zu Fig. 3). Der Zeitpunkt, zu dem der Motor 32 abgeschaltet wurde, wird in t_MEAS2 gespeichert. Der Wert IN_TEST2 wird in S838 auf 2 gesetzt, da jetzt die Auslaufphase begonnen hat.

Beim nächsten Aufruf der Routine TEST2 hat IN_TEST2 den Wert 2, so dass die Schritte S824, S832 durchlaufen werden. In S840 wird überprüft, ob die Drehzahl n bereits auf die untere Drehzahl n_TEST2_END (z.B. 50 rpm) gesunken ist. Falls nein, so wird zurück zu FCT_MAN S602 gesprungen. Falls jedoch die Drehzahl n_TEST2_END erreicht wurde, wird in S842 die Auslaufzeit t_TIMER1 - t_MEAS2 berechnet, die der Motor 32 seit der Abschaltung benötigt hat, und diese Auslaufzeit wird mit einem Wert T_TEST2 (z.B. 10 s) verglichen. Ist die Auslaufzeit größer als T_TEST2, so liegt kein Lagerschaden vor, und es wird nach S846 gesprungen. Ist die Auslaufzeit jedoch kleiner als T_TEST2, so liegt ein Lagerschaden vor, und es wird in S844 ein Alarmsignal gesetzt (SET ALARM2).

In S846 werden die ursprüngliche Betriebsart MODE und die ursprüngliche Solldrehzahl n_s wieder gesetzt.

In S848 werden die Variablen IN_TEST2 und FCT_TEST2 für die nächste Messung vorbereitet, indem sie auf 0 gesetzt werden.

Die Testroutine S820 nach Fig. 45 beruht also auf einer Zeitmessung, während die Testroutine S800 nach Fig. 44 auf einer Strommessung beruht.

Die Reduzierung der Drehzahl vor einer Messung ist vor allem bei Lüftern sinnvoll, um einen Einfluss des Wertes Δp weitgehend auszuschließen, z.B. den Einfluss eines verschmutzten Luftfilters.

Im Normalfall wird es für die Ermittlung eines Lagerschadens genügen, entweder die Testroutine TEST1 oder die Testroutine TEST2 vorzusehen, doch mag es sicherheitskritische Anwendungen geben, wo man in zeitlichen Abständen beide Testroutinen automatisch durchführen wird.

Selbstverständlich kann man auch den Wert (t_TIMER1 - t_MEAS2) speichern, den man bei einem Test erhält, und durch einen Vergleich feststellen, ob sich dieser Wert im Laufe der Zeit signifikant verschlechtert. Dasselbe gilt für den Stromwert PWM_I+, den man bei der Testroutine TEST1 erhält. Diese Daten können auch über den Datenbus 18 zu einer Zentralstation übertragen werden, damit man dort laufende Aufzeichnungen über den mechanischen Zustand des Motors 32 erhält, oder man kann sie intern im Motor in einem nichtflüchtigen Speicher speichern, so dass der Motor seine "Historie" in sich trägt und man diese bei einer Wartung leicht abfragen kann.

In bevorzugter Weise können beide Routinen TEST1 und TEST2 über das EEPROM 20 und den Bus 18 vollständig parametriert, konfiguriert und auf den jeweiligen Motor angepasst werden.

Bei einem Verfahren zum Regeln einer Gleichstrommaschine auf einen gewünschten Wert, z.B. eine Drehzahl oder ein Drehmoment, geht man also wie folgt vor: Die Gleichstrommaschine verwendet eine Strombegrenzungsanordnung und erhält an ihrer Zuleitung ständig einen impulsförmigen Gleichstrom zugeführt, weil die Strombegrenzungsanordnung ständig aktiv ist. Der gewünschte Wert, z.B. Drehzahl, Leistung, Antriebsmoment oder Bremsmoment, wird geregelt, indem der Strom-Sollwert für das Ansprechen der Strombegrenzungsanordnung verändert wird, was bei einer derartigen Gleichstrommaschine so wirkt, als würde ihr dieser Strom-Sollwert vorgegeben bzw. "eingeprägt". Dabei wird das Tastverhältnis des zugeführten impulsförmigen Gleichstroms geändert, um diesen Strom-Sollwert in der Gleichstrommaschine einzuhalten.

Bevorzugt wird die Gleichstrommaschine für ein derartiges Verfahren so dimensioniert, dass ihre Wicklung einen Widerstand hat, der zu niedrig für einen direkten Betrieb der Maschine an der vorgesehenen Betriebsspannung wäre, also den Betrieb mit Strombegrenzung voraussetzt. Im Beispiel 1 ist dieser Aspekt anhand von Zahlenwerten erläutert.

Naturgemäß sind im Rahmen der vorliegenden Erfindung ganz außerordentlich viele Abwandlungen und Modifikationen möglich.¶

## Patentansprüche

1. Verfahren zum Regeln des Stromes in der Statorwicklungsanordnung (114) einer kollektoriosen Gleichstrommaschine auf einen durch ein impulsförmigen Strom-Sollwertsignal (plum It, Plum-I-) definierten Wert, welcher Gleichstrommaschine

   - eine Anordnung (24) zum Erzeugen des impulsförmigen Strom-Sollwertsignals (PWM_I+, PWM_I-) sowie
   - ein PWM-Generator (182) zugeordnet sind, dessen Ausgangssignal (PWM2) durch ein Steuersignal (u_ 156) steuerbar ist und den Strom in der Statorwicklungsanordnung (114) der Gleichstrommaschine steuert,

   mit folgenden Schritten:

   a) mit dem Steuersignal (u_156) wird das Tastverhältnis des PWM-Generators (182) gesteuert;
   b) mit dem Ausgangssignal (PWM2) des PWM-Generators (182) wird der Strom in der Statorwicklungsanordnung (114) der Gleichstrommaschine in der Weise gesteuert, dass sich in einer Zuleitung (88) der Gleichstrommaschine im Betrieb ein impulsförmiger Gleichstrom (i_2; i_2') ergibt;
   c) von diesem impulsförmigen Gleichstrom (i_2; i_2') wird ein impulsförmiges stromabhängiges Signal (u_2) abgeleitet und mit dem impulsförmigen Strom-Sollwertsignal (PWM_I+, PWM_I-) verglichen; wobei für diesen Vergleich eines dieser beiden Signale in ein geglättetes analoges Signal (PHI1) umgewandelt wird, und das andere impulsförmige Signal (u_2) bezüglich seiner Amplitude mit diesem geglätteten Signal verglichen wird;
   d) abhängig vom Resultat dieses Vergleichs wird das Steuersignal (u_156) für die Steuerung des PWM-Generators so verändert, dass der Strom In der Statorwicklungsanordnung (114) der Gleichstrommaschine Im normalen Betrieb, also auch außerhalb des Anlaufbereichs, im wesentlichen kontinuierlich auf den durch das Strom-Sollwertsignal (PHI1, PHI2) definierten Wert geregelt wird.

2. Verfahren nach Anspruch 1, bei welchem das Strom-Sollwertslgnal (PHI1, PHI2) von einem impulsförmigen Strom-Sollwertsignals (PWM_I+, PWM_I-) eines digitalen Steuergeräts abgeleitet wird.

3. Verfahren nach Anspruch 1 oder 2, bei welchem das Strom-Sollwertsignal (PHI1, PHI2) von einem Ausgangssignal (Fig. 27: RGL_VAL) eines Drehzahlreglers (24) abgeleitet wird.

4. Verfahren nach Anspruch 3, bei welchem der Drehzahlregler als digitaler Drehzahlregler Implementiert ist.

5. Verfahren nach einem der vorhergehenden Ansprüche, bei welchem von der Anordnung zum Erzeugen eines Strom-Sollwertsignals (Fig. 11:27; 29) ein inpulsförmiges Strom-Sollwertsingnal (PWM_I-; PWM_I+) ausgegeben wird, bei welchem die Information über den gewünschten Strom-Sollwert im Tastverhältnis enthalten ist.

6. Verfahren nach Anspruch 5, bei welchem das als Strom-Sollwertsignal ausgegebene PWM-Signal durch ein Integrierglied (Fig. 6: 311, 312) in ein analoges Sollwertsignal (PHI1) umgewandelt und hinsichtlich seiner Amplitude mit dem vom impulsförmigen Gleichstrom (i_2) abgeleiteten, impulsförmigen stromabhängigen Signal (u_2) verglichen wird, um abhängig vom Resultat dieses Vergleichs das dem PWM-Generator (182) zugeführte Steuersignal (u_156) so zu beeinflussen, dass der Strom in der Gleichstrommaschine (32) auf den gewünschten Wert geregelt wird.

7. Verfahren nach einem der vorhergehenden Ansprüche, bei welchem das impuls förmit Strom-Sollwertsignal (PWM_I+) von einen Miteroprozenor (23) vorgegden wird.

8. Verfahren nach einem der vorhergehenden Ansprüche, bei welchem der Gleichstrommaschine eine Drehzahl vorgegeben wird, welche einen Strom erfordern würde, der oberhalb des Bereichs liegt, welcher durch Vorgabe eines Strom-Sollwerts bei dieser Gleichstrommaschine einstellbar ist.

9. Verfahren nach mindestens einem der vorhergehenden Ansprüche, bei welchem das Steuersignal von einem Steuersignalgeber erzeugt wird, welcher im motorischen Betrieb ein Steuersignal erzeugt, das einem hohen Tastverhältnis entspricht,
und dieses Steuersignal entsprechend dem vorgegebenen Strom-Sollwert so reduziert wird, dass es einem kleineren Tastverhältnis - entsprechend dem vorgegebenen Strom-Sollwert - entspricht.

10. Verfahren nach Anspruch 9, bei welchem als Steuersignal ein analoges Signal verwendet wird, welches anschließend in einem Analog-PWM-Wandler in ein PWM-Signal für die Steuerung der Energiezufuhr zur oder der Energieentnahme aus der Gleichstrommaschine umgewandelt wird.

11. Verfahren nach einem der vorhergehenden Ansprüche zum Betreiben einer Gleichstrommaschine an einer MOSFET-Vollbrückenschaltung, welche mit wechselseitiger Taktung und einem im wesentlichen zwischen 0 % und 100 % veränderbaren Tastverhältnis betreibbar ist, mit folgenden Schritten: Wenn der Antriebsstrom der Gleichstrommaschine einen vorgegebenen Strom-Sollwert überschreitet, wird durch Reduzierung eines höheren Vorgabewerts das Tastverhältnis für die Vollbrückenschaltung reduziert;
wenn der Bremsstrom der Gleichstrommaschine einen vorgegebenen Strom-Sollwert überschreitet, wird durch Erhöhung eines niedrigen Vorgabewerts das Tastverhältnis für die Vollbrückenschaltung erhöht.

12. Verfahren nach Anspruch 11, bei welchem mindestens einer der Vorgabewerte drehzahlabhängig ist.

13. Verfahren nach Anspruch 12, bei welchem der Vorgabewert des Tastverhältnisses für den generatorischen Betrieb mit steigender Drehzahl ansteigt und etwa im Bereich von 0 bis 50 % liegt.

14. Anordnung zum Steuern oder Regeln der Drehzahl einer Gleichstrommaschine (32), welche Anordnung aufweist:

Eine erste Vorrichtung (24, 25), welche dazu ausgebildet ist, an ihrem Ausgang (157) ein erstes Steuersignal (PWM1) zum Steuern der Spannung an der Gleichstrommaschine (32) zu liefern;
eine zweite Vorrichtung (24, 27, 29), die dazu ausgebildet ist, an ihrem Ausgang ein zweites Steuersignal (PWM_I+; PWM_I-) zu liefern, das dazu dient, die Höhe des Stromes zu beeinflussen, welcher in der Gleichstrommaschine (32) fließt;

eine Anordnung (182) zur Transformation des ersten Steuersignals (PWM1) in ein Signal (PWM2), welches ein Tastverhältnis für die Beeinflussung der Energiebilanz der Gleichstrommaschine (32) steuert;

und eine vom zweiten Steuersignal (PWM_I+; PWM_I-) gesteuerte Begrenzungsanordnung (131, 161) für den Strom in der Gleichstrommaschine (32),

welche Begrenzungsanordnung (131,161) dazu ausgebildet ist, bei Überschreiten des vom zweiten Steuersignal (PWM_I+; PWM_I-) vorgegebenen Wertes dieses Stromes anzusprechen und das erste Steuersignal (PWM1) entsprechend zu modifizieren, **dadurch gekennzeichnet, dass** die zweite Vorrichtung mit einem digitalen Steuergerät (24) ausgebildet ist, und das erste Steuersignal auf einen Wert einstellbar ist, der ein ständiges Ansprechen der vom zweiten Steuersignal gesteuerten Begrenzungsanordnung bewirkt.

15. Anordnung nach Anspruch 14, bei welcher die erste Vorrichtung als von einem digitalen Steuergerät (24) steuerbarer PWM-Generator (25) ausgebildet ist.

16. Anordnung nach Anspruch 14 oder 15, bei welcher die zweite Vorrichtung als von dem digitalen Steuergerät (24) steuerbarer PWM-Generator (27; 29) ausgebildet Ist.

17. Anordnung nach Anspruch 14, bei welcher eine Anordnung vorgesehen ist, weiche das Ausgangssignal des PWM-Generators In ein analoges Signal umwandelt, dessen Wert vom Tastverhältnis des PWM-Signals abhängig ist.

18. Anordnung nach Anspruch 17, bei welcher die Anordnung zur Umwandlung des Ausgangssignals des PWM-Generators als Integrierglied (152, 158, 159) ausgebildet ist.

19. Anordnung nach Anspruch 18, bei welcher das Signal am Ausgang des Integrierglleds (152, 158, 159) durch die vom zweiten Steuersignal (PWM_I+; PWM_I-) gesteuerte Begrenzungsanordnung (131, 161) modifizierbar ist, wenn der vom zweiten Steuersignal vorgegebene Strom überschritten wird.

20. Anordnung nach Anspruch 18 oder 19, bei welcher ein PWM-Generator (182) vorgesehen ist, welcher das analoge Signal (u_156) am Ausgang des Integrierglieds (152, 158, 159) in ein PWM-Signal zur Steuerung des Stromes in der Gleichstrommaschine umsetzt.

21. Anordnung nach einem der Ansprüche 14 bis 20, bei welcher zur Steuerung der ersten Vorrichtung und der zweiten Vorrichtung mindestens ein digitales Steuergerät (24) nach Art eines Mikrocontrollers oder Mikroprozessors vorgesehen ist.

22. Anordnung nach Anspruch 21, bei welcher das mindestens eine digitale Steuergerät (24) dazu ausgebildet ist, die Drehzahl der Gleichstrommaschine über das erste Steuersignal (PWM1) zu regeln und das zweite Steuersignal auf einen Stromwert einzustellen, der im Bereich eines zulässigen Stroms der Gleichstrommaschine und insbesondere des maximal zulässigen Stromes liegt.

23. Anordnung nach Anspruch 21 oder 22, bei welcher das mindestens eine Steuergerät dazu ausgebildet ist, die Drehzahl der Gleichstrommaschine über das zweite Steuersignal zu regeln und das erste Steuersignal auf einen Wert einzustellen, der ein ständiges Ansprechen der vom zweiten Steuersignal gesteuerten Begrenzungsanordnung bewirkt.

24. Anordnung nach einem der Ansprüche 21 bis 23, bei weicher das mindestens eine Steuergerät dazu ausgebildet ist, den Strom in der Gleichstrommaschine auf einen im wesentlichen konstanten Wert **dadurch** zu regeln, dass das zweite Steuersignal auf einen dem gewünschten Strom entsprechenden Wert und das erste Steuersignal (PWM1) auf einen Wert eingestellt wird, welcher ein ständiges Ansprechen der vom zweiten Steuersignal gesteuerten Begrenzungsanordnung bewirkt.

25. Gleichstrommaschine mit einer Anordnung nach einem der Ansprüche 14 bis 24.

26. Gleichstrommaschine nach Anspruch 25, mit einer Anordnung zur Überwachung der Spannung ($U_B$) an der Gleichstromquelle (73, 74), welche Anordnung beim Überschreiten eines vorgegebenen oberen Grenzwerts (U_MAX_OFF) dieser Spannung ($U_B$) alle Halbleiterschalter der Vollbrückenschaltung (78) sperrt.

27. Gleichstrommaschine nach Anspruch 26, mit einem zur Steuerung dienenden digitalen Steuerglied (23) nach Art eines Mikroprozessors oder Mikrocontrollers, welches einen A/D-Wandler aufweist, der die Spannung ($U_B$) an der Gleichstromquelle in einen digitalen Wert (U_AD) für die Weiterverarbeitung im digitalen Steuerglied (23) umsetzt.

28. Gleichstrommaschine nach einem oder mehreren der Ansprüche 25 bis 27, mit einem zur Steuerung dienenden digitalen Steuerglied (23) nach Art eines Mikroprozessors oder Mikrocontrollers, welches im Betrieb Ausgangssignale zur Steuerung der Vollbrückenschaltung (78) liefert,
wobei jedem Brückenzweig ein Kommutierungsbaustein (50, 52, 54) zum alternierenden Einschalten seines oberen und unteren Halbleiterschalters zugeordnet ist, welcher Kommutierungsbaustein mindestens zwei Signaleingänge (z.B IN1, EN1) aufweist, die durch separate Signalausgänge des digitalen Steuerglieds (23) steuerbar sind,
und das PWM-Signal (PWM2) einem dieser Signaleingänge (IN1, IN2, IN3) zuführbar ist,
und ein diesem Signaleingang zugeordneter Signalausgang (IN1, IN2, IN3) des digitalen Steuerglieds (23) auf einen hochohmigen Zustand umschaltbar ist, um vom digitalen Steuerglied aus ein alternierendes Einschalten der Halbleiterschalter dieses Brückenzweigs durch das PWM-Signal (PWM2) zu aktivieren.

29. Gleichstrommaschine nach einem oder mehreren der Ansprüche 25 bis 28, mit einem zur Steuerung dienenden digitalen Steuerglied (23) nach Art eines Mikroprozessors oder Mikrocontrollers, welches zur Drehzahlregelung der Gleichstrommaschine dient und an mindestens einem Ausgang ein Signal (PWM1) zur Beeinflussung der Drehzahl der Gleichstrommaschine liefert, und mit einer Anordnung zum Begrenzen dieses Signals auf einen drehzahlabhängigen Wert.

30. Gleichstrommaschine nach Anspruch 29, bei welcher dieses Signal (PWM1) beim Bremsvorgang auf einen Wert begrenzt wird, der mit abnehmender Drehzahl (n) der Gleichstrommaschine (32) abnimmt.

31. Gleichstrommaschine nach Anspruch 29 oder 30, bei der dieses Signal durch sein Tastverhältnis (PWM1) den Ladezustand eines ersten Kondensators (159) beeinflusst,
ferner ein zweiter Kondensator (148) vorgesehen ist, welcher über eine Widerstandsanordnung (150,152) mit dem ersten Kondensator (159) verbunden ist, und das Tastverhältnis (PWM2) des der Vollbrückenschaltung (78) zugeführten PWM-Signals im wesentlichen durch die Spannung an einem dieser beiden Kondensatoren (148, 159) gesteuert ist.

32. Gleichstrommaschine nach Anspruch 31, bei welcher der zweite Kondensator (148) eine kleinere Kapazität hat als der erste Kondensator (159).

33. Gleichstrommaschine nach Anspruch 31 oder 32, bei welcher eine Strombegrenzungsanordnung (131) vorgesehen ist, welche bei Überschreiten eines durch ein Strom-Sollwerlsignal (PWM_I+) vorgegebenen Grenzwerts des Antriebsstroms die Ladung dieses zweiten Kondensators (148) verändert, um den Antriebsstrom auf einen durch das Strom-Sollwertsignal definierten Wert zu begrenzen.

34. Gleichstrommaschine nach einem der Ansprüche 31 bis 33, bei welcher eine Strombegrenzungsanordnung (161) vorgesehen ist, welche bei Überschrelten eines durch ein Strom-Sollwertsignal (PWM_I-) vorgegebenen Grenzwerts das Bremsstroms (i-2') die Ladung dieses zweiten Kondensators (148) verändert, um den Bremsstrom auf einen durch das Strom-Sollwortsignal definierten Wert zu begrenzen.

35. Gleichstrommaschine nach Anspruch 33 oder 34, bei welcher die Strombegrenzungsanordnung einen Vergleicher für einen Vergleich zwischen einem Strom-Sollwertsignal (PHI1; PHI2) und einem vom Antriebsstrom oder Bremsstrom abgeleiteten impulsförmigen Signal (u_2; u_2") aufweist.

36. Gleichstrommaschine nach Anspruch 35, bei welcher dem Vergleicher ein integrierglied (310, 312; 320, 322) zugeordnet ist, um ein impulsförmlges Strom-Sollwertsignal (PWM_I+; PWM_I-) in ein geglättetes Signal (PHI1; PHI2) zum Vergleich mit einem Impulsförmigen stromabhängigen Signal (u_2; u_2") umzuformen.

37. Gleichstrommaschine nach einem der Ansprüche 25 bis 36,
bei welcher dem oberen Transistor eines Brückenzweigs jeweils ein Speicherkondensator (230) zugeordnet ist, der über den unteren Transistor dieses Brückenzweigs ladbar ist und dazu dient, diesen oberen Transistor mit einer Steuerspannung zu versorgen,
mit einer Kommutierungsanordnung zum Kommutieren dieser Transistoren, welche Kommutierungsanordnung dazu ausgebildet ist, in Abhängigkeit zumindest von der Stellung des Rotors (110) bei einem ersten Brückenzweig nur einen Transistor einzuschalten und bei einem zweiten Brückenzweig den oberen und den unteren Transistor alternierend einzuschalten,

wobei die Drehzahl (n) überwacht wird und bei Unterschreiten eines vorgegebenen Drehzahlwerts nach Ablauf einer vorgegebenen Zeit kurzzeitig die oberen Transistoren der Vollbrückenschaltung gesperrt und die unteren Transistoren eingeschaltet werden,

um die Speicherkondensatoren (230) der oberen Transistoren zu laden und **dadurch** eine sichere Steuerung dieser oberen Transistoren auch bei niedrigen Drehzahlen oder einem Stillstand der Gleichstrommaschine zu gewährleisten (Fig. 24).

38. Gleichstrommaschine nach einem der Ansprüche 25 bis 37,

bei welcher den beiden Transistoren (80, 81) eines Brückenzweigs jeweils eine Ansteuerschaltung (50, 52, 54) zugeordnet ist, welche abhängig von einem ersten Eingangssignal (EN1) aktivierbar und deaktivierbar ist und im deaktivierten Zustand beide Transistoren (80, 81) des zugeordneten Brückenzweigs sperrt,

und welche abhängig von einem zweiten Eingangssignal (IN1) im durch das erste Eingangssignal (EN1) aktivierten Zustand so umschaltbar ist, dass entweder der obere Transistor (80) oder der untere Transistor (81) leitend gesteuert wird,

ferner mit einem zur Steuerung dienenden digitalen Steuerglied (23) nach Art eines Mikroprozessors oder Mikrocontrollers zum Erzeugen des ersten Eingangssignals an einem ersten Ausgang (EN1) und zum Erzeugen des zweiten Eingangssignals an einem zweiten Ausgang (IN1),

und mit einem dritten Eingangssignal (80) in Form eines PWM-Signals mit einem steuerbaren Tastverhältnis (PWM; PWM2), welches dritte Eingangssignal der Ansteuerschaltung (50) parallel zum zweiten Eingangssignal (IN1) von einer PWM-Signalquelle (182) zuführbar ist und nur wirksam wird, wenn der zweite Ausgang (IN1) des digitalen Steuerglieds (23) in einen vorgegebenen Schaltzustand umgeschaltet ist.

39. Gleichstrommaschine nach Anspruch 38, bei welcher der vorgegebene Schaltzustand des zweiten Ausgangs (IN1) des digitalen Steuerglieds (23) ein hochohmiger Zustand (TRISTATE) ist.

40. Gleichstrommaschine nach Anspruch 38 oder 39, bei welcher das dritte Eingangssignal (180) der Ansteuerschaltung (50, 52, 54) über eine Diode (260) zuführbar ist.

41. Gleichstrommaschine nach einem oder mehreren der Ansprüche 38 bis 40, bei welcher die Amplitude des dritten Eingangssignals (180) begrenzt ist, insbesondere durch eine Zenerdiode (186).

42. Gleichstrommaschine nach einem oder mehreren der Ansprüche 38 bis 41, bei welcher die Ansteuerschaltung einen Eingang (223) aufweist, an den ein Widerstand (252) angeschlossen ist, dessen Größe die Größe einer Totzeit ($\Delta t$) beim Umschalten zwischen den Transistoren (80, 81) des zugeordneten Brückenzweigs beeinflusst, und dieser Widerstand (252) durch ein steuerbares Schaltglied (250) mindestens teilweise überbrückbar ist, welches durch das erste Eingangssignal (EN1) steuerbar ist.

43. Gleichstrommaschine nach Anspruch 42, bei welcher das steuerbare Schaltglied (250) in einen vorgegebenen Schaltzustand gesteuert wird, wenn der erste Ausgang (EN1) des digitalen Steuerglieds (23) einen hochohmigen Zustand annimmt, um hierbei den zugeordneten Brückenzweig (80, 81) zu sperren.

44. Gleichstrommaschine nach einem oder mehreren der Ansprüche 38 bis 43,

bei welcher das Tastverhältnis (PWM2) der PWM-Signalquelle (182) durch die Spannung an einem Kondensator (148) steuerbar ist, welche Spannung beim Fließen eines zu hohen Antriebsstroms in der Statorwicklungsanordnung durch eine erste Strombegrenzungsanordnung (131) in einer vorgegebenen Richtung veränderbar ist, damit dieser Antriebsstrom durch eine entsprechende Veränderung des Tastverhältnisses (PWM2) abgesenkt wird, und welche beim Fließen eines zu hohem Bremsstromes in der Statorwicklungsanordnung durch eine zweite Strombegrenzungsanordnung (161) in einer zur vorgegebenen Richtung entgegengesetzten Richtung veränderbar ist, um den Bremsstrom durch eine entsprechende Änderung des Tastverhältnisses (PWM2) abzusenken.

45. Gleichstrommaschine nach Anspruch 44, bei welcher eine Begrenzungsvorrichtung für das Tastverhältnis (PWM2) vorgesehen ist, um zu verhindern, dass bei einem Extremwert des Tastverhältnisses (PWM2) der untere Transistor (81) eines Brückenzweigs ständig geöffnet und der obere Transistor (80) ständig geschlossen ist.

46. Gleichstrommaschine nach einem oder mehreren der Ansprüche 38 bis 45, welche mindestens dreiphasig ausgebildet ist, und mindestens drei Ansteuerschaltungen (50, 52, 54) für die Brückenzweige (21, 22, 23) aufweist, und mit einer Anordung (Fig. 31), welche bei einer Kommutierung eine Unterbrechung des ersten Eingangssignals (EN1) einer Ansteuerschaltung verhindert, wenn diese Ansteuerschaltung vor und nach der Kommutierung aktiviert sein muss.

**47.** Verwendung eines Gleichstrommotors nach einem der Ansprüche 25 bis 46 zum Antrieb eines Lüfters.

**48.** Verwendung nach Anspruch 47, bei welcher der Lüfter mit im wesentlichen konstantem Antriebsstrom betrieben wird.

**49.** Verwendung nach Anspruch 47 oder 48, bei welcher der Gleichstrommotor mehrsträngig ausgebildet ist.

**50.** Verwendung nach Anspruch 49, bei welcher zur Bestromung der Stränge eine Vollbrückenschaltung vorgesehen ist.

**51.** Verwendung nach einem der Ansprüche 47 bis 50, bei welcher der Lüfter als Diagonal- oder Radiallüfter ausgebildet ist.

**52.** Verwendung nach Anspruch 51, bei welcher ein Drehzahlregler für den Gleichstrommotor (32) vorgesehen ist, und eine Überwachungsanordnung (672) vorgesehen ist, welche bei Betrieb des Lüfters (370) mit einer vorgegebenen Drehzahl den Motorstrom überwacht, und bei Überschreiten eines vorgegebenen Stromwerts ein Alarmsignal erzeugt (Fig. 38).

**53.** Verwendung nach Anspruch 52, bei welcher der Drehzahlregler so ausgebildet ist, dass er als Stellwert zum Einstellen der Drehzahl einen Strom-Sollwert für einen Stromregler des Gleichstrommotors (32) erzeugt, und dieser Strom-Sollwert überwacht wird, um bei Überschreiten eines vorgegebenen Wertes das Alarmsignal zu erzeugen.

**54.** Verwendung nach einem der Ansprüche 47 bis 52, bei welcher ein Drehzahlregler für den Gleichstrommotor vorgesehen ist, ferner eine Schalt- und Messvorrichtung, welche eine automatische Abschaltung des Gleichstrommotors nach Erreichen einer vorgegebenen ersten Drehzahl, eine Zeitmessung für die Zeitspanne nach dem Abschalten bis zum Erreichen einer vorgegebenen zweiten Drehzahl, und eine Bewertungsvorrichtung aufweist, welche zur Bewertung dieser Zeitspanne ausgebildet ist.

**55.** Verwendung nach Anspruch 54, bei welcher die Bewertungsvorrichtung dazu ausgebildet ist, bei Unterschreiten eines vorgegebenen Wertes der Zeitspanne ein Alarmsignal zu erzeugen.

**56.** Verwendung nach einem der Ansprüche 47 bis 55, bei welcher der Lüfter als Diagonal- oder Radiallüfter ausgebildet ist, bei welcher ferner die Stromversorgung des Gleichstrommotors über einen Stromregler erfolgt, welcher auf einen vorgegebenen Strom eingestellt ist, ferner eine Vorrichtung zur Erfassung der Drehzahl des Gleichstrommotors vorgesehen ist, und eine Alarmvorrichtung vorgesehen ist, welche bei Überschreiten eines vorgegebenen Wertes dieser Drehzahl ein Alarmsignal erzeugt.

**Claims**

**1.** Method of regulating the current in the stator winding arrangement (114) of a collectorless direct current machine to a value which is defined by a pulsed current setpoint value signal (PWM_I+; PWM_I-), with which d.c. machine are associated

   - an arrangement (24) for generating the pulsed current setpoint value signal (PWM_I+; PWM_I-), and
   - a PWM generator (182), the output signal (PWM2) of which can be controlled by a control signal (u_156) and controls the current in the stator winding arrangement (114) of the d.c. machine,

   with the following steps:

   a) the duty factor of the PWM generator (182) is controlled by the control signal (u_156);
   b) the current in the stator winding arrangement (114) of the d.c. machine is controlled by the output signal (PWM2) of the PWM generator (182), in such a way that in operation, a pulsed direct current (i_2; I_2') is produced in a feed line (88) of the d.c. machine;
   c) from this pulsed direct current (i_2; I_2'), a pulsed current-dependent signal (u_2) is derived, and is compared with the pulsed current setpoint value signal (PWM_I+; PWM_I-); for this comparison, one of these two signals being converted into a smoothed analogue signal (PHI1), and the other pulsed signal (u_2) being compared with respect to its amplitude with this smoothed signal;

d) depending on the result of this comparison, the control signal (u_156) to control the PWM generator is changed so that the current in the stator winding arrangement (114) of the d.c. machine in normal operation, i.e. outside the startup range, is regulated essentially continuously to the value defined by the current setpoint value signal (PHI1, PHI2).

2. Method according to Claim 1, wherein the current setpoint value signal (PHI1, PHI2) is derived from a pulsed current setpoint value signal (PWM_I+; PWM_I-) of a digital controller.

3. Method according to Claim 1 or 2, wherein the current setpoint value signal (PHI1, PHI2) is derived from an output signal (Fig. 27: RGL_VAL) of a speed controller (24).

4. Method according to Claim 3, wherein the speed controller is implemented as a digital speed controller.

5. Method according to one of the preceding claims, wherein from the arrangement for generating a current setpoint value signal (Fig. 11: 27; 29), a pulsed current setpoint value signal (PWM_I+; PWM_I-), in which the information about the desired current setpoint value is contained in the duty factor, is output.

6. Method according to Claim 5, wherein the PWM signal, which is output as a current setpoint value signal, is converted by an integrator (Fig. 6; 311, 312) into an analogue setpoint value signal (PHI1), and compared with respect to its amplitude with the pulsed current-dependent signal (u_2), which is derived from the pulsed direct current (i_2), to affect the control signal (u_156) which is fed to the PWM generator (182), depending on the result of this comparison, so that the current in the d.c. machine (32) is regulated to the desired value.

7. Method according to one of the preceding claims, wherein the pulsed current setpoint value signal (PWM_I+) is specified by a microprocessor (23).

8. Method according to one of the preceding claims, wherein for the d.c. machine, a rotational speed which would require a current which is above the range which can be set in the case of this d.c. machine by specifying a current setpoint value is specified.

9. Method according to at least one of the preceding claims, wherein the control signal is generated by a control signal transmitter, which in motor-driven operation generates a control signal corresponding to a high duty factor, and this control signal is reduced corresponding to the specified current setpoint value so that it corresponds to a smaller duty factor, corresponding to the specified current setpoint value.

10. Method according to Claim 9, wherein an analogue signal, which is next converted in an analogue-PWM converter into a PWM signal to control the energy feed to, or energy withdrawal from, the d.c. machine, is used as the control signal.

11. Method according to one of the preceding claims for operating a d.c. machine on a MOSFET full bridge circuit, which can be operated with reciprocal clocking and a duty factor which is essentially changeable between 0% and 100%, with the following steps: If the driving current of the d.c. machine exceeds a specified current setpoint value, the duty factor for the full bridge circuit is reduced by reducing a higher preset value;
If the braking current of the d.c. machine exceeds a specified current setpoint value, the duty factor for the full bridge circuit is raised by raising a low preset value.

12. Method according to Claim 11, wherein at least one of the specified values depends on the rotational speed.

13. Method according to Claim 12, wherein the specified value of the duty factor for generator operation increases with increasing rotational speed, and is approximately in the range from 0 to 50%.

14. Arrangement for controlling or regulating the rotational speed of a d.c. machine (32), said arrangement having:

a first device (24, 25), which is designed to supply at its output (157) a first control signal (PWM1) to control the voltage at the d.c. machine (32);

a second device (24, 27, 29), which is designed to supply at its output a second control signal (PWM_I+; PWM_I-), the purpose of which is to affect the value of the current which flows in the d.c. machine (32);

an arrangement (182) to transform the first control signal (PWM1) into a signal (PWM2) which controls a duty factor to affect the energy balance of the d.c. machine (32);

and a limiting arrangement (131, 161), which is controlled by the second control signal (PWM_I+; PWM_I-), for the current in the d.c. machine (32);

said limiting arrangement (131, 161) being designed to respond when this current exceeds the value specified by the second control signal (PWM_I+; PWM_I-), and to modify the first control signal (PWM1) correspondingly;

**characterized in that** the second device is designed with a digital controller (24), and the first control signal can be set to a value which causes a continuous response by the limiting device, which is controlled by the second control signal.

15. Arrangement according to Claim 14, wherein the first device is in the form of a PWM generator (25) which can be controlled by a digital controller (24).

16. Arrangement according to Claim 14 or 15, wherein the second device is in the form of a PWM generator (27; 29) which can be controlled by the digital controller (24).

17. Arrangement according to Claim 14, wherein an arrangement which converts the output signal of the PWM generator into an analogue signal, the value of which depends on the duty factor of the PWM signal, is provided.

18. Arrangement according to Claim 17, wherein the arrangement to convert the output signal of the PWM generator is in the form of an integrator (152, 158, 159).

19. Arrangement according to Claim 18, wherein the signal at the output of the integrator (152, 158, 159) can be modified by the limiting arrangement (131, 161), which is controlled by the second control signal (PWM_I+; PWM_I-), if the current which the second control signal specifies is exceeded.

20. Arrangement according to Claim 18 or 19, wherein a PWM generator (182), which converts the analogue signal (u_156) at the output of the integrator (152, 158, 159) into a PWM signal to control the current in the d.c. machine, is provided.

21. Arrangement according to one of Claims 14 to 20, wherein to control the first device and second device, at least one digital controller (24) of the type of a microcontroller or microprocessor is provided.

22. Arrangement according to Claim 21, wherein the at least one digital controller (24) is designed to regulate the rotational speed of the d.c. machine via the first control signal (PWM1), and to set the second control signal to a current value which is in the range of a permitted current of the d.c. machine, and in particular of the maximum permitted current.

23. Arrangement according to Claim 21 or 22, wherein the at least one controller is designed to regulate the rotational speed of the d.c. machine via the second control signal, and to set the first control signal to a value which causes a continuous response by the limiting arrangement, which is controlled by the second control signal.

24. Arrangement according to one of Claims 21 to 23, wherein the at least one controller is designed to regulate the current in the d.c. machine to an essentially constant value, by the second control signal being set to a value corresponding to the desired current, and the first control signal (PWM1) being set to a value which causes a continuous response by the limiting arrangement, which is controlled by the second control signal.

25. Direct current machine with an arrangement according to one of Claims 14 to 24.

26. D.c. machine according to Claim 25, with an arrangement for monitoring the voltage (U_B) at the direct current source (73, 74), said arrangement blocking all semiconductor switches of the full bridge circuit (78) when a specified upper limit (U_MAX_OFF) of this voltage (U_B) is exceeded.

27. D.c. machine according to Claim 26, with a digital control element (23) of the type of a microprocessor or microcontroller, which is used for control, and which has an A/D converter, which converts the voltage (U_B) at the direct current source into a digital value (U_AD) for further processing in the digital control element (23).

28. D.c. machine according to one or more of Claims 25 to 27, with a digital control element (23) of the type of a microprocessor or microcontroller, which is used for control, and which in operation supplies output signals to control the full bridge circuit (78), wherein a commutation component (50, 52, 54) is associated with each bridge branch, to switch its upper and lower semiconductor switches on alternately, said commutation component having at least two signal inputs (e.g. IN1, EN1), which can be controlled by separate signal outputs of the digital control element (23), and the PWM signal (PWM2) can be fed to one of these signal inputs (IN1, IN2, IN3), and a signal output (IN1, IN2, IN3), which is associated with this signal input, of the digital control element (23) can be switched to a high-resistance state, to activate, from the digital control element, alternating switching-on of the semiconductor switches of this bridge branch by the PWM signal (PWM2).

29. D.c. machine according to one or more of Claims 25 to 28, with a digital control element (23) of the type of a microprocessor or microcontroller, which is used for control, and which is used to regulate the rotational speed of the d.c. machine, and which supplies, at at least one output, a signal (PWM1) to affect the rotational speed of the d.c. machine, and with an arrangement to limit this signal to a value depending on the rotational speed.

30. D.c. machine according to Claim 29, wherein this signal (PWM1) is limited during the braking process to a value which reduces with reducing rotational speed (n) of the d.c. machine (32).

31. D.c. machine according to Claim 29 or 30, wherein this signal, through its duty factor (PWM1), affects the charge state of a first capacitor (159), and also a second capacitor (148), which is connected via a resistor arrangement (150, 152) to the first capacitor (159), is provided, and the duty factor (PWM2) of the PWM signal which is fed to the full bridge circuit (78) is essentially controlled by the voltage at one of these two capacitors (148, 159).

32. D.c. machine according to Claim 31, wherein the second capacitor (148) has a smaller capacitance than the first capacitor (159).

33. D.c. machine according to Claim 31 or 32, wherein a current limiting arrangement (131), which when a driving current limit value (which is specified by a current setpoint value signal (PWM_I+)) is exceeded, changes the charge of this second capacitor (148), is provided, to limit the driving current to a value which is defined by the current setpoint value signal.

34. D.c. machine according to one of Claims 31 to 33, wherein a current limiting arrangement (161), which when a braking current (I_2') limit value (which is specified by a current setpoint value signal (PWM_I-)) is exceeded, changes the charge of this second capacitor (148), is provided, to limit the braking current to a value which is defined by the current setpoint value signal.

35. D.c. machine according to Claim 33 or 34, wherein the current limiting arrangement has a comparator for a comparison between a current setpoint value signal (PHI1; PHI2) and a pulsed signal (u_2; u_2"), which is derived from the driving current or braking current.

36. D.c. machine according to Claim 35, wherein an integrator (310, 312; 320, 322) is associated with the comparator, to convert a pulsed current setpoint value signal (PWM_I+; PWM_I-) into a smoothed signal (PHI1; PHI2) for comparison with a pulsed current-dependent signal (u_2; u_2").

37. D.c. machine according to one of Claims 25 to 36, wherein each upper transistor of a bridge branch is associated with a storage capacitor (230), which can be charged via the lower transistor of this bridge branch and is used to supply this upper transistor with a control voltage, with a commutation arrangement to commutate these transistors, said commutation arrangement being designed, depending at least on the position of the rotor (110), in the case of a first bridge branch to switch on only one transistor, and in the case of a second bridge branch to switch on the upper and lower transistors alternately, wherein the rotational speed (n) is monitored, and if a specified rotational speed value is undershot, after the expiry of a specified time, for a short time the upper transistors of the full bridge circuit are blocked and the lower transistors are switched on, to charge the storage capacitors (230) of the upper transistors, and thus to ensure reliable control of these upper transistors even at low rotational speeds, or when the d.c. machine is at a standstill (Fig. 24).

**38.** D.c. machine according to one of Claims 25 to 37,
wherein the two transistors (80, 81) of a bridge branch are each associated with a control circuit (50, 52, 54), which can be activated und deactivated depending on a first input signal (EN1), and in the deactivated state blocks both transistors (80, 81) of the associated bridge branch,
and which depending on a second input signal (IN1) in the state activated by the first input signal (EN1), can be switched so that either the upper transistor (80) or the lower transistor (81) is made conducting,
also with a digital control element (23) of the type of a microprocessor or microcontroller, which is used for control, to generate the first input signal at a first output (EN1) and to generate the second input signal at a second output (IN1), and with a third input signal (80) in the form of a PWM signal with a controllable duty factor (PWM; PWM2), which third input signal of the control circuit (50) can be fed in parallel with the second input signal (IN1) from a PWM signal source (182), and only becomes effective if the second output (IN1) of the digital control element (23) is switched into a specified switching state.

**39.** D.c. machine according to Claim 38, wherein the specified switching state of the second output (IN1) of the digital control element (23) is a high-resistance state (TRISTATE).

**40.** D.c. machine according to Claim 38 or 39, wherein the third input signal (180) of the control circuit (50, 52, 54) can be fed via a diode (260).

**41.** D.c. machine according to one or more of Claims 38 to 40, wherein the amplitude of the third input signal (180) is limited, in particular by a Zener diode (186).

**42.** D.c. machine according to one or more of Claims 38 to 41, wherein the control circuit has an input (223), to which a resistor (252), the size of which influences the size of a dead time ($\Delta t$) on switching between the transistors (80, 81) of the associated bridge branch, is connected,
and this resistor (252) can be bridged at least partly by a controllable switching element (250), which can be controlled by the first input signal (EN1).

**43.** D.c. machine according to Claim 42, wherein the controllable switching element (250) is controlled into a specified switching state if the first output (EN1) of the digital control element (23) takes a high-resistance state, to block the associated bridge branch (80, 81).

**44.** D.c. machine according to one or more of Claims 38 to 43, wherein the duty factor (PWM2) of the PWM signal source (182) can be controlled by the voltage at a capacitor (148), which voltage can be changed in a specified direction by a first current limiting arrangement (131) if a too high driving current flows in the stator winding arrangement, so that this driving current is reduced by a corresponding change of the duty factor (PWM2), and which can be changed in a direction opposite the specified direction by a second current limiting arrangement (161) if a too high braking current flows in the stator winding arrangement, to reduce the braking current by a corresponding change of the duty factor (PWM2).

**45.** D.c. machine according to Claim 44, wherein a limiting device for the duty factor (PWM2) is provided, to prevent the lower transistor (81) of a bridge branch being permanently open, and the upper transistor (80) being permanently closed, in the case of an extreme value of the duty factor (PWM2).

**46.** D.c. machine according to one or more of Claims 38 to 45, which is in at least three-phase form, and has at least three control circuits (50, 52, 54) for the bridge branches (21, 22, 23), and with an arrangement (Fig. 31), which in the case of commutation prevents an interruption of the first input signal (EN1) of a control circuit, if this control circuit must be activated before and after commutation.

**47.** Use of a direct current motor according to one of Claims 25 to 46 to drive a fan.

**48.** Use according to Claim 47, wherein the fan is driven with essentially constant driving current.

**49.** Use according to Claim 47 or 48, wherein the d.c. motor is in multiphase form.

**50.** Use according to Claim 49, wherein a full bridge circuit is provided, for current flow through the phases.

**51.** Use according to one of Claims 47 to 50, wherein the fan is in the form of a diagonal or radial fan.

**52.** Use according to Claim 51, wherein a rotational speed regulator for the d.c. motor (32) is provided, and a monitoring arrangement (672), which monitors the motor current when the fan (370) is operated at a specified rotational speed, and generates an alarm signal if a specified current value is exceeded (Fig. 38).

**53.** Use according to Claim 52, wherein the rotational speed regulator is designed so that as the manipulated variable for setting the rotational speed, it generates a current setpoint value for a current regulator of the d.c. motor (32), and this current setpoint value is monitored so that if a specified value is exceeded, the alarm signal is generated.

**54.** Use according to one of Claims 47 to 52, wherein a rotational speed regulator for the d.c. motor is provided, also a switching and measuring device, which has automatic switching-off of the d.c. motor after a specified first rotational speed is reached, time measurement for the time period after switching off until a specified second rotational speed is reached, and an evaluation device, which is designed to evaluate this time period.

**55.** Use according to Claim 54, wherein the evaluation device is designed to generate an alarm signal if a specified value of the time period is undershot.

**56.** Use according to one of Claims 47 to 55,
wherein the fan is in the form of a diagonal or radial fan,
wherein also current is supplied to the d.c. motor via a current regulator, which is set to a specified current,
also a device to capture the rotational speed of the d.c. motor is provided,
and an alarm device, which generates an alarm signal if a specified value of this rotational speed is exceeded, is provided.

**Revendications**

**1.** Procédé pour réguler le courant dans l'agencement d'enroulement statorique (114) d'une machine à courant continu sans collecteur sur une valeur définie par un signal impulsionnel de valeur de consigne de courant (PWM_I+, PWM_I-), à laquelle machine à courant continu sont associés

- un agencement (24) pour générer le signal impulsionnel de valeur de consigne de courant (PWM_I+, PWM_I-) et
- un générateur PWM (182) dont le signal de sortie (PWM2) peut être commandé par un signal de commande (u_156) et commande le courant dans l'agencement d'enroulement statorique (114) de la machine à courant continu,
présentant les étapes suivantes :

a) le rapport cyclique du générateur PWM (182) est commandé par le signal de commande (u_156) ;
b) le courant dans l'agencement d'enroulement statorique (114) de la machine à courant continu est commandé par le signal de sortie (PWM2) du générateur PWM (182) de façon qu'il en résulte dans une ligne d'alimentation (88) de la machine à courant continu en fonctionnement un courant continu impulsionnel (i_2 ; i_2') ;
c) de ce courant continu impulsionnel (i_2; i_2') est dérivé un signal impulsionnel dépendant du courant (u_2) qui est comparé avec le signal impulsionnel de valeur de consigne de courant (PWM_I+, PWM_I-), sachant que pour cette comparaison un de ces deux signaux est converti en un signal analogique lissé (PHI1) et l'autre signal impulsionnel (u_2) est comparé en ce qui concerne son amplitude à ce signal lissé ;
d) en fonction du résultat de cette comparaison, le signal de commande (u_156) pour la commande du générateur PWM est modifié de façon que le courant dans l'agencement d'enroulement statorique (114) de la machine à courant continu soit régulé en fonctionnement normal, donc en dehors de la plage de démarrage, de manière essentiellement continue sur la valeur définie par le signal de valeur de consigne de courant (PHI1, PHI2).

**2.** Procédé selon la revendication 1, dans lequel le signal de valeur de consigne de courant (PHI1, PHI2) est dérivé d'un signal impulsionnel de valeur de consigne de courant (PWM_I+, PWM_I-) d'un appareil de commande numérique.

**3.** Procédé selon la revendication 1 ou 2, dans lequel le signal de valeur de consigne de courant (PHI1, PHI2) est dérivé d'un signal de sortie (fig. 27: RGL_VAL) d'un régulateur de vitesse de rotation (24).

**4.** Procédé selon la revendication 3, dans lequel le régulateur de vitesse de rotation est implémenté sous la forme d'un régulateur numérique de vitesse de rotation.

**5.** Procédé selon l'une des revendications précédentes, dans lequel l'agencement pour générer un signal de valeur de consigne de courant (fig. 11 : 27 ; 29) délivre un signal impulsionnel de valeur de consigne de courant (PWM_I-; PWM_I+) dans lequel est contenue l'information sur la valeur de consigne de courant souhaitée dans le rapport cyclique.

**6.** Procédé selon la revendication 5, dans lequel le signal PWM délivré en tant que signal de valeur de consigne de courant est converti par un élément intégrateur (fig. 6 : 311, 312) en un signal de valeur de consigne analogique (PHI1) et comparé en ce qui concerne son amplitude avec le signal impulsionnel dépendant du courant (u_2) dérivé du courant continu impulsionnel (i_2) pour, en fonction du résultat de cette comparaison, influencer le signal de commande (u_156) amené au générateur PWM (182) de façon que le courant dans la machine à courant continu (32) soit régulé sur la valeur souhaitée.

**7.** Procédé selon l'une des revendications précédentes, dans lequel le signal impulsionnel de valeur de consigne de courant (PWM_I+) est prescrit par un microprocesseur (23).

**8.** Procédé selon l'une des revendications précédentes, dans lequel on prescrit à la machine à courant continu une vitesse de rotation qui exigerait un courant qui se situe au-dessus de la plage qui est réglable par prescription d'une valeur de consigne de courant pour cette machine à courant continu.

**9.** Procédé selon au moins l'une des revendications précédentes, dans lequel le signal de commande est généré par un générateur de signaux de commande qui, en mode moteur, génère un signal de commande qui correspond à un rapport cyclique élevé,
et ce signal de commande est réduit en fonction de la valeur de consigne de courant prescrite de façon à correspondre à un plus petit rapport cyclique - correspondant à la valeur de consigne de courant prescrite.

**10.** Procédé selon la revendication 9, dans lequel on utilise comme signal de commande un signal analogique qui est ensuite converti dans un convertisseur analogique/PWM en un signal PWM pour la commande de l'amenée d'énergie à ou du prélèvement d'énergie de la machine à courant continu.

**11.** Procédé selon l'une des revendications précédentes pour faire fonctionner une machine à courant continu sur un circuit en pont intégral à MOSFET qui peut fonctionner avec cadencement alterné et un rapport cyclique essentiellement variable entre 0 % et 100 %, présentant les étapes suivantes : si le courant d'entraînement de la machine à courant continu dépasse une valeur de consigne de courant prescrite, le rapport cyclique pour le circuit en pont intégral est réduit par réduction d'une valeur prescrite plus élevée ;
si le courant de freinage de la machine à courant continu dépasse une valeur de consigne de courant prescrite, le rapport cyclique pour le circuit en pont intégral est augmenté par augmentation d'une valeur prescrite basse.

**12.** Procédé selon la revendication 11, dans lequel au moins une des valeurs prescrites dépend de la vitesse de rotation.

**13.** Procédé selon la revendication 12, dans lequel la valeur prescrite du rapport cyclique pour le mode générateur augmente quand la vitesse de rotation augmente et se situe à peu près dans la plage comprise entre 0 et 50 %.

**14.** Agencement pour commander ou réguler la vitesse de rotation d'une machine à courant continu (32), lequel agencement comprend :

un premier dispositif (24, 25) qui est conçu pour délivrer à sa sortie (157) un premier signal de commande (PWM1) pour commander la tension à la machine à courant continu (32) ;
un deuxième dispositif (24, 27, 29) qui est conçu pour délivrer à sa sortie un deuxième signal de commande (PWM_I+; PWM_I-) qui sert à influencer la valeur du courant qui circule dans la machine à courant continu (32) ;
un agencement (182) pour transformer le premier signal de commande (PWM1) en un signal (PWM2) qui commande un rapport cyclique pour influencer le bilan énergétique de la machine à courant continu (32) ;
et un agencement de limitation (131, 161) commandé par le deuxième signal de commande (PWM_I+ ; PWM_I-) pour le courant dans la machine à courant continu (32), lequel agencement de limitation (131, 161) est conçu pour réagir en cas de dépassement de la valeur de ce courant prescrite par le deuxième signal de commande (PWM_I+ ; PWM_I-) et modifier en conséquence le premier signal de commande (PWM1), **caractérisé en ce**

**que** le deuxième dispositif est réalisé avec un appareil de commande numérique (24) et le premier signal de commande est réglable à une valeur qui provoque une réaction permanente de l'agencement de limitation commandé par le deuxième signal de commande.

15. Agencement selon la revendication 14, dans lequel le premier dispositif est réalisé sous la forme d'un générateur PWM (25) pouvant être commandé par un appareil de commande numérique (24).

16. Agencement selon la revendication 14 ou 15, dans lequel le deuxième dispositif est réalisé sous la forme d'un générateur PWM (27 ; 29) pouvant être commandé par l'appareil de commande numérique (24).

17. Agencement selon la revendication 14, dans lequel il est prévu un agencement qui convertit le signal de sortie du générateur PWM en un signal analogique dont la valeur dépend du rapport cyclique du signal PWM.

18. Agencement selon la revendication 17, dans lequel l'agencement pour convertir le signal de sortie du générateur PWM est réalisé sous la forme d'un élément intégrateur (152, 158, 159).

19. Agencement selon la revendication 18, dans lequel le signal à la sortie de l'élément intégrateur (152, 158, 159) est modifiable par l'agencement de limitation (131, 161) commandé par le deuxième signal de commande (PWM_I+; PWM_I-) quand le courant prescrit par le deuxième signal de commande est dépassé.

20. Agencement selon la revendication 18 ou 19, dans lequel il est prévu un générateur PWM (182) qui convertit le signal analogique (u_156) à la sortie de l'élément intégrateur (152, 158, 159) en un signal PWM pour commander le courant dans la machine à courant continu.

21. Agencement selon l'une des revendications 14 à 20, dans lequel il est prévu au moins un appareil de commande numérique (24) à la manière d'un microcontrôleur ou d'un microprocesseur pour commander le premier dispositif et le deuxième dispositif.

22. Agencement selon la revendication 21, dans lequel ledit au moins un appareil de commande numérique (24) est conçu pour réguler la vitesse de rotation de la machine à courant continu par l'intermédiaire du premier signal de commande (PWM1) et régler le deuxième signal de commande à une valeur de courant qui se situe dans la plage d'un courant admissible de la machine à courant continu et en particulier du courant maximal admissible.

23. Agencement selon la revendication 21 ou 22, dans lequel ledit au moins un appareil de commande est conçu pour réguler la vitesse de rotation de la machine à courant continu par l'intermédiaire du deuxième signal de commande et régler le premier signal de commande à une valeur qui provoque une réaction permanente de l'agencement de limitation commandé par le deuxième signal de commande.

24. Agencement selon l'une des revendications 21 à 23, dans lequel ledit au moins un appareil de commande est conçu pour réguler le courant dans la machine à courant continu sur une valeur essentiellement constante en réglant le deuxième signal de commande à une valeur correspondant au courant souhaité et le premier signal de commande (PWM1) à une valeur qui provoque une réaction permanente de l'agencement de limitation commandé par le deuxième signal de commande.

25. Machine à courant continu avec un agencement selon l'une des revendications 14 à 24.

26. Machine à courant continu selon la revendication 25, avec un agencement pour surveiller la tension ($U_B$) à la source de courant continu (73, 74), lequel agencement bloque tous les commutateurs à semi-conducteurs du circuit en pont intégral (78) en cas de dépassement d'une valeur limite supérieure prescrite (U_MAX_OFF) de cette tension ($U_B$).

27. Machine à courant continu selon la revendication 26, avec un élément de commande numérique (23) à la manière d'un microcontrôleur ou d'un microprocesseur servant à la commande, lequel présente un convertisseur A/N qui convertit la tension ($U_B$) à la source de courant continu en une valeur numérique (U_AD) pour la suite du traitement dans l'élément de commande numérique (23).

28. Machine à courant continu selon l'une ou plusieurs des revendications 25 à 27, avec un élément de commande numérique (23) à la manière d'un microcontrôleur ou d'un microprocesseur servant à la commande, lequel délivre en fonctionnement des signaux de sortie pour commander le circuit en pont intégral (78),
un composant de commutation (50, 52, 54) étant associé à chaque branche de pont pour l'activation alternée de ses commutateurs à semi-conducteurs supérieur et inférieur, lequel composant de commutation présente au moins deux entrées de signal (par exemple IN1, EN1) qui peuvent être commandées par des sorties de signal séparées de l'élément de commande numérique (23),
et le signal PWM (PWM2) pouvant être amené à une de ces entrées de signal (IN1, IN2, IN3),
et une sortie de signal (IN1, IN2, IN3) de l'élément de commande numérique (23) associée à cette entrée de signal pouvant être mise dans un état à haute impédance pour, à partir de l'élément de commande numérique, activer une activation alternée des commutateurs à semi-conducteurs de cette branche de pont par le signal PWM (PWM2).

29. Machine à courant continu selon l'une ou plusieurs des revendications 25 à 28, avec un élément de commande numérique (23) à la manière d'un microcontrôleur ou d'un microprocesseur servant à la commande, lequel sert à la régulation de vitesse de rotation de la machine à courant continu et délivre à au moins une sortie un signal (PWM1) pour influencer la vitesse de rotation de la machine à courant continu, et avec un agencement pour limiter ce signal à une valeur dépendante de la vitesse de rotation.

30. Machine à courant continu selon la revendication 29, dans laquelle ce signal (PWM1) est limitée lors du freinage à une valeur qui diminue lorsque la vitesse de rotation (n) de la machine à courant continu (32) diminue.

31. Machine à courant continu selon la revendication 29 ou 30, dans laquelle ce signal influence par son rapport cyclique (PWM1) l'état de charge d'un premier condensateur (159),
il est prévu un deuxième condensateur (148) qui est relié au premier condensateur (159) par l'intermédiaire d'un agencement de résistances (150, 152),
et le rapport cyclique (PWM2) du signal PWM amené au circuit en pont intégral (78) est essentiellement commandé par la tension à l'un de ces deux condensateurs (148, 159).

32. Machine à courant continu selon la revendication 31, dans laquelle le deuxième condensateur (148) a une plus petite capacité que le premier condensateur (159).

33. Machine à courant continu selon la revendication 31 ou 32, dans laquelle il est prévu un agencement de limitation de courant (131) qui, en cas de dépassement d'une valeur limite du courant d'entraînement prescrite par un signal de valeur de consigne de courant (PWM_I+), modifie la charge de ce deuxième condensateur (148) pour limiter le courant d'entraînement à une valeur définie par le signal de valeur de consigne de courant.

34. Machine à courant continu selon l'une des revendications 31 à 33, dans laquelle il est prévu un agencement de limitation de courant (161) qui, en cas de dépassement d'une valeur limite du courant de freinage (i_2') prescrite par un signal de valeur de consigne de courant (PWM_I-), modifie la charge de ce deuxième condensateur (148) pour limiter le courant de freinage à une valeur définie par le signal de valeur de consigne de courant.

35. Machine à courant continu selon la revendication 33 ou 34, dans laquelle l'agencement de limitation de courant présente un comparateur pour une comparaison entre un signal de valeur de consigne de courant (PHI1 ; PHI2) et un signal impulsionnel (u_2 ; u_2") dérivé du courant d'entraînement ou du courant de freinage.

36. Machine à courant continu selon la revendication 35, dans laquelle un élément intégrateur (310, 312 ; 320, 322) est associé au comparateur pour convertir un signal impulsionnel de valeur de consigne de courant (PWM_I+; PWM_I-) en un signal lissé (PHI1 ; PHI2) pour la comparaison avec un signal impulsionnel dépendant du courant (u_2 ; u_2").

37. Machine à courant continu selon l'une des revendications 25 à 36,
dans laquelle à chaque transistor supérieur d'une branche de pont est associé un condensateur de stockage (230) qui peut être chargé par l'intermédiaire du transistor inférieur de cette branche de pont et qui sert à fournir une tension de commande à ce transistor supérieur,
avec un agencement de commutation pour commuter ces transistors, lequel agencement de commutation est conçu pour, en fonction au moins de la position du rotor (110), activer dans une première branche de pont seulement un transistor et dans une deuxième branche de pont activer alternativement le transistor supérieur et le transistor inférieur,
la vitesse de rotation (n) étant surveillée et, si une valeur de vitesse de rotation prescrite n'est pas atteinte à l'expiration d'un temps prescrit, les transistors supérieurs du circuit en pont intégral étant brièvement bloqués et les transistors inférieurs activés

pour charger les condensateurs de stockage (230) des transistors supérieurs et ainsi garantir une commande sûre de ces transistors supérieurs même en cas de basse vitesse de rotation ou d'un arrêt de la machine à courant continu (fig. 24).

**38.** Machine à courant continu selon l'une des revendications 25 à 37,

dans laquelle aux deux transistors (80, 81) de chaque branche de pont est associé un circuit de commande (50, 52, 54) qui est activable et désactivable en fonction d'un premier signal d'entrée (EN1) et qui, dans l'état désactivé, bloque les deux transistors (80, 81) de la branche de pont associée,

et lequel, en fonction d'un deuxième signal d'entrée (IN1), dans l'état activé par le premier signal d'entrée (EN1), peut être commuté de façon que soit le transistor supérieur (80), soit le transistor inférieur (81) soit rendu conducteur, avec un élément de commande numérique (23) à la manière d'un microprocesseur ou d'un microcontrôleur servant à la commande pour générer le premier signal d'entrée à une première sortie (EN1) et pour générer le deuxième signal d'entrée à une deuxième sortie (IN1),

et avec un troisième signal d'entrée (80) sous la forme d'un signal PWM avec un rapport cyclique (PWM ; PWM2) pouvant être commandé, lequel troisième signal d'entrée du circuit de commande (50) peut être amené en parallèle au deuxième signal d'entrée (IN1) depuis une source de signaux PWM (182) et ne devient actif que quand la deuxième sortie (IN1) de l'élément de commande numérique (23) est mise dans un état de commutation prescrit.

**39.** Machine à courant continu selon la revendication 38, dans laquelle l'état de commutation prescrit de la deuxième sortie (IN1) de l'élément de commande numérique (23) est un état à haute impédance (TRISTATE).

**40.** Machine à courant continu selon la revendication 38 ou 39, dans laquelle le troisième signal d'entrée (180) du circuit de commande (50, 52, 54) peut être amené par l'intermédiaire d'une diode (260).

**41.** Machine à courant continu selon l'une ou plusieurs des revendications 38 à 40, dans laquelle l'amplitude du troisième signal d'entrée (180) est limitée, en particulier par une diode Zener (186).

**42.** Machine à courant continu selon l'une ou plusieurs des revendications 38 à 41, dans laquelle le circuit de commande présente une entrée (223) à laquelle est connectée une résistance (252) dont la valeur influence la valeur d'un temps mort ($\Delta t$) lors de la commutation entre les transistors (80, 81) de la branche de pont associée, et cette résistance (252) peut être court-circuitée au moins partiellement par un élément de commutation commandable (250) qui peut être commandé par le premier signal d'entrée (EN1).

**43.** Machine à courant continu selon la revendication 42, dans laquelle l'élément de commutation commandable (250) est commandé dans un état de commutation prescrit quand la première sortie (EN1) de l'élément de commande numérique (23) prend un état à haute impédance pour ainsi bloquer la branche de pont (80, 81) associée.

**44.** Machine à courant continu selon l'une ou plusieurs des revendications 38 à 43, dans laquelle le rapport cyclique (PWM2) de la source de signaux PWM (182) peut être commandé par la tension à un condensateur (148), laquelle tension est modifiable dans un sens prescrit par un premier agencement de limitation de courant (131) lorsqu'il circule un courant d'entraînement trop élevé dans l'agencement d'enroulement statorique, afin que ce courant d'entraînement soit abaissé par une modification correspondante du rapport cyclique (PWM2), et laquelle est modifiable dans un sens opposé au sens prescrit par un deuxième agencement de limitation de courant (161) lorsqu'il circule un courant de freinage trop élevé dans l'agencement d'enroulement statorique, afin d'abaisser le courant de freinage par une modification correspondante du rapport cyclique (PWM2).

**45.** Machine à courant continu selon la revendication 44, dans laquelle il est prévu un dispositif de limitation pour le rapport cyclique (PWM2) afin d'empêcher qu'en cas de valeur extrême du rapport cyclique (PWM2) le transistor inférieur (81) d'une branche de pont soit constamment ouvert et le transistor supérieur (80) constamment fermé.

**46.** Machine à courant continu selon l'une ou plusieurs des revendications 38 à 45, laquelle est conçue au moins comme machine triphasée et présente au moins trois circuits de commande (50, 52, 54) pour les branches de pont (21, 22, 23), et avec un agencement (fig. 31) qui, lors d'une commutation, empêche une interruption du premier signal d'entrée (EN1) d'un circuit de commande si ce circuit de commande doit être activé avant et après la commutation.

**47.** Utilisation d'un moteur à courant continu selon l'une des revendications 25 à 46 pour entraîner un ventilateur.

**48.** Utilisation selon la revendication 47, dans laquelle le ventilateur fonctionne avec un courant d'entraînement essentiellement constant.

**49.** Utilisation selon la revendication 47 ou 48, dans laquelle le moteur à courant continu est conçu comme moteur polyphasé.

**50.** Utilisation selon la revendication 49, dans laquelle il est prévu un circuit en pont intégral pour alimenter les phases.

**51.** Utilisation selon l'une des revendications 47 à 50, dans laquelle le ventilateur est conçu comme ventilateur diagonal ou radial.

**52.** Utilisation selon la revendication 51, dans laquelle il est prévu un régulateur de vitesse de rotation pour le moteur à courant continu (32),
et il est prévu un agencement de surveillance (672) qui surveille le courant de moteur lors du fonctionnement du ventilateur (370) à une vitesse de rotation prescrite,
et génère un signal d'alarme (fig. 38) en cas de dépassement d'une valeur de courant prescrite.

**53.** Utilisation selon la revendication 52, dans laquelle le régulateur de vitesse de rotation est conçu pour générer comme valeur de réglage pour régler la vitesse de rotation une valeur de consigne de courant pour un régulateur de courant du moteur à courant continu (32),
et cette valeur de consigne de courant est surveillée pour générer le signal d'alarme en cas de dépassement d'une valeur prescrite.

**54.** Utilisation selon l'une des revendications 47 à 52, dans laquelle il est prévu un régulateur de vitesse de rotation pour le moteur à courant continu ainsi qu'un dispositif de commutation et de mesure qui présente une coupure automatique du moteur à courant continu à l'atteinte d'une première vitesse de rotation prescrite, une mesure de temps pour l'intervalle de temps entre la coupure et l'atteinte d'une deuxième vitesse de rotation prescrite et un dispositif d'évaluation qui est conçu pour évaluer cet intervalle de temps.

**55.** Utilisation selon la revendication 54, dans laquelle le dispositif d'évaluation est conçu pour générer un signal d'alarme si une valeur prescrite de l'intervalle de temps n'est pas atteinte.

**56.** Utilisation selon l'une des revendications 47 à 55,
dans laquelle le ventilateur est conçu comme ventilateur diagonal ou radial,
dans laquelle le moteur à courant continu est alimenté en courant par l'intermédiaire d'un régulateur de courant qui est réglé à un courant prescrit,
il est prévu un dispositif pour saisir la vitesse de rotation du moteur à courant continu,
et il est prévu un dispositif d'alarme qui génère un signal d'alarme en cas de dépassement d'une valeur prescrite de cette vitesse de rotation.

Fig. 1

EP 1 314 242 B1

Fig. 2

| $phi_{el}$ | 700 | | | 702 | | | 704 | | | EN | | | IN | | |
|---|---|---|---|---|---|---|---|---|---|---|---|---|---|---|---|
| | HS1 | HS2 | HS3 | 81 | 83 | 85 | 80 | 82 | 84 | EN1 | EN2 | EN3 | IN1 | IN2 | IN3 |
| 0°...60° | 1 | 0 | 1 | 0 | 1 | 0 | 1 | 0 | 0 | 0 | 0 | 1 | 1 | TRI | 1 |
| 60°...120° | 1 | 0 | 0 | 0 | 0 | 1 | 1 | 0 | 0 | 0 | 1 | 0 | 1 | 1 | TRI |
| 120°...180° | 1 | 1 | 0 | 0 | 0 | 1 | 0 | 1 | 0 | 1 | 0 | 0 | 1 | 1 | TRI |
| 180°...240° | 0 | 1 | 0 | 1 | 0 | 0 | 0 | 1 | 0 | 0 | 0 | 1 | TRI | 1 | 1 |
| 240°...300° | 0 | 1 | 1 | 1 | 0 | 0 | 0 | 0 | 1 | 0 | 1 | 0 | TRI | 1 | 1 |
| 300°...360° | 0 | 0 | 1 | 0 | 1 | 0 | 0 | 0 | 1 | 1 | 0 | 0 | 1 | TRI | 1 |

706    708

740

Fig. 3

EP 1 314 242 B1

Fig. 4

Fig. 5A

Fig. 5B

Fig. 5C

Fig. 5D

Fig. 5E

Fig. 5F

Fig. 5

Fig. 6

EP 1 314 242 B1

u_2    PHI 1

t10  t11        t14    t12  t13

*Fig. 7A*

u_156

t10  t11        t12  t13  t15  t16  t17  t18  t19  t19A

*Fig. 7B*

*Fig. 7*

EP 1 314 242 B1

57

Fig. 8

Fig. 9A

Fig. 9B

Fig. 9

EP 1 314 242 B1

Fig. 10

EP 1 314 242 B1

Fig. 11

Fig.12

EP 1 314 242 B1

PWM2

198

u – 156

*Fig. 13 A*

199

0

t

PWM2

$t_{ON}$

T

HIGH

180

*Fig. 13 B*

LOW

t

*Fig. 13*

Fig. 14

PWM2    180

IN1

260

262    221

+5V

242    EN1    240    244    246    250    248    252    223

GND

50

200

LS384

236    222    12V

202    206    208    228

Δt    LOGIC    DRIV UP    227    232    80    90

210    226    230

ENABLE    212    225    81    91

204    DRIV DOWN    234

224

GND

UB

L1

EP 1 314 242 B1

64

Fig.15

Fig.15A

Fig.15B

Fig.15C

Fig.15D

Fig. 16

$i\_2$

$i\_2 > 0$

$i\_2 = 0$

$i\_2 < 0$

$\underline{290}$

$T > 0$
$i\_2 > 0$

$\underline{292}$

$T < 0$
$i\_2 < 0$

*Fig. 17*

Fig. 18

EP 1 314 242 B1

*U = const*

Fig. 19 A

Fig. 19 B

Fig. 19

Fig. 20

```
        ┌─────────────────┐
        │  Hall-Interrupt │──────S631
        └─────────────────┘
                 │
                 ▼
        ┌─────────────────┐
        │       ...       │──────S340
        └─────────────────┘
                 │
                 ▼
        ┌─────────────────┐
        │     CALC_n      │──────S342
        └─────────────────┘
                 │
                 ▼                      S344
 ┌──────────────────────────────────────┐
 │        t_END  := t_TIMER1            │
 │   t_HALL := t_END - t_END_OLD        │
 │       t_END_OLD := t_END            │
 └──────────────────────────────────────┘
                 │
                 ▼                      S346
 ┌──────────────────────────────────────┐
 │      n := n_CONST div t_HALL         │
 └──────────────────────────────────────┘
                 │
                 ▼
        ┌─────────────────┐
        │     COMMUT      │──────S348
        └─────────────────┘
                 │
                 ▼                 S350
 ┌──────────────────────────────┐
 │       FCT_RGL := 1           │
 └──────────────────────────────┘
                 │
                 ▼
        ┌─────────────────┐
        │      RETI       │──────S352
        └─────────────────┘
```

Fig. 21

Fig. 22

S639
TIMERØ-Interrupt

S353
. . .

S354
Subtimer T1

S356
CNT_T1 := CNT_T1 + 1

S358
CNT_T1 >= T1_TIME? ──Y──▶ S360
FCT_MODE := 1
FCT_UBT := 1
CNT_T1 := 0

N

S362
Subtimer CNT_P

S364
CNT_P := CNT_P - 1

S366
CNT_P > 0? ──N──▶ S368
FCT_PUMP := 1

Y

S369
RETI

Fig. 23

```
          ┌───────────┐
          │   PUMP    │────── S616
          └───────────┘
                │
                ▼
    ┌─────────────────────────┐
    │   SAVE  COMMUT_STATE     │──── S367
    └─────────────────────────┘
                │
                ▼
    ┌─────────────────────────────┐
    │  EN1 = 0;  EN2 = 0;  EN3 = 0 │──── S372
    │  IN1 = 0;  IN2 = 0;  IN3 = 0 │
    └─────────────────────────────┘
                │
                ▼
    ┌─────────────────────────┐
    │     WAIT  PUMP_TIME      │──── S374
    └─────────────────────────┘
                │
                ▼
    ┌─────────────────────────┐
    │   RESTORE  COMMUT_STATE  │──── S376
    └─────────────────────────┘
                │
                ▼
    ┌─────────────────────────┐
    │     FCT_PUMP  :=  0      │──── S378
    └─────────────────────────┘
                │
                ▼
          ┌───────────┐
          │  FCT_MAN  │────── S602
          └───────────┘
```

Fig. 24

Fig. 25

**Fig. 26**

S624_1

RGL_U

S400

RGL_DIFF := n_s - n

S402

RGL_PROP := RGL_DIFF * RGL_P
RGL_INT := RGL_INT + RGL_DIFF * RGL_I
RGL_VAL := RGL_PROP + RGL_INT

S404

RGL_VAL < 0.? — Y → S406 RGL_VAL := 0

N

S408

RGL_VAL > RGL_MAX? — Y → S410 RGL_VAL := RGL_MAX

N

S412

PWM1 := RGL_VAL
PWM_I+ := I_max+
PWM_I- := I_max-

S414

FCT_RGL := 0

S602

FCT_MAN

Fig. 27

S624_2

RGL_I

S420

RGL_DIFF := n_s - n

S422

RGL_PROP := RGL_DIFF * RGL_P
RGL_INT := RGL_INT + RGL_DIFF * RGL_I
RGL_VAL := RGL_PROP + RGL_INT

S424

RGL_VAL < 0? —Y→ RGL_VAL := 0    S426

N

S428

RGL_VAL > RGL_MAX? —Y→ RGL_VAL := RGL_MAX    S430

N

S432

PWM1 := U_max
PWM_I+ := RGL_VAL
PWM_I- := I_max-

S434

FCT_RGL := 0

FCT_MAN    S602

Fig. 28

RGL_T+  — S624_3

PWM1 := U_max
PWM_I+ := I(T+)
PWM_I- := I_max-  — S440

FCT_RGL := 0  — S442

FCT_MAN  — S602

Fig. 29

RGL_T-  — S624_4

PWM1 := U_min
PWM_I+ := I_max+
PWM_I- := I(T-)  — S450

FCT_RGL := 0  — S452

FCT_MAN  — S602

Fig. 30

S624

RGL

S460

MODE = RGL_U? ──Y──► RGL_U ── S624_1

N

S462

MODE = RGL_I? ──Y── RGL_I ── S624_2

N

S464

MODE = RGL_T+? ──Y──► RGL_T+ ── S624_3

N

S466

MODE = RGL_T-? ──Y── RGL_T- ── S624_4

Fig. 31

```
                    ┌─ S628
               ┌──────────┐
               │   MODE   │
               └──────────┘
                    │
                    │                                    ┌─ S472
                    ▼     ┌─ S470          ┌──────────────────────────────┐
                 ╱──────────╲              │   MODE    := RGL_U           │
               ╱ (IN_A = LOW) AND ╲  Y     │   n_s     := AD[44]          │
              ╱  (IN_B = LOW)?      ╲─────►│   I_max+  := AD[46]          │
               ╲                   ╱       │   I_max-  := AD[48]          │
                 ╲──────────╱              └──────────────────────────────┘
                    │ N
                    │                                    ┌─ S476
                    ▼     ┌─ S474          ┌──────────────────────────────┐
                 ╱──────────╲              │   MODE    := RGL_I           │
               ╱ (IN_A = LOW) AND ╲  Y     │   n_s     := AD[44]          │
              ╱  (IN_B = HIGH)?     ╲─────►│   U_max   := AD[46]          │
               ╲                   ╱       │   I_max-  := AD[48]          │
                 ╲──────────╱              └──────────────────────────────┘
                    │ N                                                        ┌─ S602
                    │                                                     ┌──────────┐
                    ▼     ┌─ S478          ┌─ S480                        │ FCT_MAN  │
                 ╱──────────╲              ┌──────────────────────────────┐└──────────┘
               ╱ (IN_A = HIGH) AND ╲  Y    │   MODE    := RGL_T+          │
              ╱  (IN_B = LOW)?      ╲─────►│   I(T+)   := AD[44]          │
               ╲                   ╱       │   U_max   := AD[46]          │
                 ╲──────────╱              │   I_max-  := AD[48]          │
                    │ N                    └──────────────────────────────┘
                    │                                    ┌─ S484
                    ▼     ┌─ S482          ┌──────────────────────────────┐
                 ╱──────────╲              │   MODE    := RGL_T-          │
               ╱ (IN_A = HIGH) AND ╲  Y    │   I(T-)   := AD[44]          │
              ╱  (IN_B = HIGH)?     ╲─────►│   I_max+  := AD[46]          │
               ╲                   ╱       │   U_min   := AD[48]          │
                 ╲──────────╱              └──────────────────────────────┘
```

Fig. 32

Fig. 33

Fig. 34

EP 1 314 242 B1

Fig. 35

EP 1 314 242 B1

*Fig.36*

EP 1 314 242 B1

Fig. 37

EP 1 314 242 B1

Fig. 38

Fig. 39

$\Delta p\ [Pa]$

$n = 4000\ rpm$

782

$V/t\ [m^3/h]$

Fig. 40

680

$64m^3/h$    $87m^3/h$    $103m^3/h$    $114m^3/h$    $130m^3/h$

370A    370C    370D    370E    370F

370B

676

600Pa    500Pa    400Pa    300Pa    200Pa    100Pa

678

Fig. 41

$I = const.$

Fig. 42

Fig. 43

Fig. 44

Fig. 45

Fig. 46

Fig. 47

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19949804 A
- DE 2346380
- DE 19836882
- DE 19700479 A1